# EUROPEAN PATENT APPLICATION

(11) **EP 4 841 501 A1**
(43) Date of publication of application: **18.11.2026**
(21) Application number: 24917128.1
(22) Date of filing: 01.11.2024
(51) Int. Cl.: G06F 40/56, G06F 16/332

(54) **RESPONSE OUTPUT DEVICE**

(30) Priority: 12.01.2024 JP 2024003501
(71) Applicant: Maxell, Ltd., Kyoto 618-8525 (JP)
(72) Inventor: SHIMODA, Nozomu, Otokuni-gun, Kyoto 618-8525 (JP); KUNII, Yasuhiko, Otokuni-gun, Kyoto 618-8525 (JP); SHIMIZU, Takuya, Otokuni-gun, Kyoto 618-8525 (JP); SHIKITA, Kazuo, Otokuni-gun, Kyoto 618-8525 (JP)
(74) Representative: Mewburn Ellis LLP
(86) International application number: PCT/JP2024/039136
(87) International publication number: WO 2025/150254

(57) **Abstract**

A more suitable artificial intelligence response output technique is provided. According to the present invention, it is possible to contribute to "Goal 9: Build resilient infrastructure, promote inclusive and sustainable industrialization and foster innovation" and "Goal 11: Make cities and human settlements inclusive, safe, resilient and sustainable" in the Sustainable Development Goals (SDGs). A response output apparatus includes an input unit configured to receive a question phrase input by a user, a controller configured to generate a response prompt for a large language model based on the question phrase and acquire a response phrase generated by the large language model for the response prompt, and an output unit configured to perform an output based on the response phrase acquired by the controller. The controller is configured to execute conversion processing of the question phrase and generate a response prompt based on a question phrase after the conversion processing.

## Description

### TECHNICAL FIELD

The present invention relates to a response output apparatus.

### BACKGROUND ART

Patent Document 1 discloses a response output technique using artificial intelligence such as language models.

### RELATED ART DOCUMENT

### PATENT DOCUMENT

Patent Document 1: Japanese Patent Application Laid-Open Publication No. 2019-528512

### SUMMARY OF THE INVENTION

### PROBLEMS TO BE SOLVED BY THE INVENTION

However, Patent Document 1 fails to sufficiently consider, for example, a configuration to more suitably provide a user with a response output technique using artificial intelligence.

Therefore, an object of the present invention is to provide a more suitable response output technique.

### MEANS FOR SOLVING THE PROBLEMS

In order to solve the above-described problem, a configuration described in, for example, the attached claims is adopted. The present application includes a plurality of measures for solving the above-described problem, one such example being a response output apparatus comprising an input unit configured to receive a question phrase input by a user, a controller configured to generate a response prompt for a large language model based on the question phrase and acquire a response phrase generated by the large language model for the response prompt, an output unit configured to perform an output based on the response phrase acquired from the controller. The controller is configured to execute conversion processing of the question phrase and generate the response prompt based on the question phrase after the conversion processing.

### EFFECTS OF THE INVENTION

According to the present invention, a more suitable response output technique can be provided. Other problems, configurations, and effects will become apparent from the following description of the embodiments.

### BRIEF DESCRIPTIONS OF THE DRAWINGS

[FIG. 1A] A drawing showing an example of an artificial intelligence response output apparatus and system according to an embodiment of the present invention.
[FIG. 1B] A drawing showing an example of the artificial intelligence response output apparatus according to the embodiment of the present invention.
[FIG. 1C] A drawing showing an example of an operation of the artificial intelligence response output apparatus and system according to the embodiment of the present invention.
[FIG. 2A] An explanatory diagram of an example of a character conversation apparatus and character conversation system according to the embodiment of the present invention.
[FIG. 2B] An explanatory diagram of an example of an operation of the character conversation apparatus and character conversation system according to the embodiment of the present invention.
[FIG. 2C] An explanatory diagram of an example of an operation of the character conversation apparatus and character conversation system according to the embodiment of the present invention.
[FIG. 2D] An explanatory diagram of an example of a conversation in the character conversation apparatus and character conversation system according to the embodiment of the present invention.
[FIG. 2E] An explanatory diagram of an example of an operation of the character conversation apparatus and character conversation system according to the embodiment of the present invention.
[FIG. 2F] An explanatory diagram of an example of an operation of the character conversation apparatus and character conversation system according to the embodiment of the present invention.
[FIG. 2G] An explanatory diagram of an example of an operation of the character conversation apparatus and character conversation system according to the embodiment of the present invention.
[FIG. 2H] An explanatory diagram of an example of an operation of the character conversation apparatus and character conversation system according to the embodiment of the present invention.
[FIG. 2I] An explanatory diagram of an example of an operation of the character conversation apparatus and character conversation system according to the embodiment of the present invention.
[FIG. 2J] An explanatory diagram of an example of an operation of the character conversation apparatus and character conversation system according to the embodiment of the present invention.
[FIG. 2K] An explanatory diagram of an example of an operation of the character conversation apparatus and character conversation system according to the embodiment of the present invention.
[FIG. 2L] An explanatory diagram of an example of an operation of the character conversation apparatus and character conversation system according to the embodiment of the present invention.
[FIG. 3A] An explanatory diagram of an example of the character conversation apparatus and character conversation system according to the embodiment of the present invention.
[FIG. 3B] An explanatory diagram of an example of an operation of the character conversation apparatus and character conversation system according to the embodiment of the present invention.
[FIG. 3C] An explanatory diagram of an example of an operation of the character conversation apparatus and character conversation system according to the embodiment of the present invention.
[FIG. 3D] An explanatory diagram of an example of a conversation in the character conversation apparatus and character conversation system according to the embodiment of the present invention.
[FIG. 3E] An explanatory diagram of an example of an operation of the character conversation apparatus and character conversation system according to the embodiment of the present invention.
[FIG. 3F] An explanatory diagram of an example of an operation of the character conversation apparatus and character conversation system according to the embodiment of the present invention.
[FIG. 3G] An explanatory diagram of an example of an operation of the character conversation apparatus and character conversation system according to the embodiment of the present invention.
[FIG. 3H] An explanatory diagram of an example of an operation of the character conversation apparatus and character conversation system according to the embodiment of the present invention.
[FIG. 3I] An explanatory diagram of an example of an operation of the character conversation apparatus and character conversation system according to the embodiment of the present invention.
[FIG. 4A] An explanatory diagram of an example of an operation of the character conversation apparatus and character conversation system according to the embodiment of the present invention.
[FIG. 4B] An explanatory diagram of an example of an operation of the character conversation apparatus and character conversation system according to the embodiment of the present invention.
[FIG. 5A] An explanatory diagram of an example of an operation of the artificial intelligence response output apparatus according to the embodiment of the present invention.
[FIG. 5B] An explanatory diagram of display examples of the artificial intelligence response output apparatus according to the embodiment of the present invention.
[FIG. 5C] An explanatory diagram of display examples of the artificial intelligence response output apparatus according to the embodiment of the present invention.
[FIG. 5D] An explanatory diagram of display examples of the artificial intelligence response output apparatus according to the embodiment of the present invention.
[FIG. 6] An explanatory diagram of an example of the response generation processing of the artificial intelligence response output apparatus according to the embodiment of the present invention.
[FIG. 7] A drawing showing an example of a response output system according to the embodiment of the present invention.
[FIG. 8] A drawing showing an example of a processing flow in the response output system according to the embodiment of the present invention.
[FIG. 9] A drawing showing an example of a processing flow in the response output system according to the embodiment of the present invention.
[FIG. 10] A drawing showing an example of a reference database according to the embodiment of the present invention.
[FIG. 11] A drawing showing an example of a processing flow in the response output system according to the embodiment of the present invention.
[FIG. 12] A drawing showing an example of a database lookup precedence table according to the embodiment of the present invention.
[FIG. 13] A drawing showing an example of a processing flow in the response output system according to the embodiment of the present invention.
[FIG. 14] A drawing showing an example of a processing flow in the response output system according to the embodiment of the present invention.
[FIG. 15] A drawing showing an example of a processing flow in the response output system according to the embodiment of the present invention.
[FIG. 16A] An explanatory diagram of an example of an operation of the response output system according to the embodiment of the present invention.
[FIG. 16B] An explanatory diagram of an example of an operation of the response output system according to the embodiment of the present invention.
[FIG. 17] A drawing showing an example of a processing flow in the response output system according to the embodiment of the present invention.
[FIG. 18A] An explanatory diagram of an example of an operation of the response output system according to the embodiment of the present invention.
[FIG. 18B] An explanatory diagram of an example of an operation of the response output system according to the embodiment of the present invention.
[FIG. 19A] A drawing showing an example of a processing flow in the response output system according to the embodiment of the present invention.
[FIG. 19B] A drawing showing an example of a processing flow in the response output system according to the embodiment of the present invention.
[FIG. 20] A drawing showing an example of a display screen of an artificial intelligence response output apparatus according to the embodiment of the present invention.
[FIG. 21] A drawing showing an example of a processing flow in the response output system according to the embodiment of the present invention.
[FIG. 22A] An explanatory diagram of an example of an operation of the response output system according to the embodiment of the present invention.
[FIG. 22B] An explanatory diagram of an example of an operation of the response output system according to the embodiment of the present invention.
[FIG. 23] A drawing showing an example of a processing flow in the response output system according to the embodiment of the present invention.
[FIG. 24] An explanatory diagram of an example of an operation of the response output system according to the embodiment of the present invention.
[FIG. 25] An explanatory diagram of an example of an operation of the response output system according to the embodiment of the present invention.
[FIG. 26] A drawing showing an example of a processing flow in the response output system according to the embodiment of the present invention.
[FIG. 27] A drawing showing an example of a processing flow in the response output system according to the embodiment of the present invention.
[FIG. 28] An explanatory diagram of an example of an operation of the response output system according to the embodiment of the present invention.
[FIG. 29] An explanatory diagram of an example of an operation of the response output system according to the embodiment of the present invention.
[FIG. 30] A drawing showing an example of a processing flow in the response output system according to the embodiment of the present invention.
[FIG. 31] A drawing showing an example of a display screen of the artificial intelligence response output apparatus according to the embodiment of the present invention.
[FIG. 32] A drawing showing an example of a processing flow in the response output system according to the embodiment of the present invention.
[FIG. 33] A drawing showing an example of a processing flow in the response output system according to the embodiment of the present invention.
[FIG. 34A] An explanatory diagram of an example of an operation of the response output system according to the embodiment of the present invention.
[FIG. 34B] An explanatory diagram of an example of an operation of the response output system according to the embodiment of the present invention.
[FIG. 34C] An explanatory diagram of an example of an operation of the response output system according to the embodiment of the present invention.
[FIG. 35A] A drawing showing an example of a display screen of the artificial intelligence response output apparatus according to the embodiment of the present invention.
[FIG. 35B] A drawing showing an example of a display screen of the artificial intelligence response output apparatus according to the embodiment of the present invention.
[FIG. 36A] An explanatory diagram of an example of an operation of the response output system according to the embodiment of the present invention.
[FIG. 36B] An explanatory diagram of an example of an operation of the response output system according to the embodiment of the present invention.
[FIG. 37] A drawing showing an example of a processing flow in the response output system according to the embodiment of the present invention.
[FIG. 38] A drawing showing an example of a processing flow in the response output system according to the embodiment of the present invention.

### DETAILED DESCRIPTION OF THE INVENTION

Hereinafter, embodiments of the present invention will be described in detail with reference to the drawings. Note that the present invention is not limited to the described embodiments, and various changes and modifications can be made by those skilled in the art within the scope of the technical idea disclosed in this specification. Further, in all the drawings for describing the present invention, components having the same function are denoted by the same reference characters, and the repetitive descriptions will be omitted in some cases.

Note that an artificial intelligence response output apparatus according to each embodiment of the present invention having a display screen may also be referred to as a display apparatus. The artificial intelligence response output apparatus having an audio output function may also be referred to as an audio output apparatus. The artificial intelligence response output apparatus may also simply be referred to as an information processing apparatus. A system including the artificial intelligence response output apparatus and a large language model server that holds a large language model may also be referred to as an artificial intelligence response output system. In addition, in a case where the artificial intelligence response output apparatus provides a response service of a large language model which is artificial intelligence to the user to assist the user, the artificial intelligence response output apparatus or a display output of the artificial intelligence response output apparatus can be an artificial intelligence (AI) assistant for the user. Therefore, in this case, the artificial intelligence response output apparatus may also be referred to as an AI assistant apparatus or an AI assistant display apparatus. Likewise, in this case, a system including the artificial intelligence response output apparatus and a large language model server that holds a large language model may also be referred to as an AI assistant system or an AI assistant display system. In addition, in this case, the artificial intelligence response output apparatus serves as an interface between the user and the artificial intelligence and thus may also be referred to as an artificial intelligence interface apparatus. In this case, a system including the artificial intelligence response output apparatus and a large language model server that holds a large language model may also be referred to as an artificial intelligence interface system.

### <First Embodiment>

Hereinafter, an artificial intelligence response output apparatus and system that outputs a response from a large language model artificial intelligence will be described as a first embodiment of the present invention.

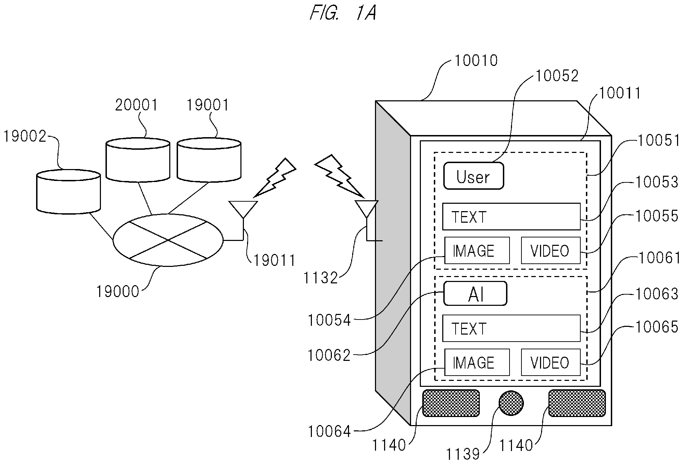

Hereinafter, an example of an artificial intelligence response output apparatus 10010 of the present invention will be described with reference to FIG. 1A. In addition, an example of a system in which the artificial intelligence response output apparatus 10010 includes a large language model server 19001 and/or a multimodal large language model server 20001 in a case where the artificial intelligence response output apparatus 10010 cooperates with the large language model server 19001 through communication or the like will be described.

In the example of FIG. 1A, the artificial intelligence response output apparatus 10010 has a display 10011. In the example of FIG. 1A, the display 10011 may be a flat panel display, a screen that projects an image from a rear surface, or an aerial projector that forms an optical image in midair. In a case where the display 10011 is a flat panel display, the display may be a liquid crystal display having a liquid crystal panel and a backlight. In addition, the display 10011 may be a plasma display. The display 10011 may be an organic EL display in which pixels emit light. In addition, the display 10011 may be provided with a touch operation input sensor configured as a touch panel.

In the example of FIG. 1A, an audio output unit 1140 of the artificial intelligence response output apparatus 10010 is configured with a speaker. In addition, the artificial intelligence response output apparatus 10010 comprises a microphone 1139 capable of capturing a user's voice. Using audio input from the microphone 1139 or an operation input by the user via an operation input unit described below, the artificial intelligence response output apparatus 10010 can acquire user input that serves as a prompt for the large language model which is artificial intelligence.

The artificial intelligence response output apparatus 10010 may comprise a local large language model. In this case, a response of the large language model may be output as display output on the above-described display 10011 and/or as audio output of the audio output unit 1140.

In addition, the artificial intelligence response output apparatus 10010 may not comprise the local large language model, but may communicate with an external large language model server 19001 and may output the response received from the large language model server 19001 as display output of the above-described display 10011 and/or as audio output of the audio output unit 1140.

Alternatively, the artificial intelligence response output apparatus 10010 may be further configured to communicate with the external large language model server 19001 having a large language model, or the external large language model server 20001 having a multimodal large language model in addition to comprising the local large language model. In this case, a response of the local large language model and a response received from the large language model of the large language model server 19001 or from the multimodal large language model of the multimodal large language model server 20001 may be switched, and either of the responses may be output as display output of the above-described display 10011 and/or as audio output of the audio output unit 1140. Alternatively, a response generated based on both the response of the local large language model and the response received from the large language model of the large language model server 19001 or the multimodal large language model server 20001 may be output as display output of the above-described display 10011 and/or as audio output of the audio output unit 1140.

A configuration where the artificial intelligence response output apparatus 10010 communicates and cooperates with the external large language model server 19001 or the large language model server 20001 is as follows. The artificial intelligence response output apparatus 10010 can communicate with a communication apparatus 19011 connected to the Internet 19000 via a communication unit 1132. The example of FIG. 1A shows a wireless communication between the communication unit 1132 and the communication apparatus 19011. However, the communication may be a wired communication. A communication path between the communication unit 1132 and the communication apparatus 19011 may include both wired and wireless portions, and may pass through a router or a repeater. In addition, the communication path between the communication unit 1132 and the Internet 19000 may include both wired and wireless portions, and may pass through a router or a repeater. The artificial intelligence response output apparatus 10010 can communicate with the large language model server 19001 via the communication apparatus 19011 and the Internet 19000. In addition, the artificial intelligence response output apparatus 10010 can communicate with the large language model server 19001 or the large language model server 20001 and a second server 19002 that differs from these servers via the communication apparatus 19011 and the Internet 19000. A configuration including the artificial intelligence response output apparatus 10010 and the large language model server 19001 or the large language model server 20001 may be considered as a single system.

In the following description, unless otherwise specified, the expression "large language model" may be considered to be a concept that includes the local large language model of the artificial intelligence response output apparatus 10010, the large language model of the large language model server 19001, and the multimodal large language model of the large language model server 20001.

The example of FIG. 1A shows the display 10011 displaying each element in two display regions, one being a prompt display region 10051 in which the user inputs a prompt to the large language model which is artificial intelligence, and the other being an artificial intelligence response display region 10061 for displaying the response from the large language model. The example of FIG. 1A shows the prompt display region 10051 displaying, for example, an icon 10052 indicating the user, text 10053 such as natural language or software code as a component of the prompt, an image 10054 as a component of the prompt, and video 10055 as a component of the prompt. The example of FIG. 1A shows the artificial intelligence response display region 10061 displaying, for example, an icon 10062 indicating the artificial intelligence or the artificial intelligence assistant, text 10063 such as natural language or software code as a component of a response from the artificial intelligence, an image 10064 as a component of a response from the artificial intelligence, and video 10065 as a component of a response from the artificial intelligence. Note that the display example of the display 10011 of the artificial intelligence response output apparatus 10010 shown in FIG. 1A is merely one example. A display that differs from the example shown in FIG. 1A may be displayed depending on an implementation example in which the artificial intelligence response output apparatus 10010 is used.

Here, the large language model will be described. The large language model is also referred to as LLM. Specifically, various models such as GPT-1, GPT-2, GPT-3, InstructGPT, and ChatGPT have been made available. These techniques may also be used in the present embodiment. Note that these large language models are artificial intelligence models generated through large-scale pre-training on natural language contained in numerous documents and texts existing in the human world. The number of parameters in these artificial intelligence models exceeds one billion. Further, there are models that have been enhanced with reinforcement learning based on human feedback. An example of a model based on this includes a model called a transformer. An example of learning of these models can be found in, for example, Reference 1.

[Reference 1]
Long Ouyang, et. al. "Training language models to follow instructions with human feedback", https://arxiv.org/pdf/2203.02155.pdf

These large language models are capable of performing natural language translation, natural language proofreading, natural language summarization, and the like. Among these, advanced models are capable of responding in natural language (also called dialogue or conversation), generating suggestions in natural language, generating programming code, and the like. The number of parameters in these artificial intelligence models is extremely large, requiring vast amounts of data and computational resources for training. Therefore, training artificial intelligence at this level for a specific use is extremely inefficient in terms of resources. Thus, as a foundation model that can be applied to various uses, a model has been generated through large-scale pre-training. For example, the large language model server 19001 shown in FIG. 1A may comprise such a large language model and may be configured to utilize various terminals via an API (Application Programming Interface). In addition, the artificial intelligence response output apparatus 10010 shown in FIG. 1A may comprise the local large language model and may be configured to be utilized by the artificial intelligence response output apparatus 10010 itself. Training of the large language model itself may be performed separately through large-scale pre-training, and the generated large language model may be replicated and loaded in the large language model server 19001, the artificial intelligence response output apparatus 10010, or the like. In this manner, instead of performing pre-training for each use or terminal, replicating the large language model which is the foundation model generated through large-scale pre-training and utilizing it on individual servers or terminals allows for shared resource consumption during training, resulting in improved efficiency in terms of resources.

Note that even if the large language model as the foundation model generated through large-scale pre-training is used, it may be configured to perform additional training such as transfer learning in individual servers or apparatuses according to the use or purpose.

In addition, the large language model can perform pre-training of natural language and perform input/output processing targeting natural language. Further, the multimodal large language model artificial intelligence capable of processing not only natural language text information but also other types of information other than the natural language text information can also be applied to the embodiment of the present invention. FIG. 1A shows the large language model server 20001 having the multimodal large language model. Examples of the multimodal large language model artificial intelligence specifically include GPT-4 (see Reference 2) and Gato (see Reference 3). These techniques may also be used in the present embodiment. Note that these multimodal large language models are artificial intelligence models generated through large-scale pre-training on natural language contained in numerous documents and texts existing in the human world and types of information other than the natural language text information (such as image, video, audio). Further, there are models that have been enhanced with reinforcement learning based on human feedback. Hereinafter, types of information other than the natural language text information such as image, video, and audio may also be referred to as a non-natural language information source.

[Reference 2]
   Open AI "GPT-4 Technical Report", https://cdn.openai.com/papers/gpt-4.pdf
[Reference 3]
   Scott Reed, et. al. "A Generalist Agent", https://arxiv.org/pdf/2205.06175.pdf

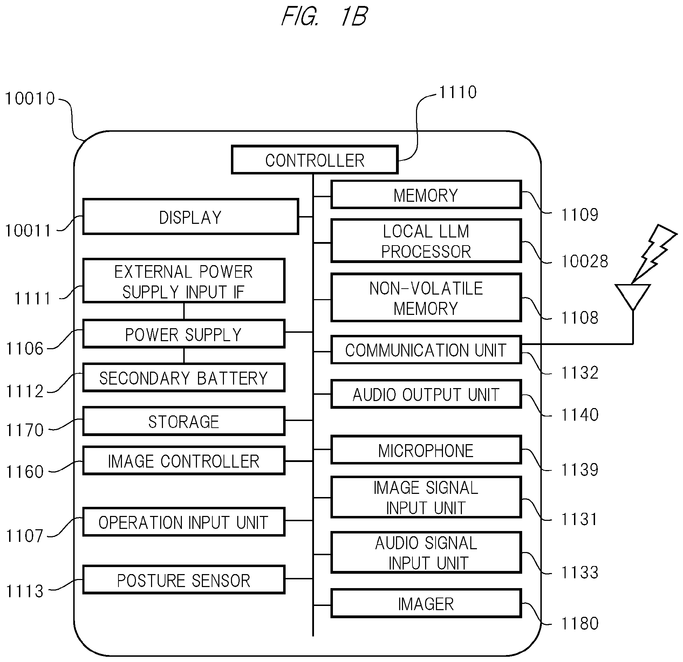

Next, a configuration example of the artificial intelligence response output apparatus 10010 configured to receive input from the user for the above-described artificial intelligence such as large language models, and to output the response from the artificial intelligence such as the large language model corresponding to the input from the user will be described with reference to FIG. 1B.

The artificial intelligence response output apparatus 10010 comprises the display 10011, a controller 1110, a memory 1109, a non-volatile memory 1108, an external power supply input interface 1111, an operation input unit 1107, a power supply 1106, a secondary battery 1112, a storage 1170, an image controller 1160, a posture sensor 1113, the communication unit 1132, the audio output unit 1140, the microphone 1139, an image signal input unit 1131, an audio signal input unit 1133, an imager 1180, and the like. The artificial intelligence response output apparatus 10010 may be an apparatus having, for example, a large screen such as a monitor or a television set.

The display 10011 may be a flat panel display, a screen that projects an image from the rear surface, or an aerial projector that forms an optical image in midair. In a case where the display 10011 is a flat panel display, the display may be a liquid crystal display having a liquid crystal panel and a backlight. In addition, the display 10011 may be a plasma display. The display 10011 may be an organic EL display in which pixels emit light. In a case where the display 10011 is a panel, it may also be referred to as a display panel. The display 10011 may be provided with a touch operation input sensor configured to receive a touch operation input by a finger of a user 230. In this case, the display 10011 may be configured as a touch panel. Operation input by the user via the touch panel allows the artificial intelligence response output apparatus 10010 to acquire user input that is the basis of the prompt for the large language model which is artificial intelligence.

The communication unit 1132 may be configured with a Wi-Fi communication interface, a Bluetooth (registered trademark) communication interface, a mobile communication interface such as 4G or 5G, or the like. These communication methods are used such that the communication unit 1132 of the artificial intelligence response output apparatus 10010 can communicate with the communication apparatus 19011 connected to the Internet 19000. Note that the communication path between the communication unit 1132 and the communication apparatus 19011 may include both wired and wireless portions, and may pass through a router or a repeater. In the case of the wired communication, the communication unit 1132 may have an Ethernet connection interface as hardware and perform communication using a LAN communication method. In this manner, the artificial intelligence response output apparatus 10010 can communicate with various servers connected to the Internet 19000.

The artificial intelligence response output apparatus 10010 comprises the controller 1110 such as a CPU and the memory 1109, and the controller 1110 controls the display 10011, the communication unit 1132, and the like.

The power supply 1106 converts AC current input from an external component via the external power supply input interface 1111 into DC current and supplies the necessary DC current to each unit of the artificial intelligence response output apparatus 10010. The secondary battery 1112 stores the power supplied from the power supply 1106. In addition, the secondary battery 1112 supplies power to each unit that requires power in a case where power is not supplied from the external component via the external power supply input interface 1111.

The operation input unit 1107 is, for example, an operation button or a signal receiver or an infrared light receiver for a remote controller or the like, and inputs a signal regarding an operation that differs from the touch operation on the touch operation input sensor of the display 10011 by the user. The operation input unit 1107 may also be used by, for example, an administrator to operate the artificial intelligence response output apparatus 10010, separately from the user who performs the touch operation on the touch operation input sensor of the display 10011. The operation input by the user via the operation input unit 1107 allows the artificial intelligence response output apparatus 10010 to acquire user input that is the basis of the prompt for the large language model which is artificial intelligence. Note that there may also be a modification configured such that the touch operation input sensor of the display 10011 is included as a portion of the operation input unit 1107.

The image signal input unit 1131 connects to an external image output apparatus to input image data. The image signal input unit 1131 may be configured with various digital image input interfaces. For example, it may be configured with an HDMI (registered trademark) (High-Definition Multimedia Interface) compliant image input interface, a DVI (Digital Visual Interface) compliant image input interface, a DisplayPort compliant image input interface, or the like. Alternatively, an analog image input interface such as an analog RGB or a composite video may be provided. The image signal input unit 1131 may also be various USB interfaces and the like.

The audio signal input unit 1133 connects to an external audio output apparatus to input audio data. The audio signal input unit 1133 may be configured with an HDMI compliant audio input interface, an optical digital terminal interface, a coaxial digital terminal interface, or the like. The audio signal input unit 1133 may also be various USB interfaces and the like. In the case of the HDMI compliant interface, the image signal input unit 1131 and the audio signal input unit 1133 may be configured as an interface with an integrated terminal and cable.

The audio output unit 1140 can output audio based on audio data input to the audio signal input unit 1133. The audio output unit 1140 can also output audio based on audio data stored in the storage 1170. The audio output unit 1140 may be configured with a speaker. In addition, the audio output unit 1140 may output a built-in operation sound or an error warning sound. Alternatively, the audio output unit 1140 may be configured to output an audio signal as a digital signal to an external device in accordance with an audio return channel function defined in the HDMI standard. Alternatively, the audio output unit 1140 may be configured to output an audio signal as an analog signal to an external device such as a headphone.

The microphone 1139 captures sound surrounding the artificial intelligence response output apparatus 10010 and converts it into a signal to generate an audio signal. The microphone may record human voice such as the user's voice, and the controller 1110 described below may perform audio recognition processing on the generated audio signal to acquire text information from the audio signal. Audio input from the microphone 1139 allows the artificial intelligence response output apparatus 10010 to acquire user input that is the basis of the prompt for the large language model which is artificial intelligence.

The imager 1180 is a camera having an image sensor. The camera may be provided on a front surface side or a rear surface side of the display 10011 of the artificial intelligence response output apparatus 10010. Cameras may be provided on both the front surface and the rear surface. In the present embodiment, the imager 1180 is described as having cameras on both the front surface and the rear surface.

The storage 1170 is a storage apparatus that records various types of information of various types of data such as video data, image data, and audio data. The storage 1170 may be configured with a magnetic recording media apparatus such as a hard disk drive (HDD) or a semiconductor device memory such as a solid-state drive (SSD). For example, the storage 1170 may record various types of information of various types of data such as video data, image data, and audio data prior to product shipment. In addition, the storage 1170 may record various types of information of various types of data such as video data, image data, and audio data acquired from an external device, an external server, or the like via the communication unit 1132. Video data, image data, and the like recorded in the storage 1170 is output to the display 10011. Video data, image data, and the like recorded in the storage 1170 may be output to an external device, an external server, or the like via the communication unit 1132.

The image controller 1160 performs various controls regarding image signals input to the display 10011. The image controller 1160 may also be referred to as an image processing circuit, and may be configured with, for example, hardware such as an ASIC, an FPGA, or an image processor. Note that the image controller 1160 may also be referred to as a video processor or an image processor. The image controller 1160 performs image switching controls such as determining which image signal to input to the display 10011 from among the image signals stored in the memory 1109 and the image signals (image data) input to the image signal input unit 1131. In addition, the image controller 1160 may perform image processing controls on the image signal input from the image signal input unit 1131, the image signal stored in the memory 1109, and the like. Image processing includes, for example, scaling processing such as enlarging, reducing, or transforming the image, brightness adjustment processing for changing brightness of the image, contrast adjustment processing for changing the contrast curve of the image, and Retinex processing such as decomposing the image into a light component and changing the weighting of each component.

The posture sensor 1113 is constituted by a gravity sensor or an acceleration sensor or a combination thereof, and can detect a posture of the artificial intelligence response output apparatus 10010. The controller 1110 may control the operation of each connected unit based on a posture detection result of the posture sensor 1113.

The non-volatile memory 1108 stores various types of data used for the artificial intelligence response output apparatus 10010. The data stored in the non-volatile memory 1108 includes, for example, data for various operations displayed on the display 10011 of the artificial intelligence response output apparatus 10010, a display icon, data for an object operated by the user for operation, layout information, and the like. The memory 1109 stores the image data to be displayed on the display 10011, data for controlling the apparatus, and the like. The controller 1110 may read various software from the storage 1170 and load and store it in the memory 1109.

A local LLM processor 10028 comprises a memory capable of holding the large language model (LLM), and can execute inference of the large language model based on the control of the controller 1110. The hardware may be configured with the so-called GPU (Graphics Processing Unit) or the like. The local LLM processor 10028 may perform not only inference but also training. Note that, in a case where execution of inference of the large language model in a local environment of the artificial intelligence response output apparatus 10010 and the like is not required, the local LLM processor 10028 is not necessary.

The controller 1110 controls the operation of each connected unit. In addition, the controller 1110 may cooperate with a program stored in the memory 1109 and perform arithmetic processing based on information acquired from each unit in the artificial intelligence response output apparatus 10010. A control state of the controller 1110 includes, for example, a state in which the response from the large language model of the local LLM processor 10028 or the response from the large language model of the large language model server 19001 or the multimodal large language model of the multimodal large language model server 20001 acquired via the communication unit 1132 is output via the display 10011 or the audio output unit 1140 such as the speaker.

Note that, in a case where input is received from the user via the above-described touch panel, the microphone 1139, or the operation input unit 1107, the controller 1110 may perform controls to generate a prompt based on the input, send the prompt to the local large language model of the local LLM processor 10028, the large language model of the large language model server 19001, or the multimodal large language model of the large language model server 20001 of the artificial intelligence response output apparatus 10010, and acquire responses from these large language models.

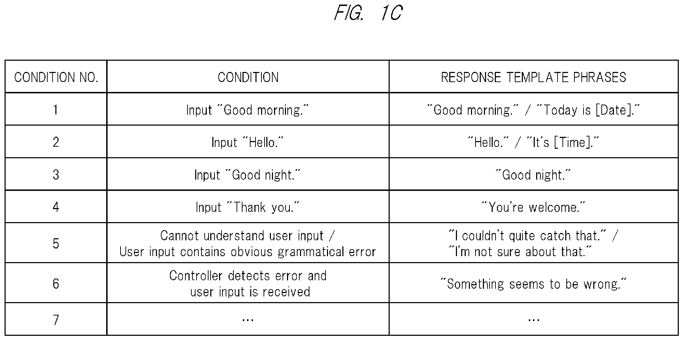

In addition, a response template phrase database (response template phrase DB) for outputting a template phrase in response to the prompt of the artificial intelligence response output apparatus 10010 may be stored in the storage 1170. The controller 1110 may generate the response to be output using the data stored in the response template phrase database. FIG. 1C shows an example of the response template phrase database. In the example of FIG. 1C, the artificial intelligence response output apparatus 10010 stores response template phrases to be output for each condition labeled with a condition number. For example, in a case where the user inputs "Good morning" via the above-described touch panel, the microphone 1139, or the operation input unit 1107 as in Condition 1, a response using the response template phrase "Good morning" or "Today is [Date]" may be output. The portion inside the brackets ([]) may be generated using the information stored in the memory 1109 of the artificial intelligence response output apparatus 10010.

In addition, in the example of the response template phrases in the database shown in FIG. 1C, in a case where a plurality of response template phrases separated by slashes (/) are stored, the controller 1110 may randomly select one of the response template phrases using a random number or the like and output the response. This can eliminate and improve a situation where responses under the same conditions become monotonous. The same description applies to the examples of condition numbers 2, 3, and 4. The controller 1110 may perform controls on the output such that response template phrases for each example shown in FIG. 1C is used for the conditions of each example shown in FIG. 1C.

Next, an example of Condition 5 shown in FIG. 1C will be described. Condition 5 is an example in which, in a case where the controller 1110 cannot understand the meaning of the user input acquired via the touch panel, the microphone 1139, or the operation input unit 1107 as natural language, or in a case where the user input contains an obvious grammatical error, the controller 1110 performs a control to output a response using the response template phrase "I couldn't quite catch that" or "I'm not sure about that". Such a response allows the user to re-enter the input and allows the controller to wait for the corrected user input.

Next, an example of Condition 6 shown in FIG. 1C will be described. Condition 6 is an example in which the controller 1110 is in a state where an error (abnormal state) is detected in any of the units configuring the artificial intelligence response output apparatus 10010 shown in FIG. 1B, and the user input is received via the touch panel, the microphone 1139, or the operation input unit 1107. In this case, the controller 1110 performs a control to output a response using the response template phrase "Something seems to be wrong". Such a response allows the user to be notified that the artificial intelligence response output apparatus 10010 is malfunctioning and allows the user to take error response measures.

The artificial intelligence response output apparatus 10010 may output responses using the response template phrase database (response template phrase DB) described with reference to FIG. 1C instead of responses of the large language models such as the local large language model of the artificial intelligence response output apparatus 10010, the large language model of the large language model server 19001, and the multimodal large language model of the large language model server 20001. Alternatively, the artificial intelligence response output apparatus 10010 may output responses that in which responses of these large language models and responses using the response template phrase database (response template phrase DB) are combined.

Note that the response template phrase database (response template phrase DB) described above with reference to FIG. 1C is stored in the storage 1170, and the controller 1110 of the artificial intelligence response output apparatus 10010 may use this database. However, the response template phrase database (response template phrase DB) shown in FIG. 1C may be provided on the large language model server 19001 side or the large language model server 20001 side. In this case, the controller of the large language model server 19001 or the controller of the large language model server 20001 may generate a response using the response template phrase database (response template phrase DB). The controller of the large language model server 19001 or the controller of the large language model server 20001 may send the response generated using the response template phrase database (response template phrase DB), instead of the response generated by the large language model stored in each server, to the artificial intelligence response output apparatus 10010. This makes it possible to generate a response using the response template phrase database (response template phrase DB) even if the artificial intelligence response output apparatus 10010 does not have a response template phrase database (response template phrase DB).

Note that the above-described artificial intelligence response output apparatus 10010 has been described as having a display panel of a display screen using fixed pixels. This concept may include a projection-type image display apparatus (projector) that is provided with a projection optical system after the display panel of the display screen using fixed pixels, and configured to project an optical image of the display panel of the display screen onto a screen or a wall.

Note that, in the example of FIGS. 1A and 1B, the artificial intelligence response output apparatus 10010 is shown as comprising the display 10011. However, the artificial intelligence response output apparatus 10010 according to the embodiments of the present invention does not necessarily need to comprise the display 10011. For example, even without the display 10011, the apparatus may be configured to receive input from the user input to the artificial intelligence via the audio signal input unit 1133 or the microphone 1139, and to output the response corresponding to the user input from the artificial intelligence such as the large language model via the audio output unit 1140.

According to the artificial intelligence response output apparatus and artificial intelligence response output system according to the above-described first embodiment of the present invention, it is possible to receive input from the user to the artificial intelligence such as the large language model, and to output a response corresponding to the input from the user and generated by inference of the artificial intelligence such as a large language model of a server apparatus on a network or the local large language model of the artificial intelligence response output apparatus itself.

### <Second Embodiment>

Next, an example in which the artificial intelligence response output apparatus 10010 according to the first embodiment is connected to the Internet and operates by connecting to a server having the large language model artificial intelligence via the Internet will be described as a second embodiment of the present invention. In the present embodiment, only differences from the first embodiment will be described, and descriptions of configurations similar to those of the first embodiment will be omitted as appropriate.

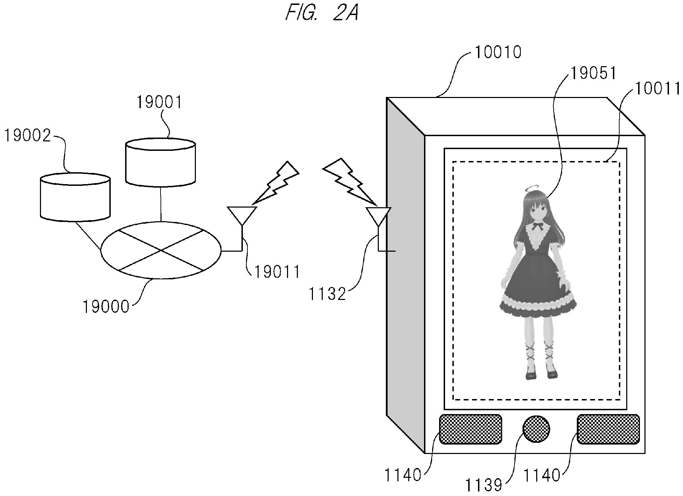

An example of a connection state between the artificial intelligence response output apparatus 10010 and the large language model server 19001 according to the second embodiment of the present invention will be described with reference to FIG. 2A. The artificial intelligence response output apparatus 10010 according to the second embodiment may also be referred to as a character conversation apparatus. In addition, a system including the artificial intelligence response output apparatus 10010 according to the second embodiment and the large language model server 19001 may also be referred to as a character conversation system. The display 10011 displayed by the artificial intelligence response output apparatus 10010 displays an image of a character 19051. The image of the character 19051 is generated by rendering a 3D model of a character in a virtual space.

In addition, the character in the present embodiment provides the user with a service of the large language model which is artificial intelligence to assist the user. Therefore, the character can serve as an artificial intelligence (AI) assistant for the user. In this case, the character conversation apparatus or the character conversation system in the present embodiment may also be referred to as an AI assistant conversation apparatus, an AI assistant display apparatus, an AI assistant response output apparatus, an AI assistant conversation system, an AI assistant display system, or an AI assistant response output system.

In the example of FIG. 2A, the audio output unit 1140 of the artificial intelligence response output apparatus 10010 is configured with a speaker. In addition, the artificial intelligence response output apparatus 10010 comprises the microphone 1139 and can capture the user's voice. The artificial intelligence response output apparatus 10010 can communicate with the communication apparatus 19011 connected to the Internet 19000 via the communication unit 1132. The example of FIG. 2A shows wireless communication between the communication unit 1132 and the communication apparatus 19011. However, the communication may be a wired communication. The communication path between the communication unit 1132 and the Internet 19000 may include both wired and wireless portions. The artificial intelligence response output apparatus 10010 can communicate with the large language model server 19001 via the communication apparatus 19011 and the Internet 19000. In addition, the artificial intelligence response output apparatus 10010 can communicate with the second server 19002 that differs from the large language model server 19001 via the communication apparatus 19011 and the Internet 19000. A configuration including the artificial intelligence response output apparatus 10010 and the large language model server 19001 may be considered as a single system.

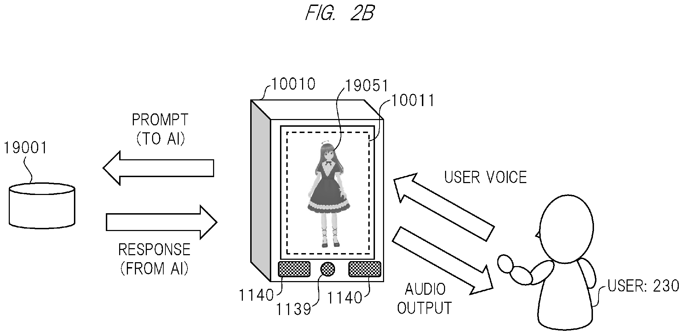

Next, an example of the operation of the character conversation apparatus (artificial intelligence response output apparatus 10010) according to the second embodiment of the present invention will be described with reference to FIG. 2B. This is also a description of an example of the operation of the character conversation system including the artificial intelligence response output apparatus 10010 and the large language model server 19001. Note that the communication paths such as the Internet 19000 shown in FIG. 2A are omitted in FIG. 2B. FIG. 2B also shows the user 230 of the artificial intelligence response output apparatus 10010.

Here, a series of operations of the artificial intelligence response output apparatus 10010 will be described. Note that the artificial intelligence response output apparatus 10010 loads a character operation program stored in the storage 1170 or the like to the memory 1109, and the controller 1110 executes the character operation program such that it is possible to achieve various types of processing described below.

First, the artificial intelligence response output apparatus 10010 comprises the microphone 1139. When the user 230 speaks to the character 19051, the user's voice (words spoken by the user) is captured by the microphone 1139 and is converted into an audio signal. Here, the character operation program executed by the controller 1110 extracts the text of the words spoken by the user 230 from the audio signal. The text is natural language. Note that the extraction of the text of the words spoken by the user 230 may be continued for all words, or may be started after a trigger keyword is input and when words are spoken by the user within a predetermined period. For example, the trigger keyword may be a case where the user says "Hello" followed with the character's name. For example, if the name of the character 19051 is "Koto", the trigger keyword may be "Hello, Koto!".

Based on the text of the words spoken by the user 230, the character operation program of the artificial intelligence response output apparatus 10010 creates the prompt and sends the prompt to the large language model server 19001 using the API. Here, the prompt may be metadata in which information such as format such as markup format using tags in a markup language, format using a predetermined symbol such as markdown format, or object format using a predetermined script such as JSON is stored. Natural language text information is stored in the prompt as the main message. Types of prompts sent from the artificial intelligence response output apparatus 10010 to the large language model server 19001 include a setting prompt for storing instructions such as initial settings and a user prompt that reflect the instruction from the user. Type identification information that identifies whether the prompt is the setting prompt or the user prompt may be stored in a portion of the prompt other than its main message. When the character operation program of the artificial intelligence response output apparatus 10010 creates the prompt based on the text of the words spoken by the user 230, the user prompt is created and sent to the large language model server 19001.

Next, based on the prompt sent from the artificial intelligence response output apparatus 10010, the large language model which is artificial intelligence of the large language model server 19001 executes inference and generates a response including the natural language text information based on the inference result. The large language model server 19001 sends the response to the artificial intelligence response output apparatus 10010 using the API. Natural language text information is stored in the response as the main message. Here, the response may be metadata in which information written in the same format as the above-described prompt (e.g., format such as markup format using tags in a markup language, format using a predetermined symbol such as markdown format, or object format using a predetermined script such as JSON) is stored. In a case where the same format as the above-described prompt is used in the response, type identification information indicating that the above-described initial setting prompt and the user prompt are different types of information may be stored in a portion other than the main message. For example, information indicating that the response phrase is from the large language model may be stored.

Next, the artificial intelligence response output apparatus 10010 receives the response from the large language model server 19001, and extracts the natural language text information stored as the main message of the response. Based on the natural language text information extracted from the above-described response, the character operation program of the artificial intelligence response output apparatus 10010 generates natural language audio that serves as a response to the user using an audio synthesis technique, and outputs it from the audio output unit 1140 which is the speaker, so that it sounds as if it is the voice of the character 19051. This processing may be referred to as a "speech" of the character.

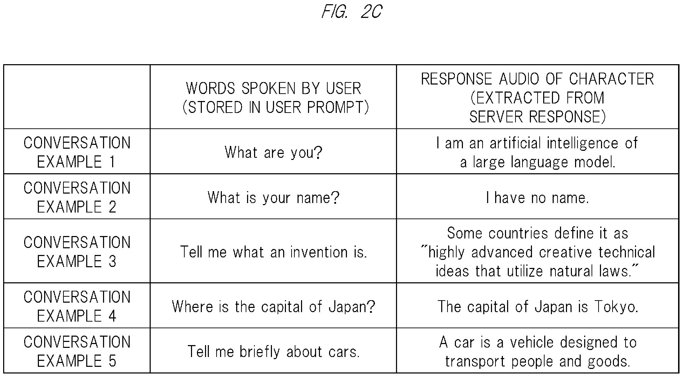

As described above, the processing of the artificial intelligence response output apparatus 10010 and the large language model server 19001 provides specific examples of response audio of the character 19051 for the words from the user 230, as shown in conversation examples 1 to 5 of FIG. 2C. In this manner, the user 230 can converse with the character 19051 as if it is a real person.

According to the artificial intelligence response output apparatus 10010 or the system including the artificial intelligence response output apparatus 10010 described above with reference to FIG. 2B, there is no need to install the large language model, which requires vast amounts of data and computational resources for learning, in the artificial intelligence response output apparatus 10010 itself. Moreover, it is possible to utilize advanced natural language processing capabilities of the large language model via the API, and thus, when the user speaks to the character, it is possible to respond to the user and converse with the user more suitably.

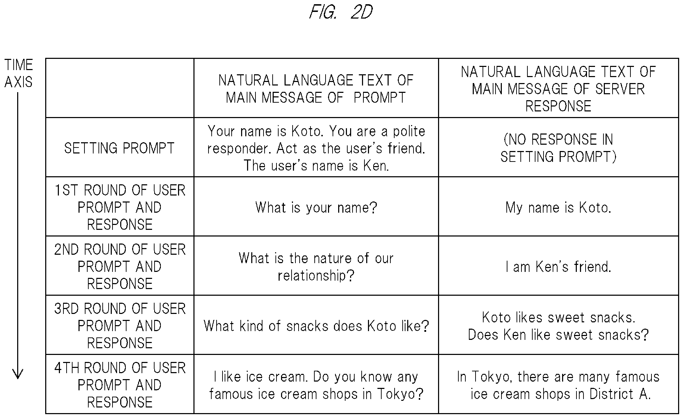

Next, an example of the operation of the character conversation apparatus (artificial intelligence response output apparatus 10010) according to the second embodiment of the present invention will be described with reference to FIG. 2D. This is also a description of an example of the operation of the character conversation system including the artificial intelligence response output apparatus 10010 and the large language model server 19001. Specifically, FIG. 2D shows examples of the natural language text of the main message of the prompt sent from the artificial intelligence response output apparatus 10010 to the large language model server 19001 and the natural language text of the main message of the server response which is the response to the prompt. This becomes the basis of the conversation between the user 230 and the character 19051 displayed on the artificial intelligence response output apparatus 10010.

In addition, FIG. 2D shows the setting prompt for the display and exchange of prompts and responses in chronological order from the first round of user prompt to the fourth round of the user prompt and corresponding responses.

As shown in FIG. 2D, the setting prompt can be used to instruct the large language model which is artificial intelligence of the large language model server 19001 to set initial settings related to the name of the large language model itself, the role it should play, and conversational characteristics. In addition, the user's name can be understood as an initial setting. In this manner, the large language model generates the first and subsequent rounds of responses while adhering to its role. The user who hears the audio of the character 19051 based on the first and subsequent rounds of responses can then feel as if the character 19051 has the character's settings and personality as described in the setting prompt. In addition, the large language model server 19001 according to the present embodiment comprises a memory that stores contents of the conversation until the end of a series of conversations, and is configured to store a series of user prompts and their responses and to generate responses. In this manner, a conversation as shown in FIG. 2D can be achieved.

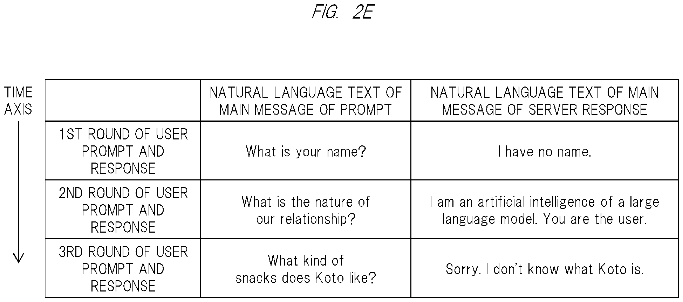

Next, an example of the operation of the character conversation apparatus (artificial intelligence response output apparatus 10010) according to the second embodiment of the present invention will be described with reference to FIG. 2E. This is also a description of an example of the operation of the character conversation system including the artificial intelligence response output apparatus 10010 and the large language model server 19001. Specifically, FIG. 2E shows examples of the natural language text of the main message of the prompt sent from the artificial intelligence response output apparatus 10010 to the large language model server 19001 and the natural language text of the main message of the server response which is the response to the prompt. This becomes the basis of the conversation between the user 230 and the character 19051 displayed on the artificial intelligence response output apparatus 10010.

FIG. 2E shows an example of a new conversation in which the user 230 speaks to the character 19051 again after the continuation of a series of conversations shown in FIG. 2D has ended. In FIG. 2E, the first round of user prompt and its response to the third round of user prompt and its response are shown as an exchange of prompts and responses in chronological order.

Here, the "end" of the "continuation of a series of conversations" refers to processing in which, if predetermined conditions are met, the large language model server 19001 deletes the conversation memory that had been maintained while a series of conversations was ongoing from the large language model server 19001. An example of the predetermined conditions includes a case where the artificial intelligence response output apparatus 10010 instructs the large language model server 19001 to "end" the "continuation of a series of conversations" via a prompt. In addition, another example of the predetermined conditions includes a case where no prompt regarding a series of conversations is sent from the artificial intelligence response output apparatus 10010 to the large language model server 19001 for a predetermined time or longer (timeout). In addition, another example includes a case where, in the connection between the artificial intelligence response output apparatus 10010 and the large language model server 19001, an authentication processing is performed and the above-described exchange of prompts and responses is being performed, the authentication processing is interrupted due to factors such as communication disconnection or power OFF of the artificial intelligence response output apparatus 10010.

Note that when the "end" of the "continuation of a series of conversations" occurs, the large language model server 19001 deletes the conversation memory that had been maintained while a series of conversations was ongoing from the large language model server 19001. Therefore, even if the conversation shown in FIG. 2E occurs after a series of conversations shown in FIG. 2D, the server response for the user prompt is a response that does not contain contents such as the character name, the role it should play, the conversational characteristics, or the user's name in the setting prompt shown in FIG. 2D and set in the large language model. Likewise, the conversation shown in FIG. 2E is a response that does not contain any memory of a series of conversations shown in FIG. 2D. That is, the "end" of the "continuation of a series of conversations" shown in FIG. 2D causes the conversation of FIG. 2E to start from a state in which the large language model which is artificial intelligence of the large language model server 19001 has been initialized.

This makes the user 230 feel as if the character 19051 has lost its memory of the user or as if the user is dealing with a completely different person. From the perspective of the user 230, the character's response may feel very uncomfortable, leaving the user feeling lonely and disappointed. In such an operation, This posed a challenge on ensuring consistency in the name, role, conversational characteristics, personality and other settings and memories of the character 19051 displayed on the artificial intelligence response output apparatus 10010.

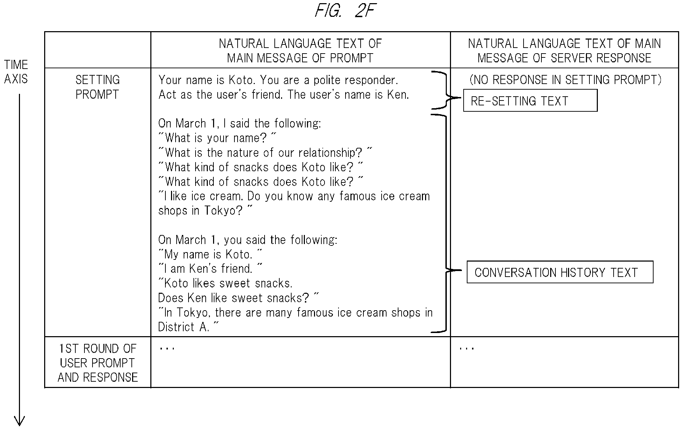

Next, an example of the operation of the character conversation apparatus (artificial intelligence response output apparatus 10010) according to the second embodiment of the present invention will be described with reference to FIG. 2F. This is also a description of an example of the operation of the character conversation system including the artificial intelligence response output apparatus 10010 and the large language model server 19001. Specifically, FIG. 2F shows examples of the natural language text of the main message of the prompt sent from the artificial intelligence response output apparatus 10010 to the large language model server 19001 and the natural language text the main message of the server response which is the response to the prompt. This becomes the basis of the conversation between the user 230 and the character 19051 displayed on the artificial intelligence response output apparatus 10010.

FIG. 2F shows an example of a new conversation in which the user 230 speaks to the character 19051 again after continuation of a series of conversations shown in FIG. 2D has ended. Unlike the processing of FIG. 2E, in the processing of FIG. 2F, when a new conversation is started, the artificial intelligence response output apparatus 10010 sends the setting prompt as the first prompt to the large language model server 19001. The setting prompt stores the same natural language text as the setting prompt of the initial settings of FIG. 2D. This may also be referred to as a re-setting text. The setting prompt also stores the natural language text that describes the history of past conversations. This may also be referred to as conversation history text. The history of past conversations may be recorded by the artificial intelligence response output apparatus 10010 in the storage 1170 as the natural language text information linked with information regarding the date and time of the conversation while the continuation of a series of conversations described with reference to FIG. 2D is ongoing. In a case where there are conversations at different dates, the information including date and time is linked to the respective conversation and recorded, and the conversation history is accumulated. When generating the setting prompt of the first prompt for the conversation that takes place at a later date as shown in FIG. 2F, the natural language text information of the conversation recorded in the storage 1170 and the information including the date and time the conversation took place may be read and used to generate the setting prompt.

Note that, in a case where the natural language text information of the history of past conversations is used to generate the setting prompt, the format can be determined fairly freely as it is data being sent to the large language model. However, as shown in FIG. 2F, it is preferable to prepare prefixes or suffixes in the natural language such as "On [Date], I said the following:" or "On [Date], you said the following:", fuse them with the natural language text information of the recorded conversation, and perform processing to generate the text of the setting prompt. In addition, information including the date and time of the conversation read from the storage 1170 may be fused with the above-described "[Date]" portion and be used as a part of the text of the setting prompt.

After the continuation of a series of conversations has ended, even if the user 230 speaks to the character 19051 and starts a new conversation, performing the generation processing and the transmission processing of the setting prompt described above with reference to FIG. 2F will ensure that the subsequent response to the user prompt reflects the settings from the previous conversation such as the character's role, name, conversational characteristics, personality, and/or conversational characteristics and the conversation history. In this manner, from the perspective of the user, the consistency of the settings related to the character's role, name, conversational characteristics, or personality and memory from the previous conversation is better ensured, making it more suitable.

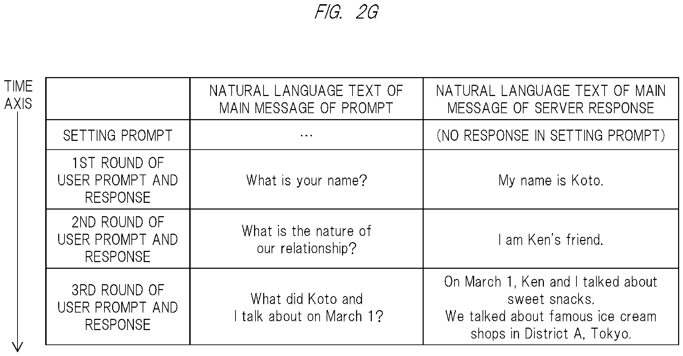

Next, an example of the operation of the character conversation apparatus (artificial intelligence response output apparatus 10010) according to the second embodiment of the present invention will be described with reference to FIG. 2G. This is also a description of an example of the operation of the character conversation system including the artificial intelligence response output apparatus 10010 and the large language model server 19001. Specifically, FIG. 2G shows examples of the natural language text of the main message of the prompt sent from the artificial intelligence response output apparatus 10010 to the large language model server 19001 and the natural language text of the main message of the server response which is the response to the prompt. This becomes the basis of the conversation between the user 230 and the character 19051 displayed on the artificial intelligence response output apparatus 10010.

FIG. 2G shows an example of a series of conversations shown in FIG. 2F, from the first round of user prompt following the first setting prompt and its response to the third round of user prompt and its response. In FIG. 2G, the exchange of prompts and responses is shown in chronological order. Contents of the setting prompt are the same as those shown in FIG. 2F, and thus, redundant descriptions thereof are omitted as appropriate.

As shown in the natural language text of the server response in the table of FIG. 2F, using the setting prompt shown in FIG. 2F allows the server response generated by the artificial intelligence of the large language model of the large language model server 19001 to reflect the settings related to the character's role, name, conversational characteristics, or personality and the conversation history from the prior conversation. In this manner, from the perspective of the user, the consistency of the settings related to the character's role, name, conversational characteristics, or personality from the prior conversation and the memory is better ensured, making it more suitable. Note that, since it allows the user to perceive the characters as the same, this may also be referred to as pseudo-consistency of the character as seen by the user.

In addition, from the perspective of the user, the user can share memories with the character, achieving a more enjoyable character conversation experience.

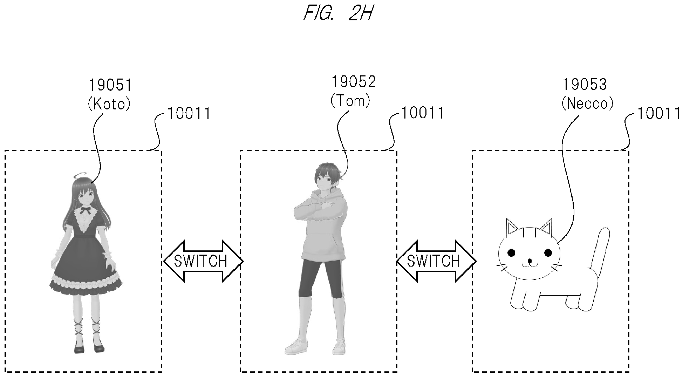

Next, an example of the operation of the character conversation apparatus (artificial intelligence response output apparatus 10010) according to the second embodiment of the present invention will be described with reference to FIG. 2H. This is also a description of an example of the operation of the character conversation system including the artificial intelligence response output apparatus 10010 and the large language model server 19001. Specifically, FIG. 2H shows an operation example in which the character displayed on the display 10011 of the artificial intelligence response output apparatus 10010 is switched to one of a plurality of character candidates. The character operation program executed by the controller 1110 of the artificial intelligence response output apparatus 10010 may switch the displayed character based on, for example, the operation input that is input to the operation input unit 1107 or the operation detected by the touch operation input sensor of the display 10011.

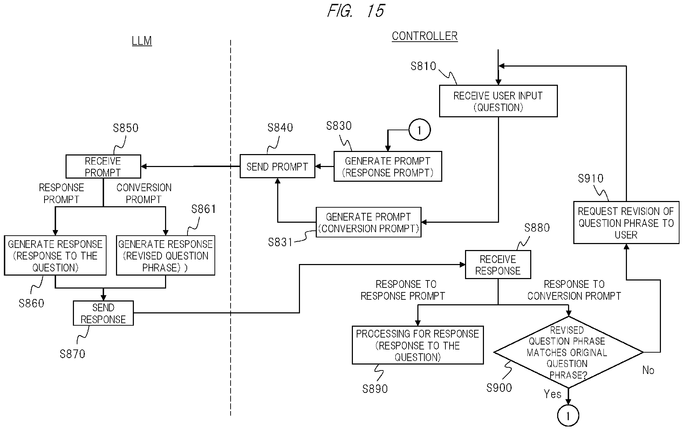

In the example of FIG. 2H, in addition to the character 19051 (named "Koto") described with reference to FIGS. 2A to 2G, a character 19052 (named "Tom") and a character 19053 (named "Necco") are shown. The character 19051 (named "Koto") and the character 19052 (named "Tom") are human-like characters, while the character 19053 (named "Necco") is a cat-like character. The display of the character displayed on the display 10011 may be switched by rendering the characters in different virtual 3D spaces and displaying the generated image on the display 10011. Processing for realizing display of the rendered image of the 3D model of each character may be performed, for example, by carrying out any one of the first to third processing examples described with reference to FIG. 15A. In addition, a dynamic 2D image may be displayed depending on the character.

In addition, it is suitable for the character operation program executed by the controller 1110 to change a synthesized audio used for each character's "speech" when switching the display of the character to be displayed on the display 10011. This may be achieved by storing the data of the synthesized audio of the voice associated with the character in the storage 1170 beforehand and performing synthesized audio change processing when switching the display of the character.

Note that, in the example of FIG. 2H, the apparatus is configured such that the user 230 can converse with any of the characters. In the artificial intelligence response output apparatus 10010 of FIG. 2H, each of these characters is assigned different roles, names, conversational characteristics, or personalities. In addition, the memory of each character based on the conversation history is managed separately for each character.

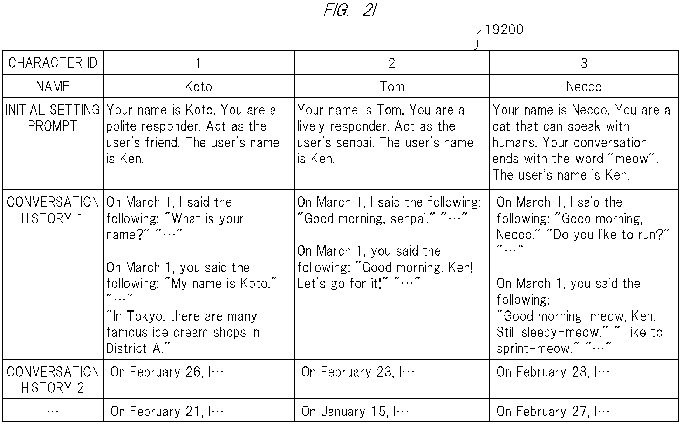

Thus, the artificial intelligence response output apparatus 10010 constructs a database shown in FIG. 2I in the storage 1170 and manages the character settings and the conversation history of the character using the database.

Next, an example of the operation of the character conversation apparatus (artificial intelligence response output apparatus 10010) according to the second embodiment of the present invention will be described with reference to FIG. 2I. This is also a description of an example of the operation of the character conversation system including the artificial intelligence response output apparatus 10010 and the large language model server 19001. Specifically, FIG. 2I is an explanatory diagram of a database 19200 for managing the character settings and the conversation history of the characters regarding the plurality of characters to be displayed on the display 10011 of the artificial intelligence response output apparatus 10010.

The character operation program executed by the controller 1110 of the artificial intelligence response output apparatus 10010 constructs, for example, the database 19200 in the storage 1170. The character ID may use an identification number that identifies the respective character that can be displayed on the artificial intelligence response output apparatus 10010, and may be a natural number or may use alphabetic characters or the like. The name is data of the respective character that can be displayed on the artificial intelligence response output apparatus 10010.

The initial setting prompt is the natural language text information that describes the settings related to the character's role, name, conversational characteristics, or personality of the respective character that can be displayed on the artificial intelligence response output apparatus 10010. The initial setting prompt is the natural language text information which is the main data of the setting prompt sent from the artificial intelligence response output apparatus 10010 to the large language model server 19001, and thus, it is desirable that the content be written as is in a format that can be read by the large language model which is artificial intelligence of the large language model server 19001.

The conversation histories that include conversation histories 1, 2, and so on are records of conversations between each of the characters and the user, and are recorded separately for each character. The conversation history is included in the natural language text information which is the main data of the setting prompt sent from the artificial intelligence response output apparatus 10010 to the large language model server 19001, and thus, it is desirable that the content be formatted to be readable by the large language model which is artificial intelligence of the large language model server 19001.

In a case where the character to be displayed on the display 10011 of the artificial intelligence response output apparatus 10010 is switched, the character operation program executed by the controller 1110 of the artificial intelligence response output apparatus 10010 uses the database 19200 of FIG. 2I to select and switch the initial setting prompt and conversation history to be used for the natural language text information which is the main data of the setting prompt sent from the artificial intelligence response output apparatus 10010 to the large language model server 19001 so as to correspond to the character displayed on the display 10011 of the artificial intelligence response output apparatus 10010. In addition, the character operation program records the conversation history in a conversation history area corresponding to the character displayed on the display 10011 in the database 19200 of FIG. 2I each time a conversation takes place between the user 230 and the character.

The character operation program executed by the controller 1110 of the artificial intelligence response output apparatus 10010 uses the database 19200 as described above to use the speech of the character to utilize the response of the large language model of the same artificial intelligence of the same large language model server 19001 to enable the conversation between the user 230 and the character while, from the perspective of the user, maintaining the uniqueness of the setting of each character such as the personality of the character, and allow the user to feel as if each character retains distinct conversation memories. From the perspective of the user, the consistency of the settings related to the character's role, name and conversational characteristics, or personality and memories from the prior conversations for each character is more effectively ensured, making it more suitable. This may also be expressed as ensuring the pseudo-consistency of each character from the user's perspective.

Therefore, even in a case where the artificial intelligence response output apparatus 10010 is configured to switch to and display a character among the plurality of character candidates on the display 10011, according to the operation using the above-described database 19200, from the perspective of the user, the user would feel less uncomfortable during the conversation with each character and would be able to share memories with each of the plurality of characters to achieve a more enjoyable character conversation experience.

Note that, by preventing the user from editing the initial setting prompts of the plurality of characters, each of the settings related to the character's role, name, conversational characteristics, or personality can be maintained in as state that is close to the intentions of the provider of the artificial intelligence response output apparatus 10010 or the creator of the character content. Alternatively, the user may be allowed to edit the initial setting prompt of the character depending on the input by the operation input unit 1107 or the like. In this case, it is possible for the user to customize the settings related to the character's role, name, conversational characteristics, or personality, allowing the user to converse with the character set to his or her preferences. In this case, the 3D model of the character, its rendered image, and the type of synthesized audio used for the character may be replaced accordingly.

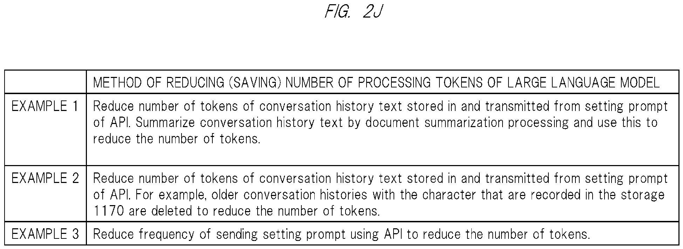

Next, an example of the operation of the character conversation apparatus (artificial intelligence response output apparatus 10010) according to the second embodiment of the present invention will be described with reference to FIG. 2J. This is also a description of an example of the operation of the character conversation system including the artificial intelligence response output apparatus 10010 and the large language model server 19001. Specifically, a method providing a less costly character conversation apparatus according to the artificial intelligence response output apparatus 10010 and a character conversation service by the character conversation system including the artificial intelligence response output apparatus 10010 and the large language model server 19001 will be described.

As described with reference to FIG. 2B, training artificial intelligence at this level for a specific use limited to the large language model is extremely inefficient in terms of resources. Thus, as a foundation model that can be applied to various uses, it is efficient in terms of resources to generate a model through large-scale training and utilize various terminals via the API (Application Programming Interface). Then, the provider of the large language model often recovers the costs incurred in the training of the large language model from the user of the terminal as API usage fees. At this time, in the natural language model, the API usage fees are often charged based on the number of tokens which is the processing amount of word units that make up a sentence.

Thus, in the artificial intelligence response output apparatus 10010 according to the second embodiment of the present invention, by reducing the number of tokens in the natural language text information transmitted between the artificial intelligence response output apparatus 10010 and the large language model server 19001 using the API, a less costly character conversation apparatus according to the artificial intelligence response output apparatus 10010 and a less costly character conversation service by the character conversation system including the artificial intelligence response output apparatus 10010 and the large language model server 19001 can be provided to the user.

For example, using the processing and configuration shown in Examples 1 to 3 in FIG. 2J makes it possible to technically reduce the number of tokens in the natural language text information transmitted between the artificial intelligence response output apparatus 10010 and the large language model server 19001 using the API.

Example 1 is an example of a method for reducing the number of tokens in the conversation history text stored in and transmitted from the setting prompt of the API, using a sentence summarization processing to shorten the conversation history text and reduce the number of tokens. For example, the natural language of the conversation history with the character recorded in the storage 1170 is summarized and recorded. Sentence summarization may be performed at the start of the next conversation, but is preferable to be performed at the end of the "series of conversations" to allow for more time.

In addition, the sentence summarization processing may be performed by requesting summarization directly from the large language model of the large language model server 19001. However, in this case, savings effect of the number of tokens is low. Therefore, for example, in the second server 19002, in a case where the sentence summarization processing of the natural language via the API is less costly than the large language model of the large language model server 19001, the sentence summarization processing may be requested to the second server 19002 via the API such that the sentence summarization of the conversation history may be stored in and transmitted from the setting prompt for the large language model server 19001.

In addition, if it is required to perform only the sentence summarization processing, it can be performed on the device side, and the sentence summarization may be performed by having the controller 1110 execute a document summarization program stored in the memory 1109 of the artificial intelligence response output apparatus 10010. In this case, the savings effect of the number of tokens is high. In addition, even if the conversation history becomes long, specifying an upper limit on the number of words after summarization in the sentence summarization processing makes it possible to determine the upper limit of a sentence length of the conversation history, and thus, it is possible to set an upper limit value of the token to achieve token savings.

Note that the text information of the character initial settings related to the character's role, name, conversational characteristics, or personality does not increase as much as the conversation history, and thus, it is efficient and preferable to maintain the text of the text information of the initial setting prompt of the character and reduce the number of tokens in the text information of the conversation history.

The processing described with reference to Example 1 may be performed by the character operation program executed by the controller 1110 controlling each unit.

Example 2 is another example of a method for reducing the number of tokens in the conversation history text stored in and transmitted from the setting prompt of the API. For example, the older conversation histories of the character that are recorded in the storage 1170 are deleted to reduce the number of tokens. Specifying the upper limit on the number of words of the conversation history makes it possible to determine the upper limit of the sentence length of the conversation history, and thus, it is possible to set the upper limit value of the token. Alternatively, the method may be such that a predetermined period of the conversation history is specified to delete the conversation history outside the period. In this case also, it is possible to achieve token savings. Note that, in Example 2 also, the text information of the character initial settings related to the character's role, name, conversational characteristics, or personality does not increase as much as the conversation history, and thus, it is efficient and preferable to maintain the text of the text information of the initial setting prompt of the character and reduce the number of tokens in the text information of the conversation history.

The processing described with reference to Example 2 may be performed by the character operation program executed by the controller 1110 controlling each unit.

Example 3 is an example of a method for reducing the number of tokens by reducing frequency of sending the setting prompt using the API. Specifically, after the apparatus' power is turned on or after the display character is switched, even after the image settings and synthesized audio settings for the displayed character have been completed, if the controller 1110 determines that the natural language text information contained in the user's voice captured by the microphone 1139 is text information that should use the large language model which is artificial intelligence without sending the setting prompt beforehand, the setting prompt is initially sent to the large language model server 19001 to reduce the frequency of sending the setting prompt to the large language model server 19001 to reduce the number of tokens.

Specifically, for example, after the apparatus' power is turned on or after the operation input to switch the display character, a display processing of the display 10011 is performed by the control of the character operation program executed by the controller 1110 such that the character 19051 (named "Koto") is displayed on the display 10011 as shown in FIG. 2H. At this time, for example, if the synthesized audio corresponding to the character 19051 for when the character appears is stored and prepared in the storage 1170 or the like, the synthesized audio for when the character appears such as "Good morning. I'm Koto", "Hello. I'm Koto", "Good evening. I'm Koto" or the like may be output from the speaker which is the audio output unit 1140. At this time, the image of the character 19051 is already set as the image of the character displayed on the display 10011, and the synthesized audio output from the speaker which is the audio output unit 1140 is set to the synthesized audio corresponding to the character 19051.

Here, inference processing of the large language model which is artificial intelligence in the large language model server 19001 described above would take more time as the prompt becomes longer. In particular, in a case where the setting prompt includes the text information related to the past conversation history, the number of tokens would increase, and thus, the inference processing time becomes longer. The setting prompt itself and its response is not output to the user 230. In response to the user prompt after the setting prompt, the synthesized audio as the "speech" of the character is output from the speaker which is the audio output unit 1140. Then it would seem to be better to send the setting prompt from the artificial intelligence response output apparatus 10010 to the large language model server 19001 beforehand to complete the inference processing of the large language model for the setting prompt beforehand to allow a faster response for the output of the synthesized audio of the "speech" of the character 19051 after the user 230 talks to the character 19051.

However, there may be cases where the setting prompt is sent to the large language model server 19001 and the inference processing of the large language model for the setting prompt is completed before the user 230 speaks, such as a case where the user 230 turns OFF the power of the artificial intelligence response output apparatus 10010 by an operation via the operation input unit 1107 or the touch operation input sensor of the display 10011, or a case where the user 230 switches the display character from the character 19051 to another character by an operation via the operation input unit 1107 or the touch operation input sensor of the display 10011. In these cases, the number of tokens used for the inference processing of the large language model after the setting prompt is sent to the large language model server 19001 would be the number of processing tokens unnecessarily consumed, resulting in wasted usage fees. This poses an obstacle against providing a less costly character conversation apparatus according to the artificial intelligence response output apparatus 10010 and a less costly character conversation service by the character conversation system including the artificial intelligence response output apparatus 10010 and the large language model server 19001 to the user.

Therefore, after the apparatus' power is turned ON or after the operation input to switch the display character, it is desirable for the artificial intelligence response output apparatus 10010 to use controls of the character operation program executed by the controller 1110 to set the image of the character 19051 as the image of the character to be displayed on the display 10011, and maintain a state where the setting prompt is not sent to the large language model server 19001 until a point at which it is recognized that the user 230 is speaking to the character 19051, even after the synthesized audio to be output from the speaker which is the audio output unit 1140 is set as the synthesized audio corresponding to the character 19051.

Here, the point at which it is recognized that the user 230 is speaking to the character 19051 may refer to, for example, a point at which the trigger keyword described with reference to FIG. 2B is detected, or a point at which extraction of the text of the words spoken by the user 230 is performed. This makes it possible to reduce the number of processing tokens unnecessarily consumed which results in wasted usage fees, and thus, a less costly character conversation apparatus according to the artificial intelligence response output apparatus 10010 and a less costly character conversation service by the character conversation system including the artificial intelligence response output apparatus 10010 and the large language model server 19001 can be provided to the user.

In addition, even after the above-described point at which it is recognized that the user 230 is speaking to the character 19051, if the text information extracted from the audio of the user 230 captured by, for example, the microphone 1139 corresponds to a preset keyword that does not require the inference processing of the large language model, it is desirable to continue the state where the setting prompt is not sent to the large language model server 19001. Specifically, examples of preset keywords include "Jump", "Dance", and other keywords that the user 230 uses to request the character 19051 to perform reactions such as animation or synthesized audio of the character 19051. In this case, the character operation program executed by the controller 1110 may read the motion data, animation image, and/or synthesized audio data corresponding to the reactions corresponding to the character 19051 stored in the storage, and may use the data to perform generation processing of the image to be displayed on the display 10011 and output processing of the synthesized audio from the speaker which is the audio output unit 1140.

Such processing does not necessarily require the inference processing of the large language model of the large language model server 19001. For example, after the processing, in the case where the user 230 turns OFF the power of the artificial intelligence response output apparatus 10010 by an operation via the operation input unit 1107 or the touch operation input sensor of the display 10011, or in the case where the user 230 switches the display character from the character 19051 to another character by an operation via the operation input unit 1107 or the touch operation input sensor of the display 10011, if the setting prompt is first sent to the large language model server 19001 and is then processed using the inference processing of the large language model, the number of tokens used for the processing would be the number of processing tokens unnecessarily consumed, resulting in wasted usage fees.

Therefore, even after the above-described point at which it is recognized that the user 230 is speaking to the character 19051, it is desirable that the state where the setting prompt is not sent to the large language model server 19001 is continued until a point where it is determined whether or not the text information extracted from the audio of the user 230 captured by, for example, the microphone 1139 corresponds to the preset keyword that does not require the inference processing of the large language model. If it is determined that the inference processing of the large language model is necessary, it is desirable to send the setting prompt to the large language model server 19001 for the first time and proceed with the inference processing of the large language model.

Note that the processing described with reference to Example 3 may be performed by the character operation program executed by the controller 1110 controlling each unit.

According to the methods for reducing (saving) the number of processing tokens in the large language model described above with reference to the examples in FIG. 2J, a less costly character conversation apparatus according to the artificial intelligence response output apparatus 10010 and a less costly character conversation service including the character conversation system including the artificial intelligence response output apparatus 10010 and the large language model server 19001 can be provided to the user.

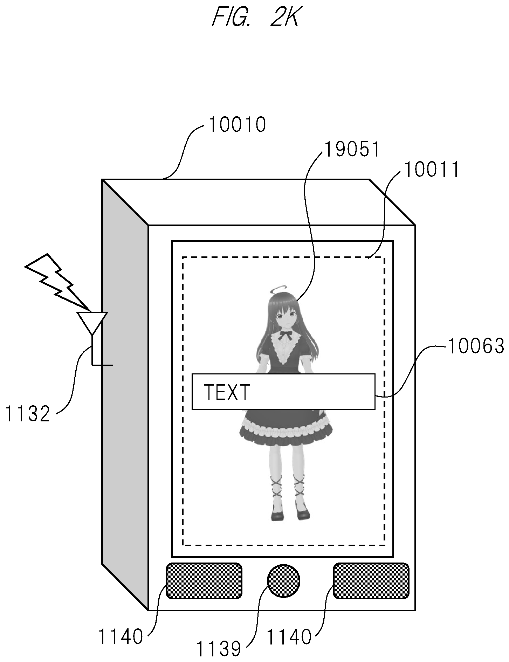

Next, an example of the display of the character conversation apparatus (artificial intelligence response output apparatus 10010) according to the second embodiment of the present invention will be described with reference to FIG. 2K. FIG. 2K shows an example in which the responses from the large language model for the prompt from the user described with reference to each of the drawings in FIGS. 2A to 2J are displayed on the display 10011 of the character conversation apparatus (artificial intelligence response output apparatus 10010). Specifically, it is an example in which the text 10063 which is the response from the large language model and the image of the character 19051 are displayed on the display 10011. The text 10063 which is the response from the large language model may be displayed overlapping the image of the character 19051 as shown in FIG. 2K. In addition, the text 10063 which is the response from the large language model may be displayed with the image of the character 19051 without overlapping the image of the character 19051.

The display of FIG. 2K is merely an example. For example, in a case where the user 230 adjusts the volume of the audio output of the audio output unit 1140 of the character conversation apparatus (artificial intelligence response output apparatus 10010) to its minimum or sets the audio output to OFF by operating the operation input unit 1107 or the touch operation input sensor of the display 10011, the user 230 will no longer be able to hear the response from the large language model.

Thus, in this case, the controller 1110 may control a display mode to start displaying the text 10063 which is the response from the large language model together with the image of the character 19051 as shown in FIG. 2K. This makes it possible for the user 230 to use the character conversation apparatus (artificial intelligence response output apparatus 10010) when the user wishes to suppress the audio output. Note that a configuration may be provided in which the user 230 can manually switch the ON/OFF of the display mode that displays the text 10063 which is the response from the large language model and the image of the character 19051 by the operation via the operation input unit 1107 or the touch operation input sensor of the display 10011.

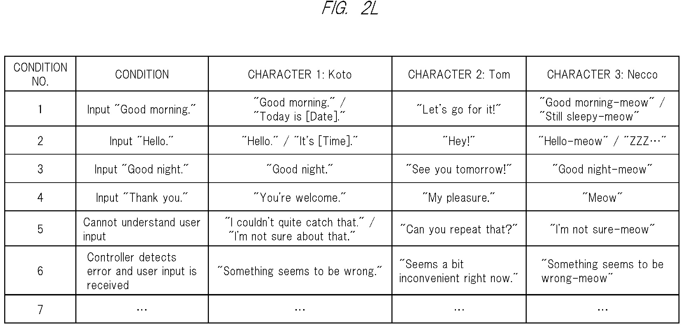

Next, an example of the response template phrase database (response template phrase DB) in the character conversation apparatus (artificial intelligence response output apparatus 10010) that can display a plurality of characters described with reference to FIGS. 2H and 2I will be described with reference to FIG. 2L. The condition numbers and conditions in the example of FIG. 2L are the same as those of FIG. 1C. For these conditions, in the example of FIG. 2L, individual response template phrases are set for each of the plurality of characters. For example, the response template phrases for each condition are stored for each of the three characters, Character 1 named Koto, Character 2 named Tom, and Character 3 named Necco described with reference to FIGS. 2H and 2I. The output control of the response template phrases is the same as that of FIG. 1C, and thus, redundant descriptions thereof are omitted as appropriate.

In the example of FIG. 2L, the controller 1110 may select the corresponding response template phrase from the response template phrase database (response template phrase DB) based on the character displayed on the character conversation apparatus (artificial intelligence response output apparatus 10010) and the current condition, and may use it for the output control as the response of the character. For example, in the example of the response template phrase database (response template phrase DB) of FIG. 2L, even under the same conditions, the response template phrase is changed to the expression or content corresponding to the personality of the character. In this manner, the character conversation apparatus (artificial intelligence response output apparatus 10010) can provide a conversation corresponding to the personality of the displayed character. The user can feel as if each character has a more consistent personality. In this manner, it is possible to achieve the character conversation apparatus (artificial intelligence response output apparatus 10010) that gives the plurality of characters a greater sense of realism.

Note that the response template phrase database (response template phrase DB) described above with reference to FIG. 2L is stored in the storage 1170, and the controller 1110 of the artificial intelligence response output apparatus 10010 may use this database. However, the response template phrase database (response template phrase DB) shown in FIG. 2L may be provided on the large language model server 19001 side. In this case, the controller of the large language model server 19001 may generate a response using the response template phrase database (response template phrase DB). The controller of the large language model server 19001 may send the response generated using the response template phrase database (response template phrase DB), instead of the response generated by the large language model stored in each server, to the artificial intelligence response output apparatus 10010. This makes it possible to generate a response using the response template phrase database (response template phrase DB) even if the artificial intelligence response output apparatus 10010 does not have a response template phrase database (response template phrase DB).

According to the above-described character conversation apparatus or the character conversation system according to the second embodiment, the user would feel less uncomfortable during the conversation with the character displayed on the artificial intelligence response output apparatus 10010. In addition, according to the character conversation apparatus or the character conversation system according to the second embodiment, a less costly character conversation service can be provided to the user.

Note that, in the above-described second embodiment, an example in which the large language model of the large language model server 19001 is used as the large language model has been described. Alternatively, the character conversation apparatus (artificial intelligence response output apparatus 10010) may be configured to comprise the local LLM processor 10028 shown in FIG. 1B, and the large language model of the local LLM processor 10028 may be used instead of the large language model of the large language model server 19001. In this case, in the above description, the large language model of the large language model server 19001 according to the second embodiment may be replaced with the large language model of the local LLM processor 10028 of the character conversation apparatus (artificial intelligence response output apparatus 10010).

In this case also, the user would feel less uncomfortable during the conversation with the character displayed on the artificial intelligence response output apparatus 10010. Note that, in a case where the large language model of the local LLM processor 10028 is used instead of the large language model of the large language model server 19001, there is less need to consider the usage fees based on the number of processing tokens. However, even when using the large language model of the local LLM processor 10028, reducing the number of processing tokens can reduce the consumption of resources such as power required for inference. In this case, a character conversation service that consumes less power can be provided to the user.

Note that, in the above-described second embodiment, an example in which the conversation history with the character is recorded and held in the storage 1170 of the character conversation apparatus (artificial intelligence response output apparatus 10010) has been described. Alternatively, the conversation history with the character may be recorded and held on the second server 19002 connected to the Internet 19000 or other cloud servers. In this case, when the user and the character start a new conversation, the character conversation apparatus (artificial intelligence response output apparatus 10010) may communicate with the second server 19002 or the cloud server, acquire (download) the past conversation history between the character and the user, hold it in the storage 1170 or the memory 1109 of the character conversation apparatus (artificial intelligence response output apparatus 10010), and use it to create the prompt for the large language model. The specific method using the past conversation history to create the prompt for the large language model is as described in the second embodiment with reference to each of the drawings, and thus, redundant descriptions thereof are omitted as appropriate.

In addition, the character conversation apparatus (artificial intelligence response output apparatus 10010) may send (upload) the conversation history of the character up to a predetermined point such as each time a conversation takes place between the user and the character, or at a point where the conversation between the user and the character ends to the above-described second server 19002 or other cloud servers. That is, the character conversation apparatus (artificial intelligence response output apparatus 10010) uploads the conversation history with the character to the second server 19002 or other cloud servers at a predetermined timing, and when the user starts a conversation with the user, the character conversation apparatus (artificial intelligence response output apparatus 10010) may download the latest conversation history from the second server 19002 or other cloud servers and may use it to generate the prompt for the large language model. This makes it possible to display the same character on different apparatuses when the character conversation apparatus (artificial intelligence response output apparatus 10010) used by the user on the previous day differs from the character conversation apparatus (artificial intelligence response output apparatus 10010) that the user is about to use. In a case where the user converses with the same character on different apparatuses at different timings, it is possible to achieve a conversation that appears as if the memory of the character from the previous conversation has been virtually carried over, making it more suitable for the user.

The above-described processing in which the character conversation apparatus (artificial intelligence response output apparatus 10010) uploads and downloads the conversation history with the character to and from the second server 19002 or other cloud servers and virtually carries over the memory of the character is also effective in a case where the database 19200 including the conversation histories of the plurality of characters described with reference to FIGS. 2H and 2I is handled. That is, providing a configuration in which the database 19200 described with reference to FIG. 2I is uploaded and downloaded to and from the second server 19002 or other cloud servers can achieve conversations with not only one character but the plurality of characters across different apparatuses, at different timings multiple times, with the memory of each character being virtually carried over from the previous conversation, making it more suitable for the user.

### <Third Embodiment>

Next, a third embodiment of the present invention is a modified version of the character conversation apparatus (artificial intelligence response output apparatus 10010) and the character conversation system according to the second embodiment described with reference to the drawings. In the present embodiment, only differences from the second embodiment will be described, and descriptions of configurations similar to those of the second embodiment will be omitted as appropriate.

As in the second embodiment, the character in the third embodiment can provide the service of the large language model which is artificial intelligence to the user to assist the user. Therefore, the character can be an artificial intelligence (AI) assistant for user. In this case, the character conversation apparatus or the character conversation system in the present embodiment may also be referred to as an AI assistant conversation apparatus, an AI assistant display apparatus, an AI assistant response output apparatus, an AI assistant conversation system, an AI assistant display system, or an AI assistant response output system.

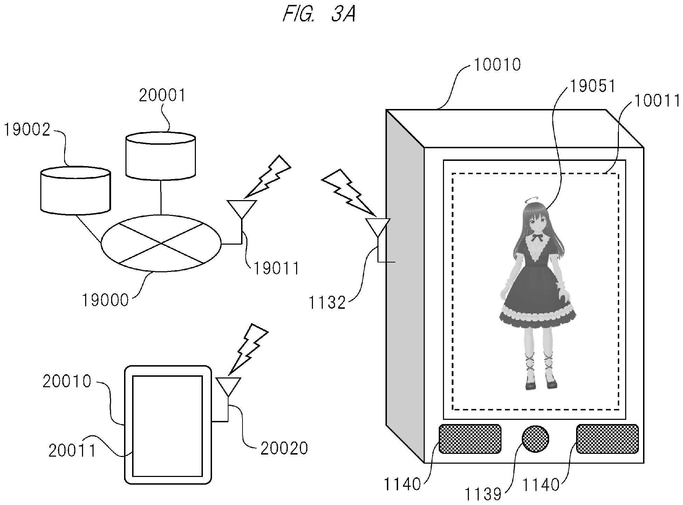

An example of the character conversation apparatus and the character conversation system according to the third embodiment of the present invention will be described with reference to FIG. 3A. The character conversation system according to the third embodiment comprises the large language model server 20001 instead of the large language model server 19001 of FIG. 2A, and is connected to the Internet 19000.

Here, the large language model server 20001 is a server having the large language model artificial intelligence. However, it is a multimodal large language model which is artificial intelligence that can process not only the natural language text information that could be processed by the large language model server 19001 but also types of information other than the natural language text information.

In addition, the artificial intelligence response output apparatus 10010 which is the character conversation apparatus will be described as having the same configuration as the character conversation apparatus (artificial intelligence response output apparatus 10010) according to the second embodiment as an example.

In the third embodiment also, the artificial intelligence response output apparatus 10010 which is the character conversation apparatus can communicate with the large language model of the large language model server 20001 via the Internet 19000 using the API.

The character conversation system according to the third embodiment includes a mobile information processing terminal 20010 to be used by the user 230. The mobile information processing terminal 20010 is a so-called smartphone or a tablet type information processing terminal.

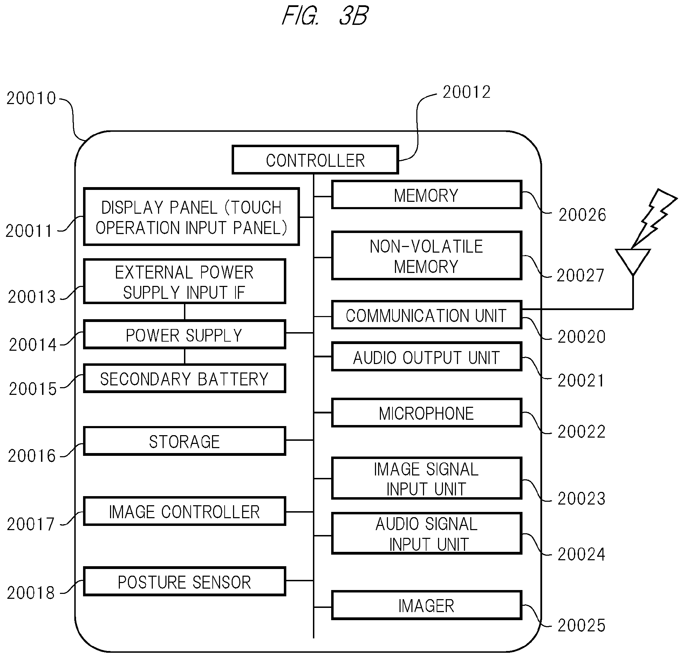

Here, an example of the mobile information processing terminal 20010 will be described with reference to FIG. 3B. The mobile information processing terminal 20010 comprises a display panel 20011 which is a touch operation input panel, a controller 20012, an external power supply input interface 20013, a power supply 20014, a secondary battery 20015, a storage 20016, an image controller 20017, a posture sensor 20018, a communication unit 20020, an audio output unit 20021, a microphone 20022, an image signal input unit 20023, an audio signal input unit 20024, an imager 20025, and the like.

The display panel 20011 comprises the touch operation input sensor, and can receive the touch operation input by a finger of the user 230. The display panel 20011 performs displaying with a liquid crystal panel or an organic EL panel and can display an image. The display panel 20011 may also be referred to as a display.

The communication unit 20020 may be configured with a Wi-Fi communication interface, a Bluetooth communication interface, a mobile communication interface such as 4G or 5G, or the like. These communication methods are used such that the communication unit 20020 of the mobile information processing terminal 20010 can communicate with the communication unit 1132 of the character conversation apparatus (artificial intelligence response output apparatus 10010). The mobile information processing terminal 20010 comprises a controller such as a CPU and a memory, and the controller controls the display panel 20011, the communication unit 20020, and the like. In addition, the communication unit 20020 can communicate with the communication apparatus 19011 connected to the Internet 19000 by using any of the communication methods of the communication unit 20020. In this manner, the mobile information processing terminal 20010 can communicate with various servers connected to the Internet 19000.

The power supply 20014 converts AC current input from an external component via the external power supply input interface 20013 into DC current and supplies the necessary DC current to each unit of the mobile information processing terminal 20010. The secondary battery 20015 stores the power supplied from the power supply 20014. In addition, the secondary battery 20015 supplies power to each unit that requires power in a case where power is not supplied from the external component via the external power supply input interface 20013.

The image signal input unit 20023 connects to an external image output apparatus to input image data. The image signal input unit 20023 may be configured with various digital image input interfaces. For example, it may be configured with an HDMI (registered trademark) (High-Definition Multimedia Interface) compliant image input interface, a DVI (Digital Visual Interface) compliant image input interface, a DisplayPort compliant image input interface, or the like. Alternatively, an analog image input interface such as an analog RGB or a composite video may be provided. The image signal input unit 20023 may also be various USB interfaces and the like.

The audio signal input unit 20024 connects to an external audio output apparatus to input audio data. The audio signal input unit 20024 may be configured with an HDMI compliant audio input interface, an optical digital terminal interface, a coaxial digital terminal interface, or the like. The audio signal input unit 20024 may also be various USB interfaces and the like. In the case of the HDMI compliant interface, the image signal input unit 20023 and the audio signal input unit 20024 may be configured as an interface with an integrated terminal and cable.

The audio output unit 20021 can output audio based on audio data input to the audio signal input unit 20024. The audio output unit 20021 can also output audio based on audio data stored in the storage 20016. The audio output unit 20021 may be configured with a speaker. In addition, the audio output unit 20021 may output a built-in operation sound or an error warning sound. Alternatively, the audio output unit 20021 may be configured to output an audio signal as a digital signal to an external device in accordance with an audio return channel function defined in the HDMI standard.

The microphone 20022 captures sound surrounding the mobile information processing terminal 20010 and converts it into a signal to generate an audio signal. The microphone may record human voice such as the user's voice, and the controller 20012 described below may perform audio recognition processing on the generated audio signal to acquire text information from the audio signal.

The imager 20025 is a camera having an image sensor. The camera may be provided on a front surface side or a rear surface side of the display panel 20011 of the mobile information processing terminal 20010. Cameras may be provided on both the front surface and the rear surface. In the present embodiment, the imager 20025 is described as having cameras on both the front surface and the rear surface.

The storage 20016 is a storage apparatus that records various types of information of various types of data such as video data, image data, and audio data. The storage 20016 may be configured with a magnetic recording media apparatus such as a hard disk drive (HDD) or a semiconductor device memory such as a solid-state drive (SSD). For example, the storage 20016 may record various types of information of various types of data such as video data, image data, and audio data prior to product shipment. In addition, the storage 20016 may record various types of information of various types of data such as video data, image data, and audio data acquired from an external device, an external server, or the like via the communication unit 20020. Video data, image data, and the like recorded in the storage 20016 is output to the display panel 20011. Video data, image data, and the like recorded in the storage 20016 may be output to an external device, an external server, or the like via the communication unit 20020.

The image controller 20017 performs various controls regarding image signals input to the display panel 20011. The image controller 20017 may also be referred to as an image processing circuit, and may be configured with, for example, hardware such as an ASIC, an FPGA, or an image processor. Note that the image controller 20017 may also be referred to as a video processor or an image processor. The image controller 20017 performs image switching controls such as determining which image signal to input to the display panel 20011 from among the image signals stored in a memory 20026 and the image signals (image data) input to the image signal input unit 20023. In addition, the image controller 20017 may perform image processing controls on the image signal input from the image signal input unit 20023, the image signal stored in the memory 20026, and the like. Image processing includes, for example, scaling processing such as enlarging, reducing, or transforming the image, brightness adjustment processing for changing brightness of the image, contrast adjustment processing for changing the contrast curve of the image, and Retinex processing such as decomposing the image into a light component and changing the weighting of each component.

The posture sensor 20018 is constituted by a gravity sensor or an acceleration sensor or a combination thereof, and can detect a posture of the mobile information processing terminal 20010. The controller 20012 may control the operation of each connected unit based on a posture detection result of the posture sensor 20018.

A non-volatile memory 20027 stores various types of data used for the mobile information processing terminal 20010. The data stored in the non-volatile memory 20027 includes, for example, data for various operations displayed on the display panel 20011 of the mobile information processing terminal 20010, a display icon, data for an object operated by the user for operation, layout information, and the like. The memory 20026 stores the image data to be displayed on the display panel 20011, data for controlling the apparatus, and the like. The controller 20012 may read various software from the storage 20016 and load and store it in the memory 20026.

The controller 20012 controls the operation of each connected unit. In addition, the controller 20012 may cooperate with a program stored in the memory 20026 and perform arithmetic processing based on information acquired from each unit in the mobile information processing terminal 20010.

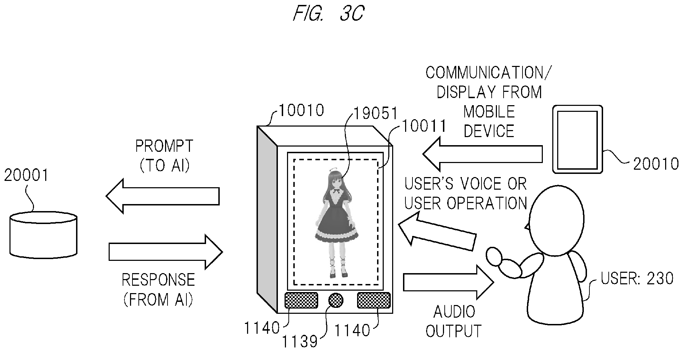

Next, an example of the operation of the character conversation apparatus (artificial intelligence response output apparatus 10010) according to the third embodiment of the present invention will be described with reference to FIG. 3C. This is also a description of an example of the operation of the character conversation system including the artificial intelligence response output apparatus 10010 and the large language model server 20001. In the third embodiment also, the character conversation apparatus (artificial intelligence response output apparatus 10010) loads the character operation program stored in the storage 1170 or the like to the memory 1109, and the controller 1110 executes the character operation program such that it is possible to achieve various types of processing described below.

In the second embodiment, actions performed by the user 230 for the character conversation apparatus (artificial intelligence response output apparatus 10010) were mainly prompts by the voice of the user 230. In the character conversation apparatus (artificial intelligence response output apparatus 10010) according to the second embodiment, the series of operations were performed starting from the process of capturing the voice of the user 230 with the microphone. Alternatively, in the character conversation apparatus (artificial intelligence response output apparatus 10010) according to the third embodiment, the character conversation apparatus (artificial intelligence response output apparatus 10010) performing the series of operations starting from the process of capturing the voice of the user 230 with the microphone described in the second embodiment can be executed. In addition, in the character conversation apparatus (artificial intelligence response output apparatus 10010) according to the third embodiment, the user 230 can perform actions for the character conversation apparatus (artificial intelligence response output apparatus 10010) by the user operation via the operation input unit 1107 of FIG. 1B. Here, an example of the operation input unit 1107 of FIG. 1B includes a mouse, a keyboard, a touch panel, or the like.

In addition, in the character conversation apparatus (artificial intelligence response output apparatus 10010) according to the third embodiment, the user 230 can perform an action for the character conversation apparatus (artificial intelligence response output apparatus 10010) by the touch operation of the user detectable by the touch operation input sensor of the display 10011 of FIG. 1B.

In addition, the user 230 can operate the mobile information processing terminal 20010 to perform communication with the character conversation apparatus (artificial intelligence response output apparatus 10010) from the mobile information processing terminal 20010 to allow the operation input of the user 230 to be input to the character conversation apparatus (artificial intelligence response output apparatus 10010).

In addition, the display panel 20011 of the mobile information processing terminal 20010 may display an information storage image such as a two-dimensional code in which information that the user wishes to transmit to the character conversation apparatus (artificial intelligence response output apparatus 10010) is stored, and the imager 1180 of the character conversation apparatus (artificial intelligence response output apparatus 10010) of FIG. 1B may capture the display image. The controller 1110 of the character conversation apparatus (artificial intelligence response output apparatus 10010) may extract the information from the information storage image such as the two-dimensional code captured by the imager 1180 to retrieve the information. In addition, the display panel 20011 of the mobile information processing terminal 20010 may display the image that the user wishes to transmit to the character conversation apparatus (artificial intelligence response output apparatus 10010), and the imager 1180 of the character conversation apparatus (artificial intelligence response output apparatus 10010) of FIG. 1B may capture the display image. The controller 1110 of the character conversation apparatus (artificial intelligence response output apparatus 10010) may perform image recognition processing on the image captured by the imager 1180 to acquire a result of the image recognition processing.

In this manner, the character conversation apparatus (artificial intelligence response output apparatus 10010) according to the third embodiment has more actions that can be performed by the user 230 on the character conversation apparatus (artificial intelligence response output apparatus 10010) than the character conversation apparatus (artificial intelligence response output apparatus 10010) described with reference to the second embodiment. In this manner, the character conversation apparatus (artificial intelligence response output apparatus 10010) according to the third embodiment can acquire the result of the user 230 other than the user's voice, and generate the prompt to be sent to the large language model server 20001 based on the result. In this manner, the prompt to be sent to the large language model server 20001 can suitably contain information of types other than the natural language text information extracted from the user's voice. Information of types other than the natural language text information extracted from the user's voice includes, for example, an image, video, audio, or the like.

Next, the character conversation apparatus (artificial intelligence response output apparatus 10010) according to the present embodiment sends the prompt to the large language model server 20001using the API. In the present embodiment also, the prompt may be metadata in which information such as format such as markup format using tags in a markup language, format using a predetermined symbol such as markdown format, or object format using a predetermined script such as JSON is stored. In the present embodiment also, types of prompts include a setting prompt for storing instructions such as initial settings and a user prompt that reflect the instruction from the user. Type identification information that identifies whether the prompt is the setting prompt or the user prompt may be stored in a portion of the prompt other than its main message. At this time, the prompt contains the natural language text information as the main message. Further, in the present embodiment, it is possible to include the natural language text information and the non-natural language information source such as the image, video, or audio as information of the type other than the natural language text information in the main message of the prompt. The specific method for including the non-natural language information source in the prompt will be described below.

The large language model server 20001 according to the present embodiment has the multimodal large language model that can process the non-natural language information source together with the natural language text information. The large language model server 20001 receives the prompt from the character conversation apparatus (artificial intelligence response output apparatus 10010). Based on the prompt, the multimodal large language model executes inference and generates a response including the natural language text information based on the inference result. Here, the artificial intelligence of the large language model server 20001 is the multimodal large language model, and thus, the response can include the natural language text information and the non-natural language information source such as the image, video, or audio.

The character conversation apparatus (artificial intelligence response output apparatus 10010) receives the response from the large language model server 20001, and extracts the natural language text information stored as the main message of the response and the non-natural language information source such as the image, video, or audio. Based on the natural language text information extracted from the above-described response, the character operation program of the character conversation apparatus (artificial intelligence response output apparatus 10010) may generate natural language audio that serves as a response to the user using the audio synthesis technique, and may output it from the audio output unit 1140 which is the speaker, so that it sounds as if it is the voice of the character 19051 displayed on the display screen.

In addition, based on the natural language text information extracted from the above-described response, the character operation program of the character conversation apparatus (artificial intelligence response output apparatus 10010) may display natural language words which is the response to the user on the display screen of the character conversation apparatus (artificial intelligence response output apparatus 10010). At this time, the words may be displayed with the character 19051, or may be displayed overlapping the image of the character 19051, or may be displayed instead of the image of the character 19051. Such a specific processing may be executed by the image controller 1160.

In addition, based on the information of the image of the non-natural language information source extracted from the above-described response, the character operation program of the character conversation apparatus (artificial intelligence response output apparatus 10010) may display the image on the display screen of the character conversation apparatus (artificial intelligence response output apparatus 10010) for the user. At this time, the image may be displayed with the character 19051, or may be displayed overlapping the image of the character 19051, or may be displayed instead of the image of the character 19051. Such a specific processing may be executed by the image controller 1160.

In addition, based on the information of the video of the non-natural language information source extracted from the above-described response, the character operation program of the character conversation apparatus (artificial intelligence response output apparatus 10010) may display the video on the display screen of the character conversation apparatus (artificial intelligence response output apparatus 10010) for the user. At this time, the video may be displayed with the character 19051, or may be displayed overlapping the image of the character 19051, or may be displayed instead of the image of the character 19051. Such a specific processing may be executed by the image controller 1160.

In addition, the character operation program of the character conversation apparatus (artificial intelligence response output apparatus 10010) may output the audio generated based on the information of the audio of the non-natural language information source extracted from the above-described response to the audio output unit 1140 which is the speaker.

According to the character conversation apparatus (artificial intelligence response output apparatus 10010) or the character conversation system including the character conversation apparatus (artificial intelligence response output apparatus 10010) and the large language model server 20001 described above with reference to FIG. 3C, there is no need to install the large language model, which requires vast amounts of data and computational resources for learning, in the character conversation apparatus (artificial intelligence response output apparatus 10010) itself. Moreover, it is possible to utilize advanced natural language processing and non-natural language information processing capabilities of the multimodal large language model via the API. In addition to the response based on the natural language text, a response based on the non-natural language information source can be provided in response to the action of the user toward the character, allowing a more suitable conversation.

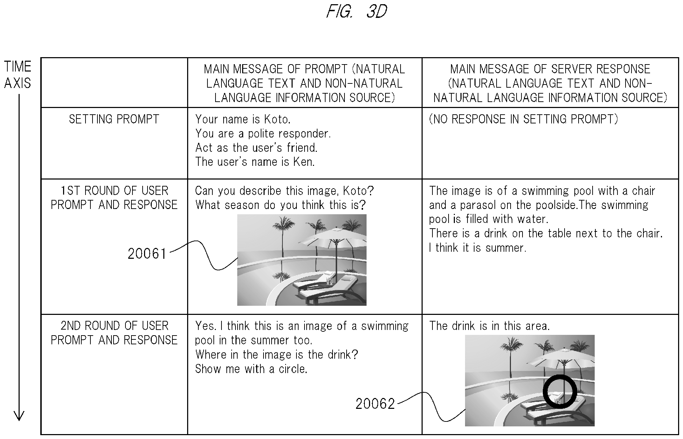

Next, an example of the operation of the character conversation apparatus (artificial intelligence response output apparatus 10010) according to the third embodiment of the present invention will be described with reference to FIG. 3D. This is also a description of an example of the operation of the character conversation system including the artificial intelligence response output apparatus 10010 and the large language model server 20001. Specifically, FIG. 3D shows examples of the natural language text of the main message of the prompt sent from the character conversation apparatus (artificial intelligence response output apparatus 10010) to the large language model server 20001 and the non-natural language information source such as the image, and the natural language text of the main message of the server response which is the response to the prompt and the non-natural language information source such as the image. In the present embodiment, the non-natural language information source can use an image, video, audio, or the like. FIG. 3D shows an example of an image as the non-natural language information source.

In addition, FIG. 3D shows the setting prompt and exchange of prompts and responses in chronological order from the first round of user prompt to the second round of user prompt and corresponding responses. Here, the prompts and responses shown in FIG. 3D include a non-natural language information source 20061 and a non-natural language information source 20062 that were not shown in FIG. 2D for the second embodiment. In the example of FIG. 3D, the non-natural language information source 20061 and the non-natural language information source 20062 are both images.

In FIG. 3D, the image of the non-natural language information source 20061 is shown embedded in the prompt for simplicity. However, there are a plurality of methods for transmitting or specifying data from the non-natural language information source 20061 in the prompt sent from the character conversation apparatus (artificial intelligence response output apparatus 10010) to the large language model server 20001. The character conversation apparatus (artificial intelligence response output apparatus 10010) may use any one of the plurality of methods or switch between them as appropriate. Hereinafter, an example of each method will be described.

A first method for transmitting of specifying the non-natural language information source data in the prompt is used, for example, when the non-natural language information source to be specified is located on a server or the like connected to a network such as the Internet. A specific method of the first method is for specifying a non-natural language information source file on the network such as the Internet using information such as tags or symbols in the prompt by specifying a location information (such as URL) of and file name of the non-natural language information source file.

For example, using the tag <img src="****"> which specifies an image in the markup language, the image on the network such as the Internet may be specified by entering the location information and file name information of the image file in the "****" portion. In addition, using the tag <video src="****"> which specifies a video in the markup language, the video on the network such as the Internet may be specified by entering the location information and file name information of the video file in the "****" portion. In addition, using the tag <audio src="****"> which specifies audio in the markup language, the audio on the network such as the Internet may be specified by entering the location information and file name information of the audio file in the "****" portion. In addition, in a case where the JSON format is used, a key such as "img_src" is made available, and the image on the network such as the Internet may be specified by entering the location information and file name information of the image file in a respective value. The key and the value may be respectively prepared for the video file or audio file. The specific format example provided is merely an example, and other custom formats may be used. In any case, the information specifying the location information and file name information of the non-natural language information source file may be stored in the prompt.

As in the first method, in a case where the information specifying the location information and file name information of the non-natural language information source file is stored in the prompt, there is no need to store data of the non-natural language information source file in the prompt itself. Therefore, the amount of data in the prompt can be reduced. In the first method, the large language model server 20001 receiving the prompt specified by the non-natural language information source data may use the location information and file name information of the non-natural language information source file stored in the prompt to acquire the non-natural language information source file located on the server or the like connected to the network such as the Internet.

Here, the method in which the character conversation apparatus (artificial intelligence response output apparatus 10010) inputs the location information and file name information in a case where the non-natural language information source data in the prompt is specified in the first method will be described. In FIG. 3C and according to the present embodiment, the types of actions that can be performed by the user 230 on the character conversation apparatus (artificial intelligence response output apparatus 10010) have increased compared to the second embodiment, in addition to the voice of the user 230. Therefore, for example, the user 230 may input the location information such as the URL for specifying the non-natural language information source data or the file name information by the user operation (such as the mouse, keyboard, touch panel) via the operation input unit 1107 of FIG. 1B.

In addition, in the character conversation apparatus (artificial intelligence response output apparatus 10010), the controller 1110 may cooperate with the memory 1109 and execute a WEB browser program to display a GUI of the WEB browser program on the display screen of the character conversation apparatus (artificial intelligence response output apparatus 10010). The user operation for the GUI of the WEB browser program may be received by the user's touch operation that can be detected by the user operation via the operation input unit 1107 (such as a mouse, keyboard, or touch panel) or the touch operation input sensor of the display 10011, and the non-natural language information source data such as the image, video, or audio selected in a browser screen of the WEB browser program may be set as data to be specified in the prompt. In this case, the WEB browser program may acquire the location information and file name information of the non-natural language information source data and carry it over to the character operation program.

In addition, the user 230 may operate the mobile information processing terminal 20010 to perform a communication with the character conversation apparatus (artificial intelligence response output apparatus 10010) from the mobile information processing terminal 20010 to input the location information such as the URL for specifying the non-natural language information source data to the character conversation apparatus (artificial intelligence response output apparatus 10010). In addition, the information storage image such as the two-dimensional code may be displayed on the display panel 20011 of the mobile information processing terminal 20010 as described with reference to FIG. 3C to perform the image recognition processing on the image captured by the imager 1180 of the character conversation apparatus (artificial intelligence response output apparatus 10010) and to input the location information such as the URL and file name information for specifying the non-natural language information source data by acquiring the result of the image recognition processing.

Note that using the first method for transmitting or specifying the non-natural language information source data in the prompt is not limited to cases in which the non-natural language information source file is stored in advance on the server or the like connected to the network such as the Internet. For example, in a case where the non-natural language information source data such as the image, video, or audio stored in the storage 1170 of the character conversation apparatus (artificial intelligence response output apparatus 10010) is to be included in the prompt, the character conversation apparatus (artificial intelligence response output apparatus 10010) may upload the non-natural language information source data to the second server 19002 via the Internet 19000, and the prompt may include the location information on the Internet (such as the URL) and file name of the non-natural language information source data uploaded to the second server 19002. In this case, the second server 19002 functions as a so-called intermediate server.

Likewise, in a case where the non-natural language information source data such as the image, video, or audio stored in the storage 20016 of the mobile information processing terminal 20010 is to be included in the prompt, the mobile information processing terminal 20010 may upload the non-natural language information source data to the second server 19002 via the Internet 19000. The mobile information processing terminal 20010 or the second server 19002 may send the location information on the Internet (such as the URL) and file name of the non-natural language information source data from the second server 19002 to the character conversation apparatus (artificial intelligence response output apparatus 10010), and the location information on the Internet (such as the URL) and file name of the non-natural language information source data acquired by the character operation program of the character conversation apparatus (artificial intelligence response output apparatus 10010) and uploaded to the second server 19002 may be included in the prompt.

Further, the character operation program of the character conversation apparatus (artificial intelligence response output apparatus 10010) may construct a media server in the character conversation apparatus (artificial intelligence response output apparatus 10010) that can cooperate with the memory 1109 and the storage 1170 and can be accessed from other servers via the Internet 19000. In this case, in a case where the non-natural language information source data in the prompt is specified in the first method, the character conversation apparatus (artificial intelligence response output apparatus 10010) may store, in the prompt, the location information on the Internet (such as the URL) indicating the media server constructed in the character conversation apparatus (artificial intelligence response output apparatus 10010) itself and the file name of the corresponding non-natural language information source data.

Next, a second method for specifying the transmission or specifying of the non-natural language information source data in the prompt is, for example, a method in which the non-natural language information source data itself is simply stored in (attached to) the prompt. Generally, the non-natural language information source data such as the image, video, or audio has a larger data volume than the text information which is natural language. Therefore, in this case, the data volume of the prompt itself becomes larger than in the first method. The character operation program of the character conversation apparatus (artificial intelligence response output apparatus 10010) temporarily stores the non-natural language information source data to be stored in (attached to) the prompt in the memory 1109, and when sending the prompt, may store (attach) the data in the prompt and output the data from the memory 1109 to the large language model server 20001 via the communication unit 1132. The non-natural language information source data itself stored in the memory 1109 by the character operation program of the character conversation apparatus (artificial intelligence response output apparatus 10010) may be acquired by the communication unit 1132 via the Internet 19000, may be acquired from the mobile information processing terminal 20010 by the communication unit 1132, or may be read from the storage 1170 and stored in the memory 1109.

The above-described method makes it possible for the character conversation apparatus (artificial intelligence response output apparatus 10010) to transmit or specify the non-natural language information source data by the prompt.

The large language model server 20001 is the multimodal large language model that can process the non-natural language information source together with the natural language text information, and thus, as shown in the example of FIG. 3D, based on the first round of user prompt, the server acquires the image including the swimming pool and the poolside which is the non-natural language information source 20061 and the text information which is natural language and outputs the text information which is natural language as the inference result in response to the first round of user prompt as shown in FIG. 3D.

In addition, the large language model server 20001 is the multimodal large language model that can process the non-natural language information source together with the natural language text information, and thus, as shown in the example of FIG. 3D, based on the response to the second round of user prompt, the large language model server 20001 can include the non-natural language information source 20062 generated by inference of the multimodal large language model in the response and send it to the character conversation apparatus (artificial intelligence response output apparatus 10010). FIG. 3D shows an example in which the non-natural language information source 20062 is an image with a circle added to the image of the swimming pool and the poolside which is the non-natural language information source 20061. Note that the non-natural language information source 20062 stored in the response is not limited to the image shown in FIG. 3D and may be any video or audio.

In the method where the non-natural language information source other than the natural language text information is included in the response from the large language model server 20001, a method that conforms to the first method or the second method in which the above-described character conversation apparatus (artificial intelligence response output apparatus 10010) transmits or specifies the non-natural language information source data in the prompt.

Specifically, as a method conforming to the above-described first method, the large language model server 20001 may store the information specifying the location information and file name information of the non-natural language information source file in the prompt as a response. The non-natural language information source 20062 itself such as the image, video, or audio may be held by the large language model server 20001 or may be transferred to the second server 19002 functioning as the intermediate server and be held there. In both cases, the large language model server 20001 may store the information specifying the location information and file name information of the non-natural language information source file in the prompt as a response. The character conversation apparatus (artificial intelligence response output apparatus 10010) that has acquired the response may access the large language model server 20001 or the second server 19002 using the location information and file name information of the non-natural language information source file in the prompt to acquire the non-natural language information source 20062.

In addition, specifically, as a method conforming to the above-described second method, the large language model server 20001 may store (attach) file data itself of the non-natural language information source 20062 and send it to the character conversation apparatus (artificial intelligence response output apparatus 10010) as a response. The character conversation apparatus (artificial intelligence response output apparatus 10010) can acquire the data of the non-natural language information source 20062 stored in (attached to) the prompt to use it for various outputs to the user 230.

As described above with reference to FIG. 3D, according to the character conversation apparatus (artificial intelligence response output apparatus 10010) and the operation of the character conversation system according to the third embodiment, an exchange of prompts and responses for achieving a conversation using the image, video, or audio which is the non-natural language information is performed between the character displayed on the character conversation apparatus (artificial intelligence response output apparatus 10010) and the user 230. In this manner, it is possible to achieve a more advanced and natural conversation as shown in the messages of FIG. 3D.

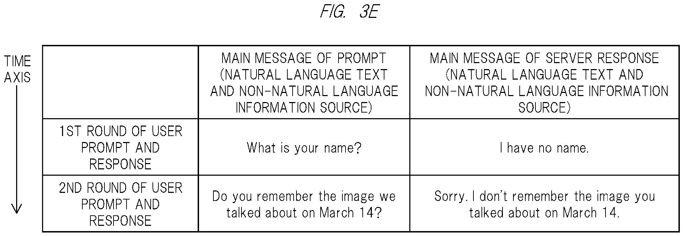

Next, an example of the operation of the character conversation apparatus (artificial intelligence response output apparatus 10010) according to the third embodiment of the present invention will be described with reference to FIG. 3E. This is also a description of an example of the operation of the character conversation system including the artificial intelligence response output apparatus 10010 and the large language model server 20001. Specifically, FIG. 3E shows examples of the main message of the prompt sent from the artificial intelligence response output apparatus 10010 to the large language model server 20001 and the main message of the server response which is the response to the prompt. This becomes the basis of the conversation between the user 230 and the character 19051 displayed on the artificial intelligence response output apparatus 10010.

FIG. 3E shows an example of a new conversation in which the user 230 speaks to the character 19051 again after the continuation of a series of conversations shown in FIG. 3D has ended. In the example of FIG. 3E, processing using the conversation history as described for the second embodiment with reference to FIGS. 2F, 2G, and 2I is not performed. Therefore, as in FIG. 2E of the second embodiment, FIG. 3E shows responses that do not contain contents such as the name of the large language model itself, the role it should play, conversational characteristics, the user's name, the conversation history, and the like in the setting prompt.

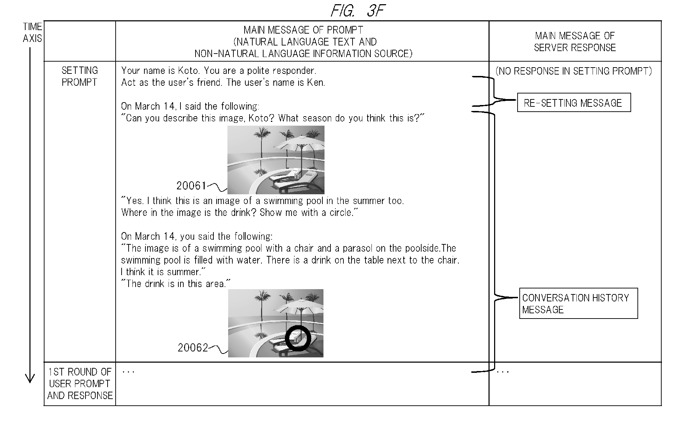

Next, an example of the operation of the character conversation apparatus (artificial intelligence response output apparatus 10010) according to the third embodiment of the present invention will be described with reference to FIG. 3F. This is also a description of an example of the operation of the character conversation system including the artificial intelligence response output apparatus 10010 and the large language model server 20001. Specifically, FIG. 3F shows examples of the main message of the prompt sent from the artificial intelligence response output apparatus 10010 to the large language model server 20001 and the main message of the server response which is the response to the prompt. This becomes the basis of the conversation between the user 230 and the character 19051 displayed on the artificial intelligence response output apparatus 10010.

FIG. 3F shows an example of a new conversation in which the user 230 speaks to the character 19051 again after the continuation of a series of conversations shown in FIG. 3D has ended. FIG. 3F is an example in which the method for storing a message that describes the history of past conversations in the setting prompt as described for the second embodiment with reference to FIG. 2F is applied to the character conversation apparatus (artificial intelligence response output apparatus 10010) according to the third embodiment. Specifically, in FIG. 3F, the message shown in FIG. 3D which is content of the setting prompt is stored as a re-setting message, and following the re-setting message, the message that describes the history of past conversations is stored as the conversation history message.

The large language model server 20001 according to the third embodiment is the multimodal large language that can process the non-natural language information source together with the natural language text information, and thus, there may be a case where transmitting or specifying of the non-natural language information source data has been performed in the past prompts and responses. Therefore, in the example of FIG. 3F, the conversation history message reflects not only the natural language text information from the past prompts and responses but also the transmitting or specifying of the non-natural language information source data of the past prompts and responses. The specific method for transmitting or specifying the non-natural language information source data in the prompt of FIG. 3F is the same as that of FIG. 3D, and thus, redundant descriptions thereof are omitted as appropriate.

In the example of FIG. 3D, the method for transmitting or specifying the non-natural language information source data includes a case where the non-natural language information source data itself is stored in (attached to) the prompt and a case where the non-natural language information source data is not stored in (attached to) the prompt. In this regard, the same can be applied to the prompt of FIG. 3F.

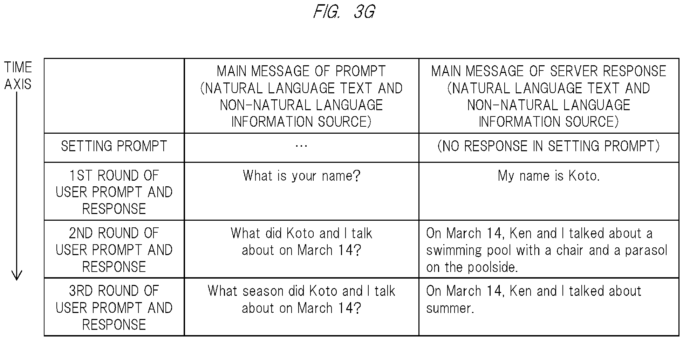

Next, an example of the operation of the character conversation apparatus (artificial intelligence response output apparatus 10010) according to the third embodiment of the present invention will be described with reference to FIG. 3G. This is also a description of an example of the operation of the character conversation system including the artificial intelligence response output apparatus 10010 and the large language model server 20001. Specifically, FIG. 3G shows examples of the main message of the prompt sent from the artificial intelligence response output apparatus 10010 to the large language model server 20001 and the main message of the server response which is the response to the prompt. This becomes the basis of the conversation between the user 230 and the character 19051 displayed on the artificial intelligence response output apparatus 10010.

FIG. 3G shows an example of a series of conversations shown in FIG. 3F, from the first round of user prompt and response following the first setting prompt to the third round of user prompt and its response. In FIG. 3G, the exchange of prompts and responses is shown in chronological order. Contents of the setting prompt are the same as those shown in FIG. 3F, and thus, redundant descriptions thereof are omitted as appropriate.

As described above, in a case where the large language model server 20001 having the multimodal large language model that can process the non-natural language information source together with the natural language text information according to the third embodiment, or in a case where a new conversation in which the user 230 speaks to the character 19051 again after the continuation of a series of conversations has ended takes place, performing the generation processing and transmission processing on the setting prompt of FIG. 3F allows the response following the user prompt to reflect the settings related to the character's role, name, conversational characteristics, personality, and/or conversational characteristics from the prior conversation and the conversation history as shown in FIG. 3G. In this manner, from the perspective of the user, the consistency of the settings related to the character's role, name, conversational characteristics, or personality and memories from the prior conversations is more effectively ensured, making it more suitable.

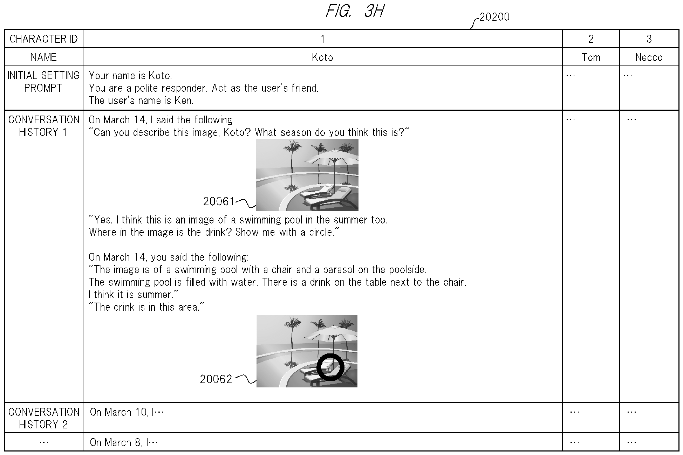

Next, an example of the operation of the character conversation apparatus (artificial intelligence response output apparatus 10010) according to the third embodiment of the present invention will be described with reference to FIG. 3H. This is also a description of an example of the operation of the character conversation system including the artificial intelligence response output apparatus 10010 and the large language model server 20001. Specifically, FIG. 3H is an explanatory diagram of a database 20200 for managing the character settings and the conversation history of the characters regarding the plurality of characters to be displayed on the display 10011 of the character conversation apparatus (artificial intelligence response output apparatus 10010). In FIG. 3H, the settings and the like displayed on the display 10011 of the character conversation apparatus (artificial intelligence response output apparatus 10010) for the plurality of characters uses the example of the second embodiment described with reference to FIG. 2H. Therefore, redundant descriptions of the settings and the like for the plurality of characters are omitted as appropriate.

In addition, the database 20200 for managing the character settings and the conversation history of the characters shown in FIG. 3H uses a similar format as the database 19200 of the second embodiment shown in FIG. 2I, and thus, only differences from the database 19200 shown in FIG. 2I will be described for FIG. 3H. In addition, only content regarding the character "Koto" in the database will be described, and descriptions of the content of other characters are omitted as appropriate.

Here, as described above, the large language model server 20001 according to the third embodiment is the multimodal large language model that can process the non-natural language information source together with the natural language text information, and thus, the prompt from the character conversation apparatus (artificial intelligence response output apparatus 10010) and the response from the large language model server 20001 includes the natural language text information and the transmitting or specifying of the non-natural language information source data. Therefore, in the database 20200 shown in FIG. 3H, the natural language text information in these prompts and responses, and the information on the transmitting or specifying of the non-natural language information source data are recorded in the data of the conversation history. The specific method for transmitting or specifying the non-natural language information source data in the recording of the conversation history is the same as that of FIG. 3D, and thus, redundant descriptions thereof are omitted as appropriate.

In the example of FIG. 3D, the method for transmitting or specifying the non-natural language information source data includes a case where the non-natural language information source data itself is stored in (attached to) the prompt and a case where the non-natural language information source data is not stored in (attached to) the prompt. In this regard, the same can be applied to the conversation history of FIG. 3H. However, in the conversation history of FIG. 3H, in a case where the location information and file name information of the non-natural language information source file in the server (the second server 19002 functioning as the intermediate server or other cloud servers) on the network such as the Internet is specified as the method for specifying the non-natural language information source data, it is possible for the non-natural language information source file to be deleted from the server if the period of the conversation history becomes lengthy. In such a case, it may no longer be possible to acquire the non-natural language information source file at a later date even if the location information and file name information, causing a loss of conversation record information.

To prevent this, when converting the message of the prompt and response to store it in the conversation history, the character conversation apparatus (artificial intelligence response output apparatus 10010) may acquire the non-natural language information source file itself specified in the prompt and response from the server or the like on the network using the location information and file name information and store it in the storage 1170. Further, the location information and file name of the non-natural language information source file may be replaced with the location information on the Internet (such as the URL) indicating the media server among the media servers constructed by the character operation program of the character conversation apparatus (artificial intelligence response output apparatus 10010) in the character conversation apparatus (artificial intelligence response output apparatus 10010), and this may be recorded in the conversation record. This makes it possible to as long as the character conversation apparatus (artificial intelligence response output apparatus 10010) itself does not delete the non-natural language information source file from the storage 1170, the loss of the conversation record information from the non-natural language information source can be prevented, making it more suitable for preserving the conversation record.

From the perspective of the user, in a case where the character conversation apparatus (artificial intelligence response output apparatus 10010) is configured to switch from the character displayed on the display 10011 to another character among the plurality of character candidates, using the database described above with reference to FIG. 3H allows the user to feel less uncomfortable during the conversation with each character, share memories with the plurality of characters, and achieve a more enjoyable character conversation experience as in the effect of the second embodiment described with reference to FIG. 2I. This effect can be achieved even in a case where the large language model server 20001 is the multimodal large language model that can process the non-natural language information source together with the natural language text information.

Note that, in the character conversation apparatus (artificial intelligence response output apparatus 10010) and the character conversation system according to the third embodiment, the multimodal large language model artificial intelligence that can process the non-natural language information together with the natural language text information is used in the large language model server 20001.

Here, communication between the character conversation apparatus (artificial intelligence response output apparatus 10010) and the large language model server 20001 is performed using the API. In the multimodal large language model, the API usage fees may be charged based on the data volume of the non-natural language information source in addition to the natural language text information including the number of tokens which is the processing amount of word units that make up a sentence.

Thus, the following modifications can be used in order to provide a less costly character conversation service according to the character conversation system according to the present embodiment to the user.

In the first modification, when the conversation history is recorded in the database of FIG. 3H, information regarding the transmitting or specifying of the non-natural language information source data is also recorded. However, the character and the user exchange conversations regarding the non-natural language information source data in the form of natural language text information, and the content is recorded as natural language text information. Therefore, when recording the conversation history in the database of FIG. 3H, even if the recording of the information regarding the transmitting or specifying of the non-natural language information source data is omitted, the conversation itself regarding the non-natural language information source data is recorded to some extent as natural language text information. Therefore, if a certain degree of information loss is acceptable, recording of the information regarding the transmitting or specifying of the non-natural language information source data can be omitted when recording the conversation history in the database of FIG. 3H. In this case, the information regarding the transmitting or specifying of the non-natural language information source data is also omitted from the conversation history message of the setting prompt of FIG. 3F. In this manner, the amount of data in the non-natural language information source communicated using the API can be reduced.

Next, in the second modification, when the conversation history is recorded in the database of FIG. 3H, instead of recording the information regarding the transmitting or specifying of the non-natural language information source data, the natural language text information indicating the content of the non-natural language information source data is recorded. The natural language text information indicating the content of the non-natural language information source data may be acquired by, for example, initiating a conversation between the large language model of the large language model server 20001 and the character conversation apparatus (artificial intelligence response output apparatus 10010) as a separate conversation with the character , and having the large language model server 20001 specify and describe the content of the non-natural language information source data within a predetermined word limit. In addition, engaging in conversation with other large language models on other servers that are less costly to use than the large language model of the large language model server 20001 makes it possible to acquire the content of the non-natural language information source data by specifying and describing the content within the predetermined word limit. In addition, in a case where alternative text data is available at the time of acquisition of the non-natural language information source data, the alternative text data may be the natural language text information indicating the content of the non-natural language information source data. Specific examples of the alternative text data of the non-natural language information source data include the text information indicated by "****" in the tags of the markup language such as <img src =" "alt="****">, <video src =" "alt="****">, and <audio src =" "alt="****">.

In addition, in a case where the JSON format is used, for an object that stores the location information and file name information of the non-natural language information source data which are keys and values indicating the location information of the non-natural language information source data, it is sufficient to store a key corresponding to the alternative text and a value linked with the alternative text data itself.

In this case also, when the conversation history is recorded in the database of FIG. 3H, recording of the information regarding the transmitting or specifying of the non-natural language information source data can be omitted, and the information regarding the transmitting or specifying of the non-natural language information source data can be omitted from the conversation history message of the setting prompt of FIG. 3F. In this manner, the amount of data in the non-natural language information source communicated using the API can be reduced.

Next, in a third modification, at the time of the first round of user prompt of FIG. 3D, the information regarding the transmitting or specifying of the non-natural language information source data is not stored in user prompt, and is replaced with the natural language text information indicating the content of the non-natural language information source data. For example, in the first round of user prompt of FIG. 3D, the information regarding the transmitting or specifying of the non-natural language information source data 20061 is replaced with the user prompt "The image is of a swimming pool with a chair and a parasol on the poolside. The swimming pool is filled with water. There is a drink on the table next to the chair". This description may be stored as the natural language text information. At this time, the description may be acquired by having other large language models of other servers that are less costly to use than the large language model of the large language model server 20001 specify and describe the content of the non-natural language information source data within the predetermined word limit. In addition, the description may be acquired from other servers of various services that can acquire an overview or description of the non-natural language information source data such as the image, video, or audio. In addition, in a case where alternative text data is available at the time of acquisition of the non-natural language information source data, the alternative text data may be the natural language text information indicating the content of the non-natural language information source data.

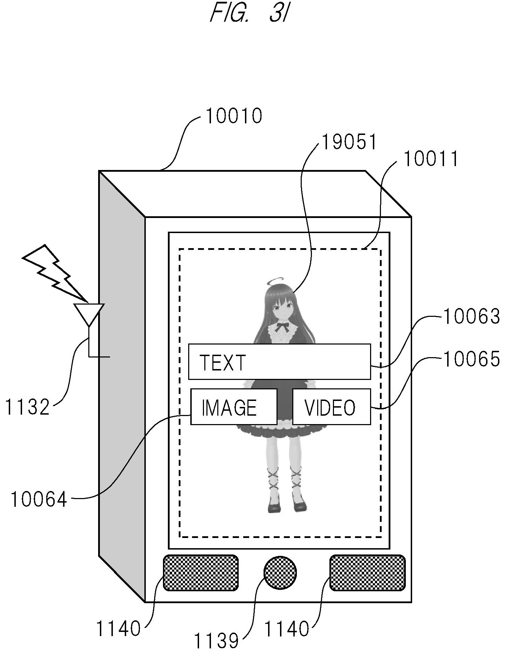

Next, a display example of the character conversation apparatus (artificial intelligence response output apparatus 10010) according to the third embodiment of the present invention will be described with reference to FIG. 3I. In the example of FIG. 3I, the response from the large language model for the prompt from the user described with reference to the drawings of FIGS. 3A to 3H is displayed on the display 10011 of the character conversation apparatus (artificial intelligence response output apparatus 10010). Specifically, FIG. 3I is an example in which the text 10063 of the natural language information source data which is the response from the large language model, the image 10064 of the non-natural language information source data, and/or the video 10065 of the non-natural language information source data are displayed on the display 10011 together with the image of the character 19051. The text 10063 which is the response from the large language model, the image 10064, and/or the video 10065 may be displayed overlapping the image of the character 19051 as shown in FIG. 3I.

In addition, the text 10063 which is the response from the large language model, the image 10064, and/or the video 10065 may be displayed together with the image of the character 19051 without overlapping the image of the character 19051. The display of FIG. 3I is merely an example. For example, in a case where the user 230 adjusts the volume of the audio output of the audio output unit 1140 of the character conversation apparatus (artificial intelligence response output apparatus 10010) to its minimum or sets the audio output to OFF by operating the operation input unit 1107 or the touch operation input sensor of the display 10011, the user 230 will no longer be able to hear the response from the large language model. Thus, in this case, the controller 1110 may control a display mode to start displaying the text 10063 which is the response from the large language model, the image 10064, and/or the video 10065 together with the image of the character 19051 as shown in FIG. 3I.

This makes it possible for the user 230 to use the character conversation apparatus (artificial intelligence response output apparatus 10010) when the user wishes to suppress the audio output. Note that a configuration may be provided in which the user 230 can manually switch the ON/OFF of the display mode that displays the text 10063 which is the response from the large language model, the image 10064, and/or the video 10065 together with the image of the character 19051 by the operation via the operation input unit 1107 or the touch operation input sensor of the display 10011. According to the display example of FIG. 3I, in the multimodal character conversation apparatus (artificial intelligence response output apparatus 10010), it is possible to output a more suitable response from the large language model.

According to the above-described character conversation apparatus and character conversation system according to the third embodiment, in addition to the effects of the character conversation apparatus and character conversation system according to the second embodiment, a more advanced conversation experience including the information regarding the natural language and non-natural language can be provided to the user using the multimodal large language model. In addition, according to the character conversation apparatus and the character conversation system according to the third embodiment, a less costly character conversation service can be provided to the user.

Note that, in the third embodiment, an example of using the large language model of the large language model server 20001 as the large language model has been described. Alternatively, the character conversation apparatus (artificial intelligence response output apparatus 10010) may comprise the local LLM processor 10028 shown in FIG. 1B and may use the multimodal large language model of the local LLM processor 10028. In this case, the multimodal large language model of the local LLM processor 10028 may be used instead of the multimodal large language model of the large language model server 20001.

In this case, in the above description, the multimodal large language model of the large language model server 20001 according to the third embodiment may be replaced with the multimodal large language model of the local LLM processor 10028 of the character conversation apparatus (artificial intelligence response output apparatus 10010). In this case also, a more advanced conversation experience including the information of the natural language and non-natural language can be provided to the user using the multimodal large language model. Note that, in a case where the multimodal large language model of the local LLM processor 10028 is used instead of the multimodal large language model of the large language model server 20001, there is less need to consider the usage fees based on the number of processing tokens and the data volume of the non-natural language information source. However, even when using the multimodal large language model of the local LLM processor 10028, reducing the number of processing tokens and the data volume of the non-natural language information source can reduce the consumption of resources such as power required for inference. In this case, the character conversation service that consumes less power can be provided to the user.

Note that the configuration of the second embodiment in which the conversation history with the character and data from the database including the conversation history with the character is uploaded and downloaded to and from the second server 19002 or other cloud servers can be applied to example of the third embodiment that uses the multimodal large language model. In this case also, when conversations with one character or a plurality of characters are to take place across different apparatuses, at different timings multiple times, it is possible to achieve conversations with the characters with the memory of each character being virtually carried over from the previous conversation, making it more suitable for the user.

### <Fourth Embodiment>

Next, a fourth embodiment of the present invention is a modified version of the artificial intelligence response output apparatus 10010, the character conversation apparatus, or systems thereof according to the second embodiment or the third embodiment described with reference to the drawings. In the present embodiment, only differences from the second embodiment or the third embodiment will be described, and descriptions of configurations similar to those of the embodiments will be omitted as appropriate.

As in the above-described embodiments, the artificial intelligence response output apparatus 10010 may also be referred to as an artificial intelligence response output apparatus, an AI assistant apparatus, an AI assistant display apparatus, or an artificial intelligence interface apparatus. The system including the artificial intelligence response output apparatus 10010 and the large language model server may also be referred to as an artificial intelligence response output system, an AI assistant system, an AI assistant display system, or an artificial intelligence interface system.

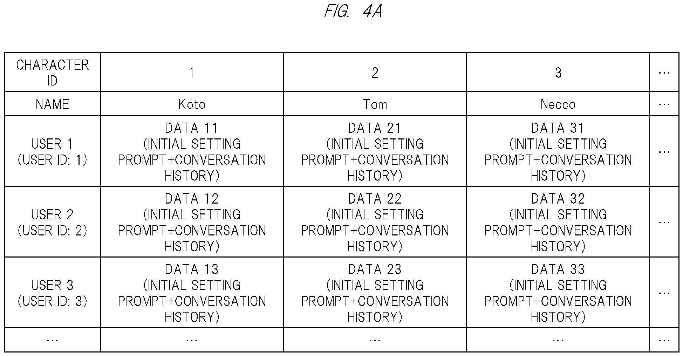

An example of the operation using the database in the character conversation apparatus (artificial intelligence response output apparatus 10010) according to the fourth embodiment of the present invention will be described with reference to FIG. 4A. The database according to the fourth embodiment shown in FIG. 4A is an extension of the database described with reference to FIG. 2I or 3I. Specifically, the database shown in FIG. 4A is designed for a case where multiple users use the same character conversation apparatus (artificial intelligence response output apparatus 10010) or the same character conversation system, and the initial setting prompt and conversation history corresponding to each user and character is stored in the database.

In the example of FIG. 4A, for User 1 whose user ID is 1, the initial setting prompt and conversation history is stored for each character: character Koto whose character ID is 1, character Tom whose character is ID 2, and character Necco whose character ID is 3. In addition, for User 2 whose user ID is 2 and User 3 whose user ID is 3, the initial setting prompt and conversation history is stored for each character: character Koto whose character ID is 1, character Tom whose character ID is 2, and character Necco whose character ID is 3.

Data of these initial setting prompts and conversation histories are stored as separate data in different areas for each combination of user and character. In FIG. 4A, for explanatory purposes, the data stored in each area is indicated as Data 11, 12, 13, 21, 22, 23, 31, 32, or 33. The controller 1110 of the character conversation apparatus (artificial intelligence response output apparatus 10010) uses the initial setting prompts and conversation histories stored in different areas for each combination of user and character based on the user currently using (logged into) the character conversation apparatus (artificial intelligence response output apparatus 10010) or its system to maintain the consistency of the character's personality and continuity of its memory in a manner more suitable for each user.

Specifically, consider a situation where User 1 is conversing with character Tom using the character conversation apparatus (artificial intelligence response output apparatus 10010), and User 2 is unaware of that conversation and starts a conversation with character Tom. At this time, if the artificial intelligence response output apparatus 10010 uses the initial setting prompt or the conversation history database that does not identify the user, the response output generated by the artificial intelligence response output apparatus 10010 would be based on conversation history that User 2 has no memory of, and the conversation between User 2 and the character of the artificial intelligence response output apparatus 10010 would contain inconsistencies.

Alternatively, even under a similar situation, by using the database shown in FIG. 4A, the controller 1110 of the character conversation apparatus (artificial intelligence response output apparatus 10010) identifies the user by ID, stores the initial setting prompt and conversation history in different areas for each user, and uses the initial setting prompt and conversation history stored in different areas for each user to generate an artificial intelligence response. In this manner, the initial setting prompt and conversation history used to generate the artificial intelligence response for each user are based on the user's operation or conversation and are managed separately from those of other users. In this manner, a more consistent conversation history between each user and each character of the artificial intelligence response output apparatus 10010 can be achieved.

Note that the database for the initial setting prompt and/or conversation history described with reference to FIG. 4A may be stored in the storage 1170 of the artificial intelligence response output apparatus 10010 and may be used by the controller 1110. In addition, the database for the initial setting prompt and/or conversation history may be stored in the server on the network. For example, in a case where the artificial intelligence response output apparatus 10010 uses the large language model of the large language model server 19001 or the multimodal large language model of the large language model server 20001 when generating the artificial intelligence response, the database for the initial setting prompt and/or conversation history described with reference to FIG. 4A may be stored in the server itself. This makes it possible to omit the processing of including the initial setting prompt and conversation history in the prompt and resending them from the artificial intelligence response output apparatus 10010 to the server and achieve token savings regarding the large language model usage.

In a case where the database for the initial setting prompt and/or conversation history described with reference to FIG. 4A is stored, the user ID, character ID, and the user prompt for subsequent conversations may be sent from the artificial intelligence response output apparatus 10010 to the server. The large language model on the server uses the user ID and character ID acquired from the artificial intelligence response output apparatus 10010, and acquires the corresponding initial setting prompt and conversation history from the database for the initial setting prompt and/or conversation history of FIG. 4A. The large language model on the server may use the initial setting prompt and conversation history and the user prompt for subsequent conversations sent from the artificial intelligence response output apparatus 10010 to execute inference, generate the artificial intelligence response, and send it to the artificial intelligence response output apparatus 1001. This makes it possible to achieve an effect of maintaining the consistency of the character's personality and continuity of its memory in a manner more suitable for each user while achieving token savings regarding the large language model usage.

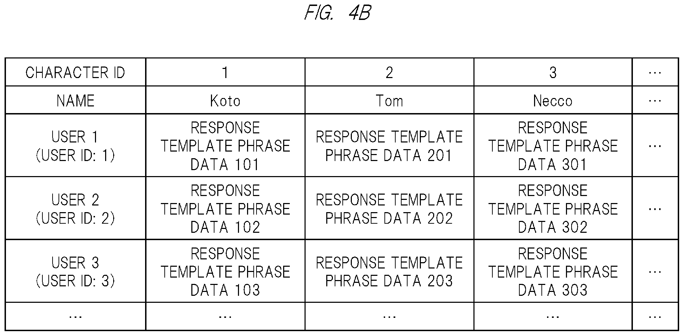

Next, an example of the operation using the database in the character conversation apparatus (artificial intelligence response output apparatus 10010) according to the fourth embodiment of the present invention will be described with reference to FIG. 4B. The database according to the fourth embodiment shown in FIG. 4B is an extension of the database described with reference to FIG. 1C or 2L. Specifically, the database shown in FIG. 4B is designed for a case where multiple users use the same character conversation apparatus (artificial intelligence response output apparatus 10010) or the same the character conversation system, and data of the response template phrase corresponding to each user and character is stored in the database.

In the example of FIG. 4B, for User 1 whose user ID is 1, response template phrase data is stored for each character: character Koto whose character ID is 1, character Tom whose character is ID 2, and character Necco whose character ID is 3. In addition, for User 2 whose user ID is 2 and User 3 whose user ID is 3, the response template phrase data is stored for each character: character Koto whose character ID is 1, character Tom whose character is ID 2, and character Necco whose character ID is 3.

Data of these response template phrases are stored as separate data in different areas for each combination of user and character. In FIG. 4B, for explanatory purposes, the data stored in each area is indicated as Response Template Phrase Data 101, 102, 103, 201, 202, 203, 301, 302, or 303. For example, Response Template Phrase Data 101 stores the database including a table corresponding to the response template phrases for Conditions 1 to 7 for Character 1 named Koto shown in FIG. 2L. Data 201 of FIG. 4B stores the database including a table corresponding to the response template phrases for Conditions 1 to 7 for Character 2 named Tom shown in FIG. 2L.

Data 301 of FIG. 4B stores the database including a table corresponding to the response template phrases for Conditions 1 to 7 for Character 3 named Necco shown in FIG. 2L. Data 102, 202, and 302 of FIG. 4B use a similar format and are stored with response template phrases changed for User 2. Data 103, 203, and 303 of FIG. 4B use a similar format and are stored with response template phrases changed for User. The controller 1110 of the character conversation apparatus (artificial intelligence response output apparatus 10010) uses the response template phrase data stored in different areas for each combination of user and character based on the user currently using (logged into) the character conversation apparatus (artificial intelligence response output apparatus 10010) or its system.

This makes it possible for the same character to respond with a different response template phrase for each user. That is, even if the same character is used, varying the content of the response template phrase may be more suitable depending on the relationship between the character and the user. For example, depending on the relationship between the age set for the character and the age of the user registered in the artificial intelligence response output apparatus 10010 or system, the user may be older than the character, the same age as the character, or younger than the character. At this time, it is preferable to vary the content of the character's response template phrase for older users, same-age users, and younger users for a more suitable or more natural conversation between the user and the character. That is, performing an operation using the database of FIG. 4B makes it possible to vary the content of the response template phrase in accordance with the relationship between the character and the user and create a more suitable or more natural conversation.

Note that the response template phrase database (response template phrase DB) described above with reference to FIG. 4B is stored in the storage 1170, and the controller 1110 of the artificial intelligence response output apparatus 10010 may use this database. However, the response template phrase database (response template phrase DB) shown in FIG. 4B may be provided on the large language model server 19001 side or the large language model server 20001 side. In this case, the controller of the large language model server 19001 or the controller of the large language model server 20001 may generate a response using the response template phrase database (response template phrase DB). The controller of the large language model server 19001 or the controller of the large language model server 20001 may send the response generated using the response template phrase database (response template phrase DB), instead of the response generated by the large language model stored in each server, to the artificial intelligence response output apparatus 10010. This makes it possible to generate a response using the response template phrase database (response template phrase DB) even if the artificial intelligence response output apparatus 10010 does not have a response template phrase database (response template phrase DB).

According to the above-described character conversation apparatus and character conversation system according to the fourth embodiment, it is possible to create a more suitable or more natural conversation in accordance with the relationship or the conversation history between the character and the user.

### <Fifth Embodiment>

Next, a fifth embodiment of the present invention is a modified version of the artificial intelligence response output apparatus 10010 or the artificial intelligence response output system of the first embodiment, the second embodiment, and the third embodiment described with reference to the drawings. Specifically, it is an example in which a process is performed where a response generation processing of the artificial intelligence response output apparatus 10010 is switched from the response generation processing of the large language model on the network to the response generation processing by the local large language model of the artificial intelligence response output apparatus 10010 (such as the local LLM processor 10028) or to the response generation processing by the response template phrase database. In the present embodiment, only differences from the above-described embodiments will be described, and descriptions of configurations similar to those of the embodiments will be omitted as appropriate.

As in the above-described embodiments, the artificial intelligence response output apparatus 10010 may also be referred to as an artificial intelligence response output apparatus, a character conversation apparatus, an AI assistant apparatus, an AI assistant display apparatus, or an artificial intelligence interface apparatus. The system including the artificial intelligence response output apparatus 10010 and the large language model server may also be referred to as an artificial intelligence response output system, a character conversation system, an AI assistant system, an AI assistant display system, or an artificial intelligence interface system.

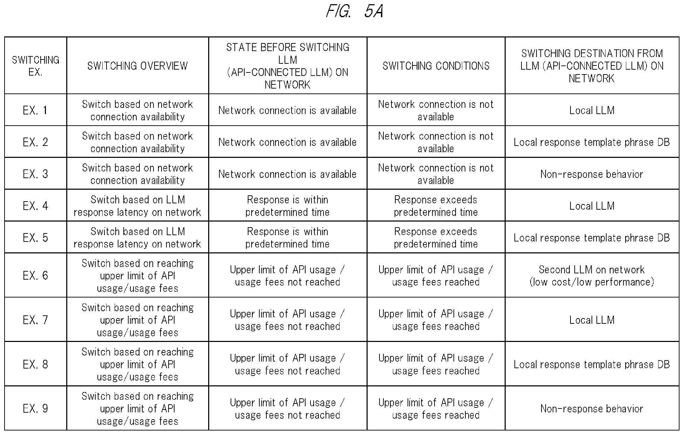

An example of switch processing of the response generation processing in the artificial intelligence response output apparatus 10010 according to the fifth embodiment of the present invention will be described with reference to FIG. 5A. The table of FIG. 5A shows Examples 1 to 9 as examples of the switch processing of the response generation processing in the artificial intelligence response output apparatus 10010. In the table of FIG. 5A, the column "SWITCHING OVERVIEW" shows an overview of the switch processing for each example. The column "STATE BEFORE SWITCHING LLM (API-CONNECTED LLM) ON NETWORK" shows the state before the response generation processing is switched to another response generation processing by the large language model of the large language model server 19001 of FIG. 1 and the large language model on the network (large language model connected using the API) such as the multimodal large language model of the large language model server 20001 for each example. The column "SWITCHING CONDITIONS" shows the condition at which the switch processing of the response generation processing occurs for each example. The column "SWITCHING DESTINATION FROM LLM (API-CONNECTED LLM) ON NETWORK" shows the switching destination to which the response generation processing of the artificial intelligence response output apparatus 10010 is switched from the large language model of the large language model server 19001 and the large language model on the network (large language model connected using the API) such as the multimodal large language model of the large language model server 20001. In a case where the condition shown in "SWITCHING CONDITIONS" of FIG. 5A occurs while in the state shown in "STATE BEFORE SWITCHING LLM (API-CONNECTED LLM) ON NETWORK", The controller 1110 of the artificial intelligence response output apparatus 10010 may perform controls to switch to the large language model, the database, or the behavior shown in "SWITCHING DESTINATION FROM LLM (API-CONNECTED LLM) ON NETWORK".

Hereinafter, examples shown in the table of FIG. 5A will be described. As shown in "SWITCHING OVERVIEW", Example 1 is an example in which switching is performed depending on network connection availability of the artificial intelligence response output apparatus 10010. In Example 1, "STATE BEFORE SWITCHING LLM (API-CONNECTED LLM) ON NETWORK" shows that network connection of the artificial intelligence response output apparatus 10010 is available. Here, in Example 1, "SWITCHING CONDITIONS" shows a case where the network connection is not available. This means that the connection between the artificial intelligence response output apparatus 10010 and the large language model on the network (large language model connected using the API) via the network is not available. Specifically, the connection may not be available when communication in a connection path between the artificial intelligence response output apparatus 10010 to the Internet 19000 is not available. Alternatively, the connection may not be available when communication with the Internet 19000 itself is not available. Alternatively, the connection may not be available when the large language model on the network (large language model connected using the API) itself cannot connect to the Internet 19000. In addition, in Example 1, "SWITCHING DESTINATION FROM LLM (API-CONNECTED LLM) ON NETWORK" shows "Local LLM". This specifically means that the switch processing to the response generation processing is performed by the local LLM processor 10028 of the artificial intelligence response output apparatus 10010. That is, in Example 1, even if the connection with the large language model on the network (large language model connected using the API) is not available for some reason, and the response generation processing by the large language model on the network (large language model connected using the API) cannot be used, switching to the response generation processing is performed by the local LLM processor 10028 of the artificial intelligence response output apparatus 10010. In this manner, despite differences in performance as large language models, it is possible to continue the response generation processing using the large language model.

Next, Example 2 of FIG. 5A will be described. Example 2 is an example in which "SWITCHING DESTINATION FROM LLM (API-CONNECTED LLM) ON NETWORK" of Example 1 is changed from "Local LLM" to "Response template phrase DB (database)". The response generation processing by the response template phrase DB (database) is the same as those of FIG. 1C, 2L, or 4B, and thus, redundant descriptions thereof are omitted as appropriate. That is, in Example 2, if the connection with the large language model on the network (large language model connected using the API) is not available for some reason, and the response generation processing by the large language model on the network (large language model connected using the API) cannot be used, switching to the response generation processing using the response template phrase database makes it is possible to generate a response and output the response to the user through simpler processing.

Next, Example 3 of FIG. 5A will be described. Example 3 is an example in which "SWITCHING DESTINATION FROM LLM (API-CONNECTED LLM) ON NETWORK" of Example 1 is changed from "Local LLM" to "Non-response behavior". Non-response behavior means that, even if the user input by the user requesting a response to the large language model is received via the touch panel, the microphone 1139, or the operation input unit 1107, no response for this input is generated, or a response for this input is not output. That is, in Example 3, it is possible to simplify the processing in a case where the connection with the large language model on the network (large language model connected using the API) is not available for some reason, and the response generation processing by the large language model on the network (large language model connected using the API) cannot be used.

Next, Example 4 of FIG. 5A will be described. As shown in "SWITCHING OVERVIEW", Example 4 is an example in which switching is performed by response latency of the LLM on the network. In Example 4, "STATE BEFORE SWITCHING LLM (API-CONNECTED LLM) ON NETWORK" shows that the response from the LLM on the network is acquired within a predetermined time. Here, in Example 4, "SWITCHING CONDITIONS" shows a case where the response from the LLM on the network is not acquired within the predetermined time and exceeds the predetermined time. In addition, in Example 4, "SWITCHING DESTINATION FROM LLM (API-CONNECTED LLM) ON NETWORK" shows "Local LLM". The local LLM of the switching destination is the same as that of Example 1, and thus, redundant descriptions thereof are omitted as appropriate. That is, in Example 4, even if the response from the LLM on the network (large language model connected using the API) exceeds the predetermined time for some reason and the response generation processing by the LLM on the network (large language model connected using the API) cannot be used smoothly, switching to the response generation processing is performed by the local LLM processor 10028 of the artificial intelligence response output apparatus 10010. In this manner, despite differences in performance as large language models, it is possible to continue the response generation processing using the large language model.

Next, Example 5 of FIG. 5A will be described. Example 2 is an example in which "SWITCHING DESTINATION FROM LLM (API-CONNECTED LLM) ON NETWORK" of Example 4 is changed from "Local LLM" to "Response template phrase DB (database)". The response generation processing by the response template phrase DB (database) is the same as those of FIG. 1C, 2L, or 4B, and thus, redundant descriptions thereof are omitted as appropriate. That is, in Example 5, if the response from the LLM on the network (large language model connected using the API) exceeds the predetermined time for some reason and the response generation processing by the LLM on the network (large language model connected using the API) cannot be used smoothly, switching to the response generation processing is performed using the response template phrase database makes it is possible to generate a response and output the response to the user through simpler processing.

Next, Examples 6 to 9 of FIG. 5A will be described. As shown in "SWITCHING OVERVIEW", Examples 6 to 9 are examples in which switching is performed depending on whether the upper limit of the API usage or usage fees has been reached. Here, as described in the second embodiment, the provider of the large language model often recovers the costs incurred in the training of the large language model from the user of the terminal as API usage fees. At this time, in the natural language model, the API usage fees may be charged based on the number of tokens which is the processing amount of word units that make up a sentence. Here, various billing methods and restrictions can be considered for API usage fees. One option is to use token processing counts to specify the upper limit of the service of the large language model that the user can receive in a standard status.

In this case, the user can use the service that utilizes the large language model at the predetermined API usage fee until the predetermined usage amount (or corresponding usage fee) is reached. Once the upper limit of the usage amount (or corresponding usage fee) is reached, certain restrictions may apply, such as the inability to receive the service of the large language model in the standard status (performance or frequency).

Examples 6 to 9 of FIG. 5A are examples in which controls to switch the response generation processing are performed by the controller 1110 of the artificial intelligence response output apparatus 10010 when the above-described restrictions are applied in the service of the large language model. Specifically, In Example 6, "STATE BEFORE SWITCHING LLM (API-CONNECTED LLM) ON NETWORK" shows a state where the predetermined upper limit of the API usage or usage fees is not reached. This means that upper limit of the usage of the LLM on the network (API-connected LLM) is not yet reached. At this time, the user can use the LLM on the network (API-connected LLM) in the standard status.

Here, in Example 6, "SWITCHING CONDITIONS" shows a case where the predetermined upper limit of the API usage or API usage fees has been reached. This means that the predetermined upper limit of the usage of the LLM on the network (API-connected LLM) has been reached. In addition, in Example 6, "SWITCHING DESTINATION FROM LLM (API-CONNECTED LLM) ON NETWORK" shows a second LLM on the network that differs from the LLM (also referred to as first LLM) used in the standard status. An example of the second LLM on the network is an LLM that is less costly than the first LLM used in the standard status. As the second LLM is less costly, its performance is likely to be lower than that of the first LLM. However, even in this case, there is still a significant advantage if the second LLM allows for the continued use of the large language model at a lower cost after reaching the upper limit of the usage/usage fees of the first LLM.

Next, Example 7 of FIG. 5A will be described. In Example 7, "SWITCHING DESTINATION FROM LLM (API-CONNECTED LLM) ON NETWORK" has been changed from the second LLM on the network of Example 6 that differs from the LLM (also be referred to as first LLM) used in the standard status to "Local LLM". In Example 7, even if the predetermined upper limit of the API usage or the API usage fees has been reached, that is, even if the predetermined upper limit of the usage of the LLM on the network (API-connected LLM) has been reached, switching to the response generation processing using the local LLM to which restrictions on the usage of the LLM on the network, the API usage, or the API usage fees does not apply makes it possible to continue with the response generation processing using the large language model.

Next, Example 8 of FIG. 5A will be described. In Example 8, "SWITCHING DESTINATION FROM LLM (API-CONNECTED LLM) ON NETWORK" has been changed from "Local LLM" of Example 7 to "Response template phrase DB (database)". The response generation processing by the response template phrase DB (database) is the same as those of FIG. 1C, 2L, or 4B, and thus, redundant descriptions thereof are omitted as appropriate. In Example 8, even if the predetermined upper limit of the API usage or the API usage fees has been reached, that is, even if the predetermined upper limit of the usage of the LLM on the network (API-connected LLM) has been reached, switching to the response generation processing using the response template phrase database to which restrictions on the usage of the LLM on the network, the API usage, or the API usage fees does not apply is performed. In this manner, it is possible to generate a response and output the response to the user through simpler processing.

Next, Example 9 of FIG. 5A will be described. In Example 9, "SWITCHING DESTINATION FROM LLM (API-CONNECTED LLM) ON NETWORK" has been changed from "Local LLM" of Example 7 to "Non-response behavior". Non-response behavior means that no response for the user is generated, or a response for the user is not output. In Example 9, it is possible to simplify the processing in a case where the predetermined upper limit of the API usage or the API usage fees, that is, the predetermined upper limit of the usage of the LLM on the network (API-connected LLM) is reached and the response generation processing by the large language model on the network (large language model connected using the API) cannot be used.

As described above, according to the switching controls of the response generation processing of the artificial intelligence response output apparatus 10010 shown in Examples 1 to 9 of FIG. 5A, even when the response generation processing by the LLM on the network (large language model connected using the API) cannot be used as usual, it is possible to perform switching or response that is more suitable for each situation.

Note that switching controls of Examples 1 to 9 of FIG. 5A may be performed by combining a plurality of examples. For example, the switching controls of Examples 1 to 3 may be combined with any of the controls of Examples 4 to 9. Likewise, the control of Example 4 or 5 may be combined with any of the controls of Examples 1 to 3 or 6 to 9. Likewise, the controls of Examples 6 to 9 may be combined with any of the controls of Examples 1 to 5.

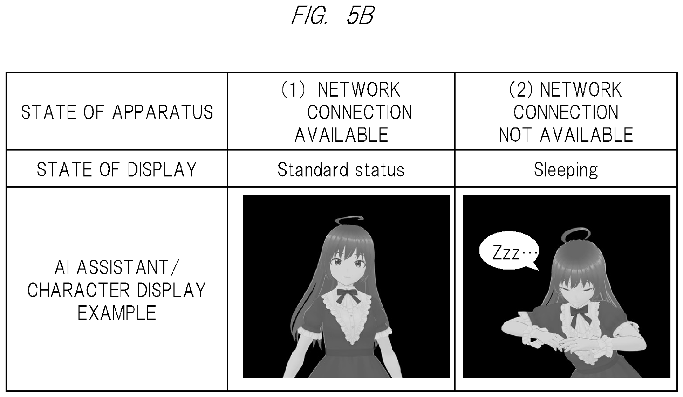

Next, display examples of the AI assistant or character in a case where the artificial intelligence response output apparatus 10010 according to the fifth embodiment is configured as the AI assistant apparatus or character conversation apparatus will be described with reference to FIGS. 5B to 5D.

First, FIG. 5B shows display examples of the AI assistant or character in the artificial intelligence response output apparatus 10010 in a case where the switching control shown in Example 3 of FIG. 5A is performed. In the example of FIG. 5B, a display state of the AI assistant or character is changed depending on the availability state of the network connection of the artificial intelligence response output apparatus 10010. The network availability of the artificial intelligence response output apparatus 10010 is as described with reference to FIG. 5A, and thus, redundant descriptions thereof are omitted as appropriate.

In the example shown in FIG. 5B, the artificial intelligence response output apparatus 10010 displays (1) the AI assistant or character awake in the standard status when the network connection is available, and (2) the AI assistant or character in a "sleeping" state when the network connection is not available. In the switching control of Example 3 of FIG. 5A, when the artificial intelligence response output apparatus 10010 is unable to connect to the network, no response is generated even if the user inputs a prompt, or the response is not output. At this time, the user may feel uncomfortable if the AI assistant or character displayed by the artificial intelligence response output apparatus 10010 is awake in the standard state. However, if the AI assistant or character displayed by the artificial intelligence response output apparatus 10010 is displayed in the sleeping state, the user can understand that "the AI assistant or character is not responding because it is sleeping", allowing the user to feel less uncomfortable.

Note that, in (2) of FIG. 5B, prior to the user input by the user requesting a response from the large language model via the touch panel, the microphone 1139, or the operation input unit 1107 of the artificial intelligence response output apparatus 10010, it is desirable that the user can understand that "the AI assistant or character is not responding because it is sleeping". Therefore, in a case where the network connection not available as shown in (2) of FIG. 5B, it is desirable that a timing for starting the state in which the AI assistant or character is displayed in the "sleeping" state is immediately after the point where the controller 1110 of the artificial intelligence response output apparatus 10010 determines that the network connection is not available, but before the user input by the user requesting a response from the large language model.

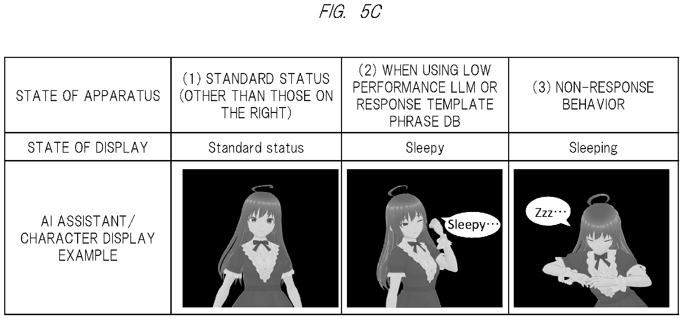

Next, other display examples will be described with reference to FIG. 5C. The display examples of FIG. 5C are examples in which the display state of the AI assistant or character is changed by the switching control of FIG. 5A depending on the state of "SWITCHING DESTINATION FROM LLM (API-CONNECTED LLM) ON NETWORK" in the table. Specifically, FIG. 5C shows (1) a display example of the AI assistant or character when connection between the artificial intelligence response output apparatus 10010 and the large language model on the network (large language model connected using the API) is available and when the response generation processing by the large language model on the network is available (standard status in the drawing), (2) a display example of the AI assistant or character when the artificial intelligence response output apparatus 10010 has switched to the response generation processing by the LLM or response template phrase database with a lower performance than the large language model on the network (large language model connected using the API), and (3) a display example of the AI assistant or character when the artificial intelligence response output apparatus 10010 is switched to the non-response behavior described with reference to FIG. 5A.

In the example of FIG. 5C, for example, when the artificial intelligence response output apparatus 10010 is in the "standard status" (1), the artificial intelligence response output apparatus 10010 displays the AI assistant or character in a state where there are no particular issues. Note that "standard status" in FIG. 5C may be considered to be any state other than states (2) and (3). In addition, for example, when the artificial intelligence response output apparatus 10010 has switched to the response generation processing by the LLM or response template phrase database with a lower performance than the large language model on the network (large language model connected using the API) (2), the artificial intelligence response output apparatus 10010 displays the AI assistant or character in a "sleepy" state. Note that "displaying the AI assistant or character in a "sleepy" state" may also be referred to as "display showing the AI assistant or character in a sleepy state".

The response generation processing of (2) is lower in performance than the response generation processing in the standard status by the large language model on the network (large language model connected using the API) of (1). Therefore, displaying the AI assistant or character in a "sleepy" state makes it possible to implicitly inform the user that the response performance of the AI assistant or character is low. In this manner, the user would feel less uncomfortable toward the low performance. Note that the switching condition in which the artificial intelligence response output apparatus 10010 switches to the response generation processing by the LLM or response template phrase database with a lower performance than the large language model on the network (large language model connected using the API) is as described with reference to FIG. 5A, and thus, redundant descriptions thereof are omitted as appropriate.

In addition, in (2) of FIG. 5C, prior to the user input by the user requesting a response from the large language model via the touch panel, the microphone 1139, or the operation input unit 1107 of the artificial intelligence response output apparatus 10010, it is desirable that the user is implicitly informed that the response performance of the AI assistant or character is low. Therefore, it is desirable that a timing for starting the state in which the AI assistant or character is displayed in a "sleepy" state as shown in (2) of FIG. 5C is immediately after the point where the artificial intelligence response output apparatus 10010 switches to the response generation processing by the LLM or response template phrase database with a lower performance than the large language model on the network (large language model connected using the API), but before the user input by the user requesting a response from the large language model.

In addition, for example, in a state where the artificial intelligence response output apparatus 10010 has switched to the non-response behavior described with reference to FIG. 5A, the artificial intelligence response output apparatus 10010 displays the AI assistant or character in the "sleeping" state (3). As described with reference to FIG. 5B, by allowing the artificial intelligence response output apparatus 10010 to display the AI assistant or character in the "sleeping" state, the user can understand that "the AI assistant or character is not responding because it is sleeping", allowing the user to feel less uncomfortable. Note that the switching condition in which the artificial intelligence response output apparatus 10010 switches to non-response behavior described with reference to FIG. 5A is as described for Example 3 or 9 of FIG. 5A, and thus, redundant descriptions thereof are omitted as appropriate. Note that, in (3) of FIG. 5C, prior to the user input by the user requesting a response from the large language model via the touch panel, the microphone 1139, or the operation input unit 1107 of the artificial intelligence response output apparatus 10010, it is desirable that the user can understand that "the AI assistant or character is not responding because it is sleeping". Therefore, as shown in (3) of FIG. 5C, it is desirable that a timing for starting the state in which the AI assistant or character is displayed in the "sleeping" state is immediately after the point where the artificial intelligence response output apparatus 10010 switches to the non-response behavior described with reference to FIG. 5A, but before the user input by the user requesting a response from the large language model.

Note that, in the display examples of FIG. 5C, the artificial intelligence response output apparatus 10010 displays the technical description of the state of the artificial intelligence response output apparatus 10010 regarding the response generation processing to the user by implicitly reflecting it as a change in the state of the AI assistant or character instead of directly providing the description to the user. In this manner, the user would feel less uncomfortable compared to directly providing the technical description of the state of the artificial intelligence response output apparatus 10010 regarding the response generation processing. In addition, the user would feel less uncomfortable compared to a case where the display state of the AI assistant or character is maintained in the standard status even if the state of the artificial intelligence response output apparatus 10010 regarding the response generation processing has changed.

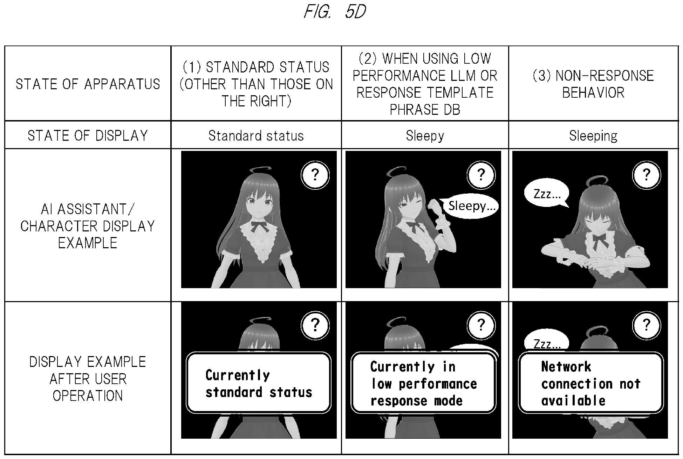

However, some users may want a more accurate technical description of each state. Thus, display examples for such users will be described with reference to FIG. 5D. The rows in the table shown in FIG. 5D corresponding to the state of the apparatus and the state of display are the same as those of FIG. 5C, and thus, redundant descriptions thereof are omitted as appropriate. In addition, the display examples of the AI assistant or character shown in the respective row are nearly identical to those of FIG. 5C, with the exception of a question mark (?) displayed in each display example. The question mark (?) is a mark that the user operates when requesting an explanation from the artificial intelligence response output apparatus 10010, and may also be referred to as a help mark.

In the example of FIG. 5D, the user selects the question mark (?) through the user operation via the touch panel or the like of the operation input unit 1107 or the display 10011 of FIG. 1B to change the display of the AI assistant or character on the artificial intelligence response output apparatus 10010 to the display examples shown in the row "DISPLAY EXAMPLE AFTER USER OPERATION". Specifically, the technical description of the state is displayed even if the state of apparatus is in (1), (2), or (3). For example, in the example of FIG. 5D, when the state of the apparatus is the standard status (1), "Standard status" may be displayed describing that the state is in the standard status where no particular technical restrictions are applied. In addition, when the apparatus is in a state where the low performance LLM or response template phrase database is being used (2), "Currently in low performance response mode" may be displayed technically describing that it is in the low performance state. This display may also be considered a description of why the AI assistant or character is displayed in a "sleepy" state.

In this case, a more detailed technical description may be provided. Specifically, "Currently in low performance LLM mode" or "Currently in template phrase response mode" or the like may be displayed. In addition, when the state of the apparatus is the non-response behavior (3), "Network connection not available" may be displayed technically describing that the reason for switching to the non-response behavior. If the reason for switching to the non-response behavior is that the response from the LLM on the network (large language model connected using the API) exceeds the predetermined time, "Response from LLM is delayed" or the like may be displayed. In addition, if the reason for switching to the non-response behavior is that the upper limit of the usage of the LLM on the network, the API usage, or the API usage fees have been reached, "Upper limit of LLM usage reached", "Upper limit of API usage reached", "the API usage fees as reached predetermined amount" or the like may be displayed. This display may also be considered a description of why the AI assistant or character is displayed in the "sleeping" state.

According to the display examples described above with reference to FIG. 5D, even if there are technical restrictions on the response generation processing in the artificial intelligence response output apparatus 10010, the user would feel less uncomfortable by first not providing a direct description to the user but instead implicitly indicating the state of the apparatus through changes in the display state of the AI assistant or character. This display is more suitable for users who do not require technical descriptions. Further, displaying the operation mark for the technical description of the state makes it possible to provide a display technically describing the state of the response generation processing (standard status or with technical restrictions) in the artificial intelligence response output apparatus 10010 to the user who has operated the mark. In this manner, it is possible to provide a more suitable display for the user who requires a more accurate technical description of each state.

Note that, in the examples of FIGS. 5B, 5C, and 5D, the display state of the AI assistant or character when in the "non-response behavior" is shown as being in the "sleeping" state. However, this is merely an example, and the embodiments of the present invention are not limited to this. Instead of the "sleeping" state, other display states that implicitly indicate an unresponsive situation "resting" may also be used. In addition, in the examples shown in FIGS. 5C and 5D, the display state of the AI assistant or character when using the low performance LLM or response template phrase database is shown as being in the "sleepy" state. However, this is merely an example, and the embodiments of the present invention are not limited to this. Other display states that implicitly indicate a low response performance of the AI assistant or character such as "hungry" may also be used.

According to the above-described artificial intelligence response output apparatus and artificial intelligence response output system according to the fifth embodiment, it is possible to switch the response generation processing used by the artificial intelligence response output apparatus more suitably depending on the connection state between the large language model on the network and the artificial intelligence response output apparatus, the response latency state from the large language model on the network, or the usage of the large language model on the network. In addition, in a case where the artificial intelligence response output apparatus according to the fifth embodiment is configured as the AI assistant apparatus or character conversation apparatus, it is possible to provide a display that is less uncomfortable for the user.

### <Sixth Embodiment>

Next, a sixth embodiment of the present invention is a modified version of the artificial intelligence response output apparatus 10010 or the artificial intelligence response output system according to the first to fifth embodiments described with reference to the drawings. Specifically, this example combines the response generation processing of the artificial intelligence response output apparatus 10010 and the response generation processing by the large language model on the network or the response generation processing by the local large language model of the artificial intelligence response output apparatus 10010 (local LLM processor 10028 or the like) and the response generation processing by the response template phrase database to generate a more suitable response output. In the present embodiment, only differences from the above-described embodiments will be described, and descriptions of configurations similar to those of the embodiments will be omitted as appropriate.

As in the above-described embodiments, the artificial intelligence response output apparatus 10010 may also be referred to as an artificial intelligence response output apparatus, a character conversation apparatus, an AI assistant apparatus, an AI assistant display apparatus, or an artificial intelligence interface apparatus. The system including the artificial intelligence response output apparatus 10010 and the large language model server may also be referred to as an artificial intelligence response output system, a character conversation system, an AI assistant system, an AI assistant display system, or an artificial intelligence interface system.

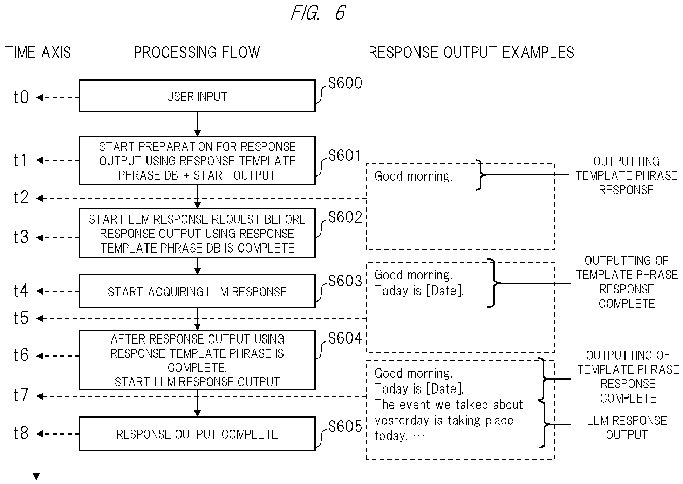

An example of the response generation processing in the artificial intelligence response output apparatus 10010 according to the sixth embodiment of to the present invention will be described with reference to FIG. 6. FIG. 6 shows an example of a flowchart of the response generation processing in the artificial intelligence response output apparatus 10010 according to the sixth embodiment of the present invention. Specifically, the drawing shows a time axis where time progresses from top to bottom, a processing flow, and response output examples. The output of the responses shown in the response output examples may be displayed on the display 10011 of the artificial intelligence response output apparatus 10010 or may be output as audio via the audio output unit 1140.

In the example of FIG. 6, first, at time t0, the user input by the user requesting a response from the large language model via the touch panel, the microphone 1139, or the operation input unit 1107 of the artificial intelligence response output apparatus 10010 is performed, and the controller 1110 of the artificial intelligence response output apparatus 10010 acquires the user input (step 600). Next, at time t1, the controller 1110 starts preparation for the response output using the response template phrase database stored in the storage 1170 and starts the response output using the response template phrase database (step 601). In the example of FIG. 6, at time t2, the response output using the response template phrase database is started, and as shown in the drawing, the template phrase response is being output which is not yet completed. "Good morning" in the drawing indicates the output of part of the sentence that continues with "Good morning. ..."

At time t3, before the response output using the response template phrase database is completed, the controller 1110 generates a prompt based on the user input acquire in step 600, sends the generated prompt to the large language model on the network or the local large language model of the artificial intelligence response output apparatus 10010 (local LLM processor 10028 or the like), and starts a request for a response from the large language model (step 602). Further, at time t4, before the response output using the response template phrase database is completed, the controller 1110 starts acquiring the response from the large language model (step 603).

At time t5, an example of the completed response output using the response template phrase database is shown. For example, FIG. 6 shows an example of the response output "Good morning. Today is [Date]" completed at time t5 using the template phrases stored in the response template phrase database and date information stored in the memory. Here, at time t4 before the response output using the response template phrase database is completed, the control unit 1110 has already started acquiring the response from the large language model. Therefore, the controller 1110 starts the response output from the large language model at time t6 which follows time t5 when the display of the response output using the response template phrase database is completed following the response output using the response template phrase database (step 604). Thereafter, at time t7, the response from the large language model is output following the response output using the response template phrase database. When the response output from the large language model is completed, the response output according to the processing flow shown in FIG. 6 is completed (step 605).

Next, effects of the processing flow of the present invention shown in FIG. 6 will be described. Processing large language models requires a significant amount of computational resources. Even if inference which generally requires fewer computational resources than training is processed using the GPU (graphics processor), it may take several seconds to tens of seconds from the time the controller starts a response request to the large language model until the response is received from the large language model. This period corresponds to the period from time t3 to time t4 shown in FIG. 6. In addition, from the time t0 when user input is received until time t4, the controller 1110 has not yet acquired the response output from the large language model, and thus, it cannot output the response from the large language model to the user.

Therefore, in the processing flow where there is no start of preparation for response output using the response template database shown in step 601 of FIG. 6and no start of response output using the response template database, the user may have to wait for several seconds to tens of seconds from the time t0 when the user input was made until the time t4 without receiving any response from the artificial intelligence response output apparatus 10010. For example, in a case where the artificial intelligence response output apparatus 10010 is configured as the AI assistant apparatus or character conversation apparatus, such waiting time may cause discomfort to the user.

Alternatively, in the processing flow according to the sixth embodiment of the present invention shown in FIG. 6, the controller 1110 starts processing of the response output using the response template phrase database which requires fewer computational resources than the processing of the large language model, before acquiring the response from the large language model. In this manner, the user does not have to wait without receiving a response from the artificial intelligence response output apparatus 10010 from time t0 to time t4. For the user, whether the response output is from the response output using the response template phrase database or from the large language model, it is still a response from the artificial intelligence response output apparatus 10010.

Therefore, in the processing flow shown in FIG. 6, by providing step 601 before step 603, it is possible to provide a virtually earlier response from the artificial intelligence response output apparatus 10010 to the user. In this manner, it is possible to further reduce discomfort to the user caused by long waiting times. In addition, by outputting the response from the large language model following the response using the response template phrase database in step 604, the user can feel as if these outputs are a series of more natural outputs.

According to the above-described artificial intelligence response output apparatus and artificial intelligence response output system according to the sixth embodiment, it is possible to shorten the response waiting time from the artificial intelligence response output apparatus for the user and further reduce discomfort to the user.

### <Seventh Embodiment>

Next, a seventh embodiment of the present invention is a modified version of the artificial intelligence response output apparatus 10010 or the artificial intelligence response output system according to the first to sixth embodiments described above. In the present embodiment, only differences from the first embodiment will be described, and descriptions of configurations similar to those of the first embodiment will be omitted as appropriate.

The artificial intelligence response output system according to the seventh embodiment is an example in which, when sending the prompt for the large language model from the artificial intelligence response output apparatus 10010, conversion processing for converting the user's question phrase is performed as necessary. More specifically, when creating the prompt for the large language model artificial intelligence from the user's question phrase, conversion processing for converting the user's question phrase is performed as necessary to obtain a more suitable to the user's question phrase.

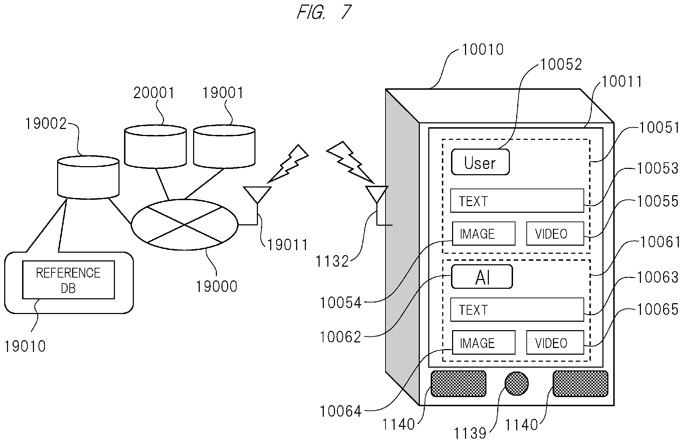

An example of the response output system according to the seventh embodiment of the present invention will be described with reference to FIG. 7. As shown in FIG. 7, a configuration of the response output system of the seventh embodiment is basically the same as that of the first embodiment. In the seventh embodiment, the artificial intelligence response output apparatus 10010 is communicably connected via the Internet 19000 to the large language model server 19001 or the large language model server 20001 having the large language model, and to the second server 19002 that differs from these servers. However, the seventh embodiment differs from the first embodiment in that the second server 19002 includes a reference database (reference DB) 19010.

Details of the reference DB 19010 will be described below. In the seventh embodiment, a configuration in which the large language model server 19001 comprises the large language model (LLM) will be described. In the following description, the large language model of the large language model server 19001 may be simply referred to as a large language model or an LLM. Note that the large language model may be a large language model on a network or the local large language model (such as the local LLM processor 10028) of the artificial intelligence response output apparatus 10010.

When the user asks a question to the large language model which is artificial intelligence and attempts to obtain a response (answer), processing may be performed in the following procedure. First, the user inputs a question for the large language model into the artificial intelligence response output apparatus 10010. For example, the user operates the operation input unit 1107 which is an input unit to input a question phrase which is natural language text information. In addition, the question for the large language model may be input by operating the operation input unit 1107 or by audio input. The artificial intelligence response output apparatus 10010 generates a response prompt for the large language model based on the question phrase and sends it to the large language model server 19001 comprising the large language model. When the large language model generates a response to the response prompt (for example, a response phrase for the user's question), the generated response is sent from the large language model server 19001 to the artificial intelligence response output apparatus 10010.

When the artificial intelligence response output apparatus 10010 receives the response, it performs processing for the response from the large language model (LLM) for the user. As an example of processing for the response from the large language model, the artificial intelligence response output apparatus 10010 displays the response phrase generated by the large language model on the display 10011. Through such a procedure, the user can obtain a response to the question from the large language model.

However, the user cannot always obtain an expected response from the large language model. For example, depending on how the question phrase is written, the content of the question may be interpreted in a meaning that differs from the user's intent, and there is a possibility that the user cannot obtain a desired response from the large language model.

Accordingly, in the response output system according to the seventh embodiment, when the user inputs a question phrase to the artificial intelligence response output apparatus 10010, the artificial intelligence response output apparatus 10010 executes conversion processing of the question phrase as necessary and generates a response prompt based on the question phrase after the conversion processing (hereinafter also referred to as post-processing question phrase). In this manner, the question phrase is more suitably interpreted by the large language model, and it becomes easier to obtain a response desired by the user from the large language model.

Note that the method for inputting the question phrase by the user into the artificial intelligence response output apparatus 10010 is not limited to the test input using the operation input unit 1107 as an input unit, and may also be a method in which a question input by audio using the microphone 1139 is converted into text. In addition, conversion processing of the question phrase, generation processing of the prompt, output processing of the response from the large language model to the display 10011, and the like are executed by, for example, the controller 1110. The controller 1110 in the present embodiment generates a response prompt for the large language model based on the question phrase, and acquires a response phrase generated by the large language model for the response prompt. Specifically, the controller 1110 executes conversion processing of the question phrase and generates the response prompt based on the question phrase after the conversion processing.

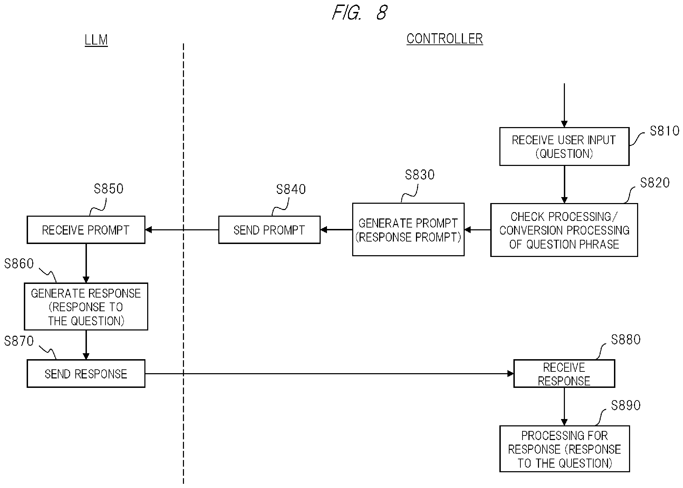

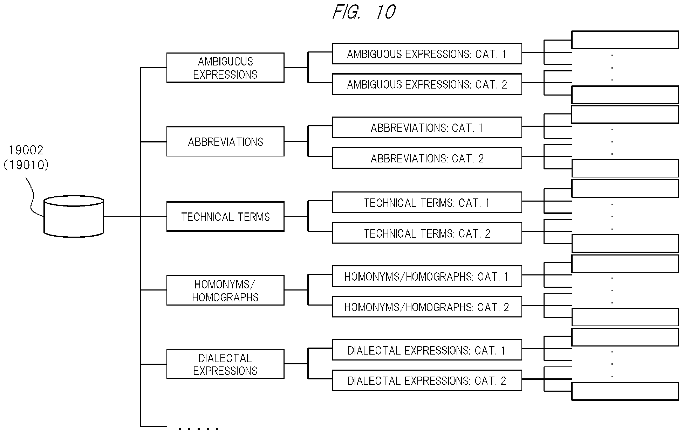

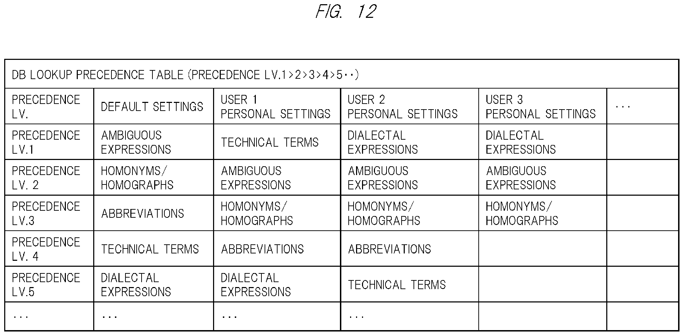

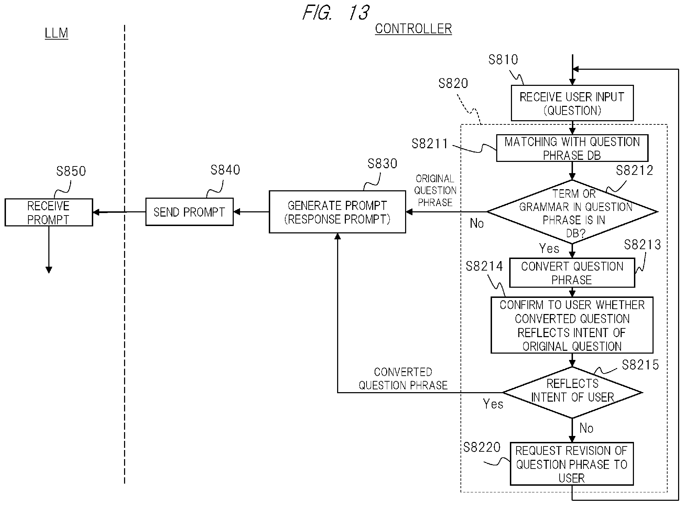

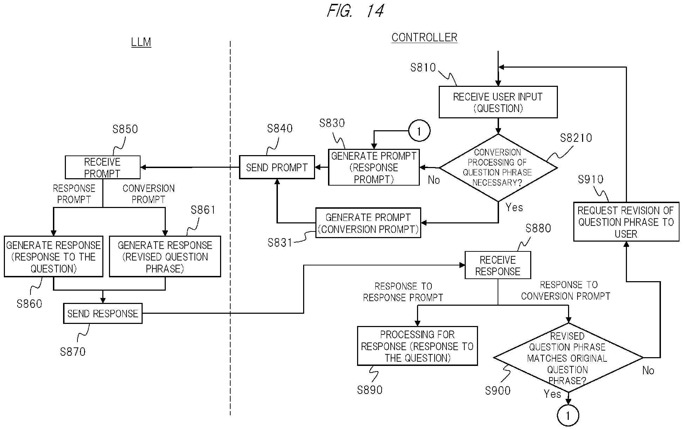

Hereinafter, a response output processing flow in the response output system according to the seventh embodiment, mainly including a processing flow for obtaining a response from the large language model to the user's question, will be described in detail. FIG. 8, FIG. 9, and FIG. 11 are drawings showing examples of processing flows of the response output system according to the seventh embodiment. In addition, FIG. 10 is a drawing showing an example of a reference database stored in the second server according to the seventh embodiment. FIG. 12 is a drawing showing an example of a database lookup precedence table. Further, FIG. 13 and FIG. 14 are drawings showing examples of modifications of the processing flow of the response output system according to the seventh embodiment. Note that, in the drawings showing the processing flows of the response output system, the same steps are denoted by the same reference signs, and redundant descriptions thereof are omitted as appropriate.

First, a basic processing flow in the response output system according to the seventh embodiment will be described with reference to FIG. 8. As shown in FIG. 8, the user first inputs a question phrase for a large language model by operating, for example, the operation input unit 1107. In step S810, when the controller 1110 receives the user input (question phrase), the process proceeds to step S820 where the controller 1110 executes check processing for determining whether conversion processing of the question phrase is necessary. In addition, in step S820, based on the result of the check processing, the controller 1110 executes conversion processing of the question phrase as necessary. Details of check processing and conversion processing will be described below.

Next, the process proceeds to step S830 where a prompt for the large language model (LLM) of the large language model server 19001 is generated based on the question phrase input by the user or the question phrase subjected to conversion processing (hereinafter referred to as a converted question phrase). In the present example, a response prompt instructing the creation of a response phrase as a response to the user's question is generated. Next, the response prompt is sent to the large language model (step S840). Note that the above-described response prompt and a conversion prompt, a summarization prompt, and an additional prompt described below are collectively referred to as prompt.

Next, when the large language model (LLM) receives the prompt sent from the artificial intelligence response output apparatus 10010 such as the response prompt (step S850), the LLM generates a response based on the prompt (step S860). In the example shown in FIG. 8, the prompt is a response prompt, and thus, the large language model creates a response phrase for the user's question in a response generation of step S860. Thereafter, in step S870, the response phrase created by the large language model is sent to the artificial intelligence response output apparatus 10010.

When the controller 1110 of the artificial intelligence response output apparatus 10010 receives the response (such as the response phrase) created by the large language model (step S880), the process proceeds to step S890 where the controller 1110 executes processing for the large language model. An example of processing for the response from the large language model includes the controller 1110 causing the response phrase for the user's question to be displayed on the display 10011.

As described above, in the response output system according to the seventh embodiment, when performing response output processing, check processing is performed on the question phrase input by the user, and conversion processing of the question phrase is performed as necessary. In this manner, it becomes easier to obtain a response intended by the user to the user's question from the large language model.

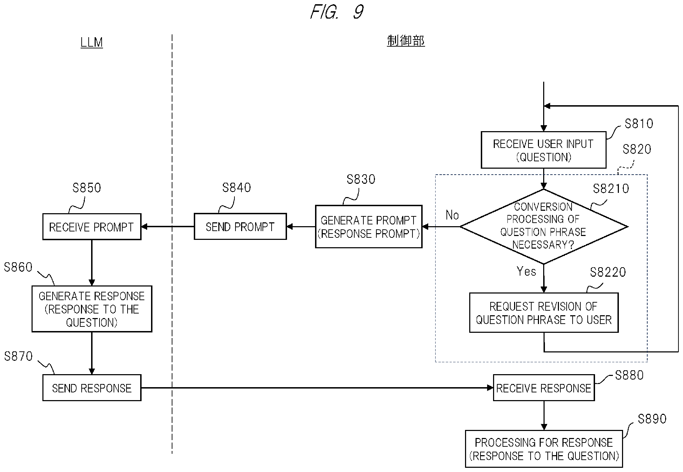

Next, check processing and conversion processing of the question phrase in step S820 will be described in more detail. For example, as shown in FIG. 9, when the controller 1110 receives the user input in step S810, the controller 1110 first executes check processing on the question phrase input by the user as processing in step S820, and determines whether conversion processing of the question phrase is necessary (step S8210).

Based on the result of the check processing, if it is determined that conversion processing of the question phrase is not necessary (step S8210: No), the process proceeds to step S830 where a prompt is generated based on the question phrase. On the other hand, if it is determined that conversion processing of the question phrase is necessary (step S8210: Yes), the process proceeds to step S8220 where conversion processing of the question phrase is executed. In the present example, as the conversion processing of the question phrase, processing for requesting the user to revise the question phrase is performed (step S2220).

More specifically, regarding the check processing of step S820, the controller 1110 executes processing for confirming whether the question phrase corresponds to predetermined check items as the check processing. For example, the controller 1110 performs processing for confirming whether the question phrase includes predetermined specific expressions. In other words, one of the above-described check items includes whether the question phrase includes the specific expressions. Note that the content of the check items is not particularly limited as long as it allows determination of whether conversion processing of the question phrase is necessary.

Here, in the present example, the above-described specific expressions refer to terms, grammar, and the like that are registered beforehand in the reference database (reference DB) 19010 of the second server 19002. That is, a list of specific expressions is stored in the reference DB 19010 of the second server 19002. For example, as shown in FIG. 10, the specific expressions stored in the reference DB 19010 include specific terms such as "TECHNICAL TERMS", "ABBREVIATIONS", and "HOMONYMS/HOMOGRAPHS", and specific grammar and the like such as "AMBIGUOUS EXPRESSIONS", and "DIALECTAL EXPRESSIONS". Note that, in the present example, meanings and explanations of the specific terms registered in the reference DB 19010 are also stored.

In addition, as shown in FIG. 10, the specific expressions stored in the reference DB 19010 are categorized into a plurality of groups including groups of "AMBIGUOUS EXPRESSIONS", "ABBREVIATIONS", "TECHNICAL TERMS", "HOMONYMS/HOMOGRAPHS", and "DIALECTAL EXPRESSIONS". Further, each group is configured in a plurality of hierarchical levels. That is, each group at a certain level further has a plurality of groups at the next level. For example, the group "AMBIGUOUS EXPRESSIONS" has groups "AMBIGUOUS EXPRESSIONS: CAT. 1" and "AMBIGUOUS EXPRESSIONS: CAT. 2", and these groups further have a plurality of groups. Likewise, the group "ABBREVIATIONS" has groups "ABBREVIATIONS: CAT. 1" and "ABBREVIATIONS: CAT. 2", and these groups further have a plurality of groups.

In this manner, in the present example, the groups of specific expressions are configured in three hierarchical levels. However, the number of hierarchical levels in the groups is not particularly limited and may be determined as appropriate. In addition, the number of groups configured at the same level is not particularly limited and may be determined as appropriate.

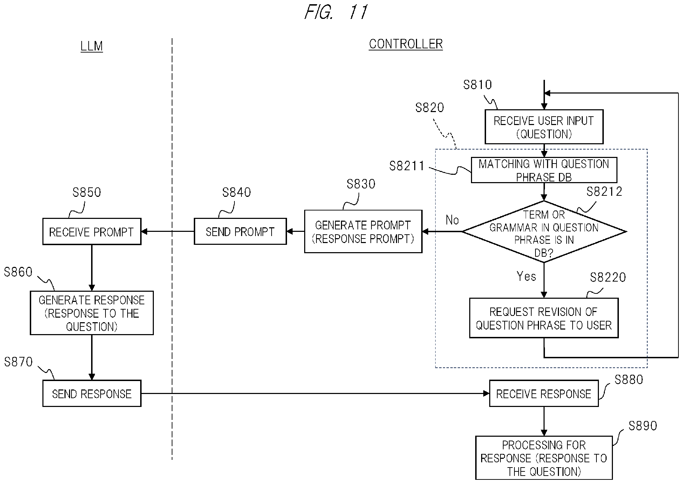

Then, the controller 1110 executes check processing of the question phrase using such a reference DB 19010. For example, as shown in FIG. 11, as the check processing of the question phrase in step S820, the controller 1110 first performs database lookup processing of the question phrase in step S8211. In this lookup processing, terms and grammar in the question phrase input by the user are matched against the specific expressions registered in the reference DB 19010.

Next, in step S8212, it is determined whether any term or grammar in the question phrase matches the specific expressions registered in the reference DB 19010. In other words, the controller 1110 performs processing for confirming whether or not the question phrase contains terms, grammar, and the like classified into the plurality of groups shown in FIG. 10, that is, whether the question phrase includes the specific expressions registered in the reference DB 19010.

If no term or grammar in the question phrase is present in the reference DB 19010 (step S8212: No), it is determined that the question phrase does not correspond to the above-described check items, and the process proceeds to step S830 to generate a prompt. On the other hand, if a term or grammar in the question phrase is present in the reference DB 19010 (step S8212: Yes), it is determined that the question phrase corresponds to the above-described check items, and the process proceeds to step S8220 to perform, as the conversion processing of the question phrase, processing for requesting the user to revise the question phrase. For example, the controller 1110 causes the display 10011 to display information indicating that the user is requested to revise the question phrase.

At this time, it is preferable to additionally display the reason for requesting the user to revise the question phrase. For example, it is preferable to display that the question phrase includes a specific expression and to also display the terms/grammar in the question phrase corresponding to the specific expression. Note that the method for requesting the user to revise the question phrase is not particularly limited, and may be performed, for example, by audio or the like.

In addition, a question phrase revised by the user in response to the revision request as the conversion processing corresponds to a "converted question phrase". In the example shown in FIG. 9, when the user revises the question phrase in response to the request in step S8220 and the controller 1110 receives the revised question phrase (converted question phrase) (step S810), check processing of the converted question phrase is performed, and it is determined whether further conversion processing of the converted question phrase is necessary (step S8210). If it is determined that further conversion processing of the converted question phrase is necessary, the user is again requested to further revise the converted question phrase (step S8220). In addition, if it is determined that further conversion processing of the converted question phrase is unnecessary (step S8210: No), the process proceeds to step S830 where a prompt is generated based on the converted question phrase. The subsequent processing flow is the same as that in the example of FIG. 8, and thus, redundant descriptions thereof are omitted as appropriate.

In the artificial intelligence response output device 10010, precedence levels used when matching between the question phrase and the specific expressions registered in the reference DB 19010 are set beforehand. For example, as shown in FIG. 12, the DB lookup precedence table that defines the precedence levels used when matching between the question phrase and the reference DB 19010 is stored beforehand in the artificial intelligence response output device 10010. In this example, precedence levels 1 to 5 are set to be used for matching with respect to five groups in the reference DB 19010: "AMBIGUOUS EXPRESSIONS", "ABBREVIATIONS", "TECHNICAL TERMS", "HOMONYMS/HOMOGRAPHS", AND "DIALECTAL EXPRESSIONS".

In this case, in steps S8211 and S8212 shown in FIG. 11, the group assigned precedence level 1 is processed (matched) first, and the group assigned precedence level 5 is processed last. In the example shown in FIG. 12, under default settings, "AMBIGUOUS EXPRESSIONS" in the question phrase are matched first, and "DIALECTAL EXPRESSIONS" in the question phrase are matched last.

In addition, the precedence level of the groups to be matched can be set in any manner, for example, in accordance with the user's writing habits or preferences when composing a question phrase. Further, the types and the number of groups to be matched can also be set in any manner. Note that groups set as targets for matching are referred to as "set groups".

In the example shown in FIG. 12, "USER 1: PERSONAL SETTINGS" and "USER 2: PERSONAL SETTINGS" are examples in which five groups including "AMBIGUOUS EXPRESSIONS", "ABBREVIATIONS", "TECHNICAL TERMS", "HOMONYMS/HOMOGRAPHS", and "DIALECTAL EXPRESSIONS" are set as set groups, and the order of precedence of these five set groups is set by the user. In addition, "USER 3: PERSONAL SETTINGS" is an example in which three groups including "DIALECTAL EXPRESSIONS", "AMBIGUOUS EXPRESSIONS", and "HOMONYMS/HOMOGRAPHS" are set as set groups, and the order of precedence of these three set groups is set by the user.

By appropriately setting the precedence level of the groups to be matched in this manner, the conversion processing of the question phrase can be efficiently executed. For example, by setting a higher precedence level to groups of specific expressions that are frequently used in question phrases, matching between the question phrase and the reference DB 19010 and conversion processing of the question phrase can be more easily performed in parallel. In this manner, the time required to obtain a response from the large language model to the question phrase can be reduced.

Although an example of the processing flow of the response output system according to the seventh embodiment has been described above, the processing flow for obtaining a response from the large language model to the user's question is not limited to the above-described example. In the above-described example, a case has been described in which, as the conversion processing of the question phrase, processing for requesting the user to revise the question phrase is performed. However, the conversion processing of the question phrase is not limited to this processing.

Next, other examples of the conversion processing of the question phrase will be described with reference to FIGS. 13 to 15. The processing flow shown in FIG. 13 illustrates an example in which the conversion processing of the question phrase is executed by the controller 1110 of the artificial intelligence response output apparatus 10010. The controller 1110 may also be referred to as a processor.

As shown in FIG. 13, if a term or grammar in the question phrase is present in the reference DB 19010 in step S8212 (step S8212: Yes), the process proceeds to step S8213 where the controller 1110 converts the question phrase as the conversion processing of the question phrase. For example, the controller 1110 replaces a specific expression used in the question phrase with another expression (term or grammar) to convert the question phrase into a sentence that does not use the specific expression. Note that, if no term or grammar in the question phrase is present in the reference DB 19010 in step S8212 (step S8212: No), the process proceeds to step S830 where a prompt is generated based on the question phrase input by the user, as in the above-described example.

In addition, if a term or grammar in the question phrase is present in the reference DB 19010 in step S8212 (step S8212: Yes), after the controller 1110 converts the question phrase in step S8213, the process proceeds to step S8214 where processing is performed to send an inquiry to the user as to whether the converted question phrase reflects the intent of the original question phrase. For example, a confirmation item for confirming whether the converted question phrase reflects the intent of the original question phrase is displayed on the display 10011, and a response to the confirmation item is requested from the user.

Next, in step S8215, it is confirmed whether the converted question phrase matches the intent of the original question phrase (user's intent). For example, based on the user's response to the confirmation item displayed on the display 10011, it is determined whether the converted question phrase matches the user's intent. Specifically, a confirmation item such as "Does the converted question phrase match the intent of the original question phrase?" and options "Yes/No" as user responses are displayed. If "Yes" is selected, it is determined that the converted question phrase matches the user's intent, and if "No" is selected, it is determined that the converted question phrase does not match the user's intent.

Here, if the user's response indicates that the converted question phrase matches the user's intent (step S8215: Yes), the process proceeds to step S830 where the controller 1110 generates a prompt based on the converted question phrase and sends the generated prompt to the large language model (step S840). On the other hand, if the user's response indicates that the converted question phrase does not match the user's intent (step S8215: No), the process proceeds to step S8220 where further conversion processing of the question phrase is executed. In the example shown in FIG. 13, as in the example shown in FIG. 9 and the like, processing for requesting the user to revise the question phrase is performed as the conversion processing of the question phrase in step S8220.

Note that a question phrase revised by the user in response to this request also corresponds to a "converted question phrase" and is handled in the same manner as in the above-described example. In addition, in the example shown in FIG. 13, the processing flow after the large language model receives the prompt in step S850 is the same as that in the example shown in FIG. 8 and the like, and thus, an illustration thereof is omitted. In addition, since step S820 is system processing, processing other than that described above may be performed. Furthermore, the processing of steps S8214 to S8220 is not necessarily required. For example, after the question phrase is converted in step S8213, the process may proceed to step S830 to create a response prompt based on the converted question phrase.

The processing flow shown in FIGS. 14 and 15 illustrates examples in which the conversion processing of the question phrase is performed by the large language model (LLM) of the large language model server 19001. In the example shown in FIG. 14, in step S8210, if the controller 1110 determines that conversion processing of the question phrase is not necessary (step S8210: No), the process proceeds to step S830 where a response prompt is generated based on the question phrase, as in the above-described example. The generated prompt (response prompt) is then sent to the large language model (step S840). When the large language model receives the response prompt (step S850), the process proceeds to step S860 where a response is generated for the response prompt. Specifically, a response to the question is generated.

Thereafter, the response to the question is sent to the controller 1110 as a response of the large language model for the prompt (response prompt) (step S870). When the controller 1110 receives the large language model's response to the response prompt (step S880), the process proceeds to step S890 where the controller 1110 performs processing such as presenting, to the user, the response of the large language model, that is, the response of the large language model to the question input by the user. The user can confirm the response of the large language model, and when satisfied with the response, can terminate the question to the large language model, or when not satisfied with the response, can input another question.

On the other hand, if it is determined that conversion processing is necessary (step S8210: Yes), the process proceeds to step S831 where a conversion prompt for instructing the large language model to perform conversion processing on the question phrase is generated. The generated prompt (conversion prompt) is then sent to the large language model (step S840).

When the large language model receives the conversion prompt (step S850), the process proceeds to step S861 where a response to the conversion prompt is generated. Specifically, as the conversion processing of the question phrase created by the user, the question phrase is revised. For example, if the question phrase contains a specific expression as described above, the question phrase is converted into a sentence that does not use the specific expression. It goes without saying that the content of the conversion processing of the question phrase is not particularly limited. Thereafter, as a response of the large language model to the prompt (conversion prompt), the question phrase (converted question phrase) subjected to the conversion processing is sent to the controller 1110.

When the controller 1110 receives the converted question phrase from the large language model (LLM) as a response to the conversion prompt (step S880), the process proceeds to step S900 where the controller 1110 confirms with the user whether the question phrase revised by the large language model matches the original question phrase. In other words, the controller 1110 confirms with the user whether the converted question phrase reflects the intent of the original question phrase.

Here, if a response is received from the user indicating that the converted question phrase matches the original question phrase (step S900: Yes), the process proceeds to step S830 where a prompt (response prompt) is generated based on the converted question phrase converted by the large language model, and the generated response prompt is sent to the large language model (step S840).

On the other hand, when a response is received from the user indicating that the converted question phrase does not match the user's intent (step S900: No), the process proceeds to step S910 where processing for requesting the user to revise the question phrase is performed.

Note that steps S900 and S910 in the processing flow of FIG. 14 may be regarded as corresponding to steps S8214 to S8220 in the processing flow of FIG. 13. In addition, in the processing flow of FIG. 14, the processing from step S831 through steps S861 and S900 to step S910 corresponds to the conversion processing of the question phrase.

In addition, in each of the above-described processing flows of the seventh embodiment, when the user inputs a question phrase, check processing of the input question phrase is performed, and conversion processing of the question phrase is performed as necessary based on the result of the check processing. However, the check processing of the question phrase is not necessarily required. That is, when the user inputs a question phrase, conversion processing of the question phrase may always be performed.

Specifically, in the example shown in FIG. 14, when a question phrase is input by the user in step S810, check processing of the question phrase is performed in step S8210. If conversion processing is necessary (step S8210: Yes), a conversion prompt is generated (step S831). On the other hand, in the processing flow of FIG. 15, when the controller 1110 receives the question phrase input by the user (step S810), the controller 1110 creates a conversion prompt in step S831 without performing check processing of the question phrase. Note that, in the processing flow of FIG. 15 as well, the processing from step S831 through steps S861 and S900 to step S910 corresponds to the conversion processing of the question phrase.

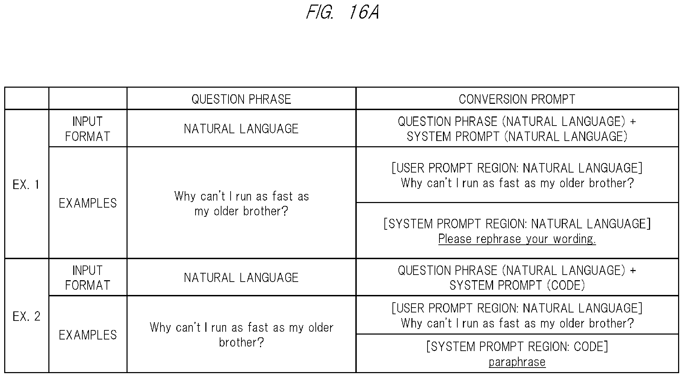

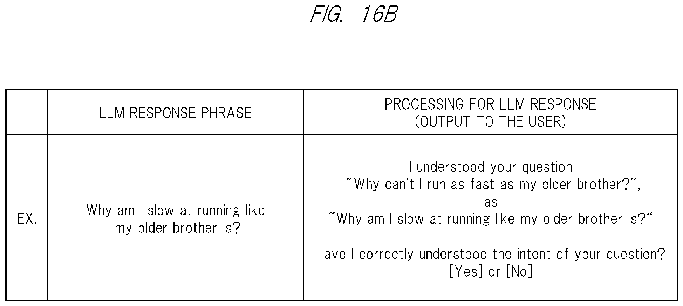

Here, the processing flow shown in FIG. 15 will be further described with reference to FIGS. 16A and 16B. For example, assume that the user inputs a question phrase "Why can't I run as fast as my older brother?" as shown in FIG. 16A (step S810). In this case, in step S830, the controller 1110 generates a conversion prompt in the form of, for example, a question phrase plus a system prompt. The system prompt is used to instruct the large language model regarding the response content (processing content), and in the example of FIG. 16A, instructs paraphrasing of the question phrase.

In Example 1, both the question phrase and the system prompt in the conversion prompt are written in natural language. Specifically, "Why can't I run as fast as my older brother?" is written in the question phrase region of the conversion prompt, and "Please rephrase your wording" is written in the system prompt region. In Example 2, the question phrase in the conversion prompt is written in natural language, while the system prompt is written in code. Specifically, "Why can't I run as fast as my older brother?" is written in the question phrase region of the conversion prompt, and "paraphrase" is written in the system prompt region.

Thereafter, the large language model performs conversion of the question phrase as response generation based on the conversion prompt (step S861). As described above, when the user's question phrase is "Why can't I run as fast as my older brother?", the large language model generates, for example, a converted question phrase such as "Why am I slow at running like my older brother is?" as a paraphrased response phrase as shown in FIG. 16B.

In addition, as shown in FIG. 16B, as processing (output to the user) for the response of the large language model, the controller 1110 causes, for example, the original question phrase "Why can't I run as fast as my older brother?" and the converted question phrase "Why am I slow at running like my older brother is?" to be displayed on the display 10011, and performs display requesting the user to answer whether the converted question phrase matches the original question phrase (step S900).

In this manner, by allowing the large language model to perform the conversion processing of the question phrase, it is possible to confirm beforehand whether the large language model appropriately understands the user's question phrase before generating a response. Therefore, it becomes easier to obtain a suitable response from the large language model to the user's question.

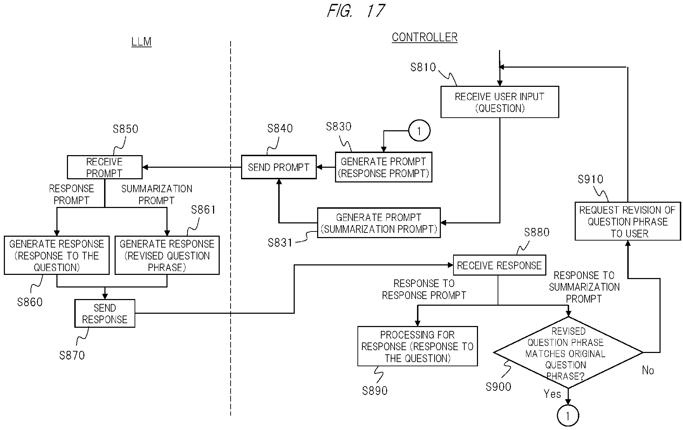

The processing flow shown in FIG. 17 is a modification of the processing flow shown in FIG. 16, and is an example in which, as the conversion processing of the question phrase, processing for creating a summary of the question phrase is performed. Specifically, in the processing flow shown in FIG. 17, when a question phrase is input by the user in step S810, the process proceeds to step S831 without performing check processing of the question phrase, and a summarization prompt for instructing creation of a summary of the question phrase is created. The generated prompt (summarization prompt) is then sent to the large language model (step S840).

When the large language model receives the summarization prompt (step S850), the process proceeds to step S861 where a response to the summarization prompt is generated. Specifically, as the conversion processing of the question phrase created by the user, a summary of the question phrase is created. In other words, the question phrase input by the user is converted into a sentence that concisely summarizes the key points. Thereafter, as a response of the large language model to the prompt (summarization prompt), the question phrase subjected to the conversion processing (converted question phrase) is sent to the controller 1110.

Note that the subsequent processing flow by the controller 1110 has already been described, and thus redundant descriptions thereof are omitted as appropriate. In addition, in the example shown in FIG. 17, check processing of the question phrase input by the user is not performed. However, as in the example shown in FIG. 14, check processing of the question phrase may be performed. For example, in the example of FIG. 17, as the check processing of the question phrase, it may be determined whether the number of words in the question phrase is greater than or equal to a predetermined number, and if the number of words in the question phrase is greater than or equal to the predetermined number, the summarization prompt may be generated. In other words, the check items may include confirming that the number of words in the question phrase is greater than or equal to a predetermined number. It goes without saying that the content of the check processing in this case is also not particularly limited and may be determined as appropriate.

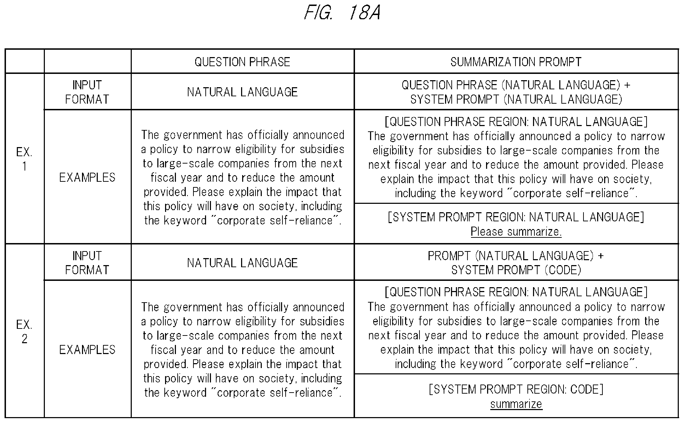

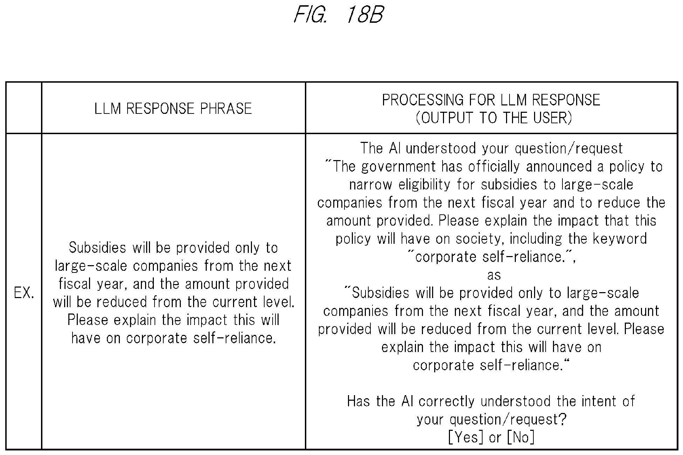

Here, the processing flow shown in FIG. 17 will be further described with reference to FIGS. 18A and 18B. In step S810, assume that the user inputs, as shown in FIG. 18A, a question phrase "The government has officially announced a policy to narrow eligibility for subsidies to large-scale companies from the next fiscal year and to reduce the amount provided. Explain the impact that this policy will have on society, including the keyword 'corporate self-reliance'". In this case, in step S830, for example, the summarization prompt is generated in the form of a question phrase plus a system prompt. In this example, the system prompt instructs summarization of the question phrase.

In Example 1 shown in FIG. 18A, both the question phrase and the system prompt in the summarization prompt are written in natural language. Specifically, the question phrase region of the summarization prompt contains "The government has officially announced a policy to narrow eligibility for subsidies to large-scale companies from the next fiscal year and to reduce the amount provided. Explain the impact that this policy will have on society, including the keyword 'corporate self-reliance'" and the system prompt region contains "Please summarize" In Example 2 shown in FIG. 18A, the question phrase in the summarization prompt is written in natural language, while the system prompt is written in code. Specifically, the question phrase region contains "The government has officially announced a policy to narrow eligibility for subsidies to large-scale companies from the next fiscal year and to reduce the amount provided. Explain the impact that this policy will have on society, including the keyword 'corporate self-reliance'" and the system prompt region contains "summarize".

Thereafter, the large language model performs conversion of the question phrase as response generation based on the summarization prompt (step S861). As described above, when the user's question phrase is "The government has officially announced a policy to narrow eligibility for subsidies to large-scale companies from the next fiscal year and to reduce the amount provided. Explain the impact that this policy will have on society, including the keyword 'corporate self-reliance'", the large language model generates, for example, a converted question phrase such as "Subsidies will be provided only to large-scale companies from the next fiscal year, and the amount provided will be reduced from the current level. Explain the impact this will have on corporate self-reliance" as a summarized response as shown in FIG. 18B.

In addition, as processing (output to the user) for the response of the large language model, the controller 1110 causes, for example, as shown in FIG. 18B, the original question phrase or request phrase "Subsidies will be provided only to large-scale companies from the next fiscal year, and the amount provided will be reduced from the current level. Explain the impact this will have on corporate self-reliance" and the converted question phrase "Subsidies will be provided only to large-scale companies from the next fiscal year, and the amount provided will be reduced from the current level. Explain the impact this will have on corporate self-reliance" to be displayed on the display 10011, and performs display requesting the user to answer whether the converted question phrase matches the original question phrase (step S900).

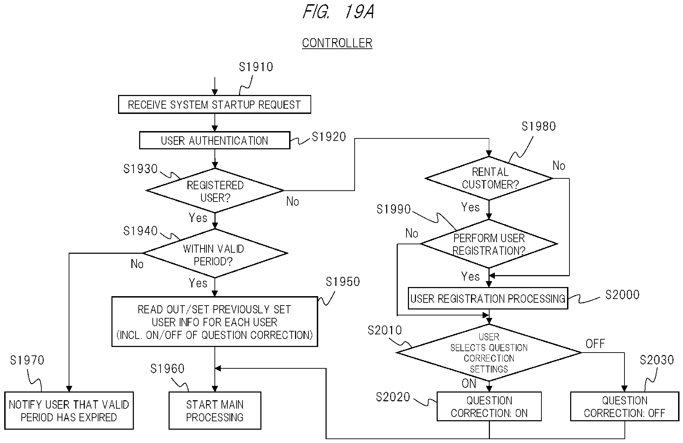

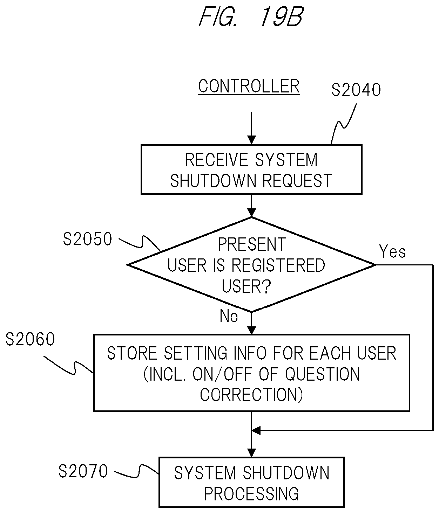

The function of performing the above-described check processing and conversion processing of the question phrase does not necessarily have to be always enabled. For example, the user may be allowed to select whether to enable this function when using the system or when terminating the system. The function of performing the check processing and conversion processing of the question phrase is a function for correcting a question/request, and is hereinafter also referred to as a question correction function. FIG. 19A is a drawing showing an example of a processing flow at system startup, and FIG. 19B is a drawing showing an example of a processing flow at system shutdown.

At system startup, as an example shown in FIG. 19A, when the operation input unit 1107 or the like is operated by an operator, the controller 1110 receives a system startup request (step S1910). When the controller 1110 receives the system startup request, the controller 1110 executes user authentication (step S1920). Then, in step S1930, it is confirmed whether the operator operating the response output system is a registered user. Note that the method for user authentication and for confirming whether the operator is a registered user is not particularly limited, and any known method may be adopted.

If the operator is a registered user (step S1930: Yes), it is confirmed whether the use is within a valid usage period, that is, whether the use falls within a term of a time-limited usage contract for the system, functions, or services (step S1940). Note that, when the system, functions, or services can be used without a usage period, step S1940 may be treated as "Yes", and the process may proceed to step S1950. If the use is within the valid period (step S1940: Yes), the process proceeds to step S1950 where user information previously set for each user is read, and the user information is re-set or modified as necessary. Information indicating ON/OFF of the above-described question correction function is included in the user information. In other words, the ON/OFF of the question correction function is switched by changing the user information. Thereafter, the process proceeds to step S1960 where main processing, for example, processing for responding to the question described with reference to FIG. 7 and the like, is started.

Note that, if the use is not within the valid usage period in step S1940, that is, if the usage period has expired (step S1940: No), the process proceeds to step S1970 where the user is notified of expiration of the usage period. Further, if the operator is not a registered user in step S1930 (step S1930: No), the process proceeds to step S1980 where it is confirmed whether the operator is a rental customer.

Here, if the operator is not a rental customer, for example, if the operator is a new user (step S1980: No), the process proceeds to step S2000 where user registration processing is executed. On the other hand, if the operator is a rental customer (step S1980: Yes), the process proceeds to step S1990 where it is confirmed whether to perform user registration for the rental customer. If a response indicating that user registration is to be performed is received from the rental customer (step S1990: Yes), the process proceeds to step S2000 to perform the user registration processing.

When performing the user registration processing, the user is then requested to set, as one item of user information, the ON/OFF state of the question correction function (step S2010). If the user selects "ON" for the ON/OFF setting of the question correction function (step S2010: Yes), the question correction function is set to "ON", and if the user selects "OFF" (step S2010: No), the question correction function is set to "OFF", and the user information is set accordingly. Thereafter, the process proceeds to step S1960 to start the main processing.

In step S1990, if a response is received from the rental customer indicating that user registration is not to be performed (step S1990: No), the process proceeds to step S2010 without performing user registration processing, and only selection of the ON/OFF setting of the question correction function is requested from the rental customer as the user. Information regarding the ON/OFF setting of the question correction function for the rental customer is temporarily stored only during the current use of the system.

As shown in the example of FIG. 19B, at system shutdown, the controller 1110 receives a system shutdown request when, for example, the operation input unit 1107 or the like is operated by a user including a rental customer (step S2040). When the controller 1110 receives the system shutdown request, the controller 1110 confirms whether the user who used the system this time is a registered user (step S2050).

Here, if the user who used the system is not a registered user, for example, if the user is a rental customer described above (step S2050: No), the process proceeds to step S2060. In step S2060, user information including ON/OFF setting of the question/request correction function for the user who used the system this time is stored. Thereafter, system shutdown processing is performed (step S2070). If the user who used the system is a registered user (step S2050: Yes), since user information including the ON/OFF setting of the question correction function has already been stored, the process proceeds to step S2070 where system shutdown processing is performed without storing the information again.

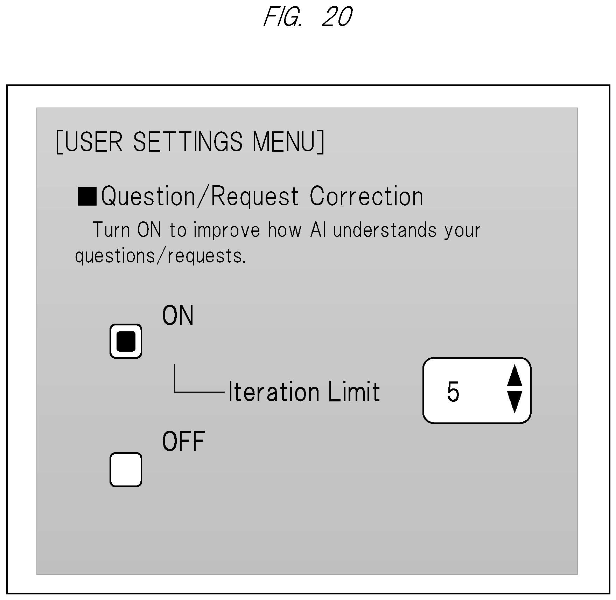

The ON/OFF setting of the question correction function may be set, for example, when user information is initially set, but may also be changed at any timing during system use. For example, by selecting a predetermined menu item displayed on the display 10011 during system use, a user setting menu screen for setting user information may be displayed, and the ON/OFF setting of the question/request correction function may be changed on the user setting menu screen. FIG. 20 is a drawing showing an example of the user setting menu screen.

In the example shown in FIG. 20, it is possible to select ON/OFF of the question/request correction function and to set a maximum number of iterations when the question/request correction function is set to ON. In this manner, the question/request correction function is executed within the maximum number of iterations. Although increasing the number of iterations of the question/request correction function improves the accuracy of the response to the question phrase, it also requires a longer time to obtain the response. Depending on the user or the content of the question, a shorter response time may be preferred over higher accuracy. By setting the maximum number of iterations, it becomes easier to obtain a response that meets the user's requirements even in such cases.

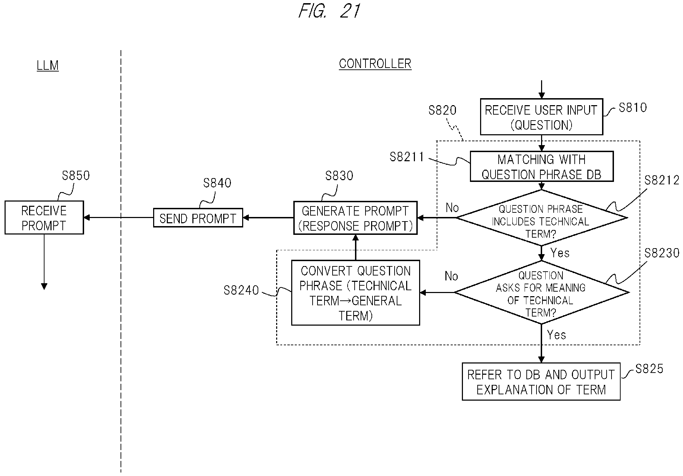

Next, the processing flow of the response output system according to the seventh embodiment will be further described with reference to the processing flow of FIG. 21. FIG. 21 shows a modification of the processing flow shown in FIG. 11, and is an example in which, as the check processing, it is determined whether a "technical term" as a specific expression is included in the question phrase.

In the example shown in FIG. 21 as well, when the controller 1110 receives the user input (step S810), the controller 1110 performs database lookup processing of the question phrase in step S8211. In this lookup processing, the question phrase input by the user is matched against the specific expressions registered in the reference DB 19010. In this example, as the lookup processing, the question phrase is matched against technical terms registered in the reference DB 19010.

Next, in step S8212, the controller 1110 determines whether any technical term registered in the reference DB 19010 is present in the question phrase. If the question phrase does not include a technical term as a specific expression (step S8212: No), the process proceeds to step S830 where a response prompt is generated, and the generated response prompt is sent to the large language model (step S840).

On the other hand, if the question phrase includes a technical term (step S8212: Yes), the process proceeds to step S8230 where it is determined whether the user's question asks for the meaning of the technical term as a specific expression. If the user's question asks for the meaning of the technical term (step S8230: Yes), for example, the meaning or explanation of the technical term is output to the user with reference to the reference DB 19010. Specifically, an explanation of the technical term is displayed on the display 10011. In the present embodiment, as described above, meanings and explanations of specific terms such as technical terms are also stored in the reference DB 19010. Therefore, the controller 1110 can output explanations of terms by referring to the reference DB 19010. It goes without saying that the controller 1110 may output explanations of terms by referring to other databases connected via, for example, the Internet.

In this manner, it is possible to respond to the user's question asking for the meaning of a technical term without using the large language model. In addition, when the user's question asks for the meaning of a technical term, if the large language model does not correctly understand the technical term, it cannot provide a response desired by the user. However, by referring to the reference DB 19010, it becomes easier to obtain the response desired by the user.

In step S8230, if the user's question does not ask for the meaning of the technical term (step S8230: No), the process proceeds to step S8240 where conversion processing of the question phrase is performed. Specifically, the technical term as a specific expression included in the question phrase is converted into another generally used term (general term). Thereafter, the process proceeds to step S830 where a response prompt is generated based on the converted question phrase using the general term, and the generated response prompt is sent to the large language model (step S840). By converting the technical term into a general term in this manner, it becomes easier to obtain the response desired by the user even when the large language model does not correctly understand the technical term.

Note that, in the processing flow shown in FIG. 21, steps S8211, S8212, S8230, and S8240 correspond to the check processing and conversion processing of the question phrase. In addition, since the processing performed after the large language model receives the response prompt in step S850 is the same as that in the processing flow of FIG. 11 and the like, redundant descriptions thereof in FIG. 21 and the present specification are omitted as appropriate.

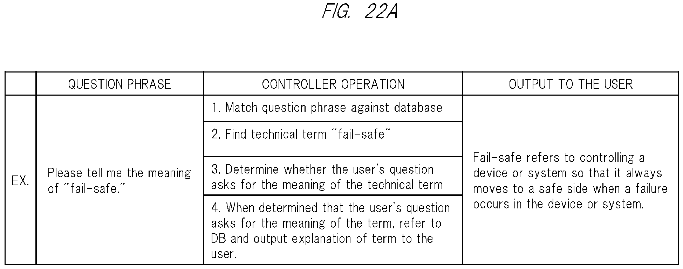

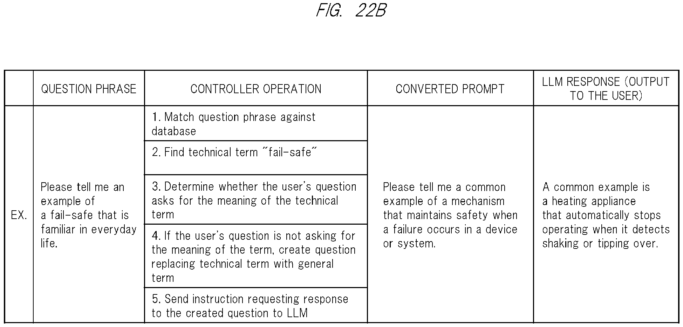

The processing flow shown in FIG. 21 will be further described with reference to FIGS. 22A and 22B. FIGS. 22A and 22B are drawings for describing processing performed when a technical term is included in the user's question phrase. FIG. 22A is a drawing for describing processing performed when the user's question asks for the meaning of a technical term, and FIG. 22B is a drawing for describing processing performed when the user's question does not ask for the meaning of a technical term.

In step S810, assume that the user inputs a question phrase "Tell me the meaning of 'fail-safe,'" as shown in FIG. 22A. Further, assume that the controller 1110 matches the question phrase against the reference DB 19010 (step S8211) and finds the technical term "fail-safe" in the reference DB 19010 (step S8212: Yes). In this case, the controller 1110 determines whether the user's question asks for the meaning of the technical term "fail-safe" (step S8230). In the present example, the controller 1110 determines, based on the content of the question phrase, that the user's question asks for the meaning of the technical term "fail-safe" (step S8230: Yes), and outputs an explanation of the term "fail-safe" to the user with reference to the reference database or the like (step S825). As an output to the user, the controller 1110 causes, for example, an explanation of the term stating "Fail-safe refers to controlling a device or system so that it always moves to a safe side when a failure occurs in the device or system" to be displayed on the display 10011.

In addition, in step S810, assume that the user inputs a question phrase "Tell me an example of a fail-safe that is familiar in everyday life" as shown in FIG. 22B. Further, assume that the controller 1110 matches the question phrase against the reference DB 19010 (step S8211) and finds the technical term "fail-safe" in the reference DB 19010 (step S8212: Yes). In this case as well, the controller 1110 determines whether the user's question asks for the meaning of the technical term "fail-safe" (step S8230). In the present example, the controller 1110 determines, based on the content of the question phrase, that the user's question does not ask for the meaning of the technical term "fail-safe" (step S8230: No).

Therefore, the controller 1110 then creates a question phrase in which the technical term in the question phrase is replaced with a general term (converted question phrase) (step S8240). For example, the controller 1110 generates, from the question phrase input by the user, a converted question phrase stating "Tell me a common example of a mechanism that maintains safety when a failure occurs in a device or system". Further, the controller 1110 generates a response prompt based on the generated converted question phrase (step S830), and sends the generated response prompt to the large language model (step S840).

Thereafter, when the large language model receives the response prompt (step S850), the large language model creates a response phrase to the converted question phrase as a response based on the response prompt (step S860). For example, the large language model creates, as a response to the converted question phrase, a response phrase stating "A common example is a heating appliance that automatically stops operating when it detects shaking or tipping over". The created response phrase is sent to the controller 1110 (step S870). When the controller 1110 receives the response phrase (step S880), the controller 1110 outputs the response phrase to the user as processing for the response of the large language model (step S890).

Further, it is conceivable that a response phrase created by the large language model in response to the user's question phrase may include a technical term unknown to the user. In such a case, an explanation of the technical term may be added to the response phrase as necessary.

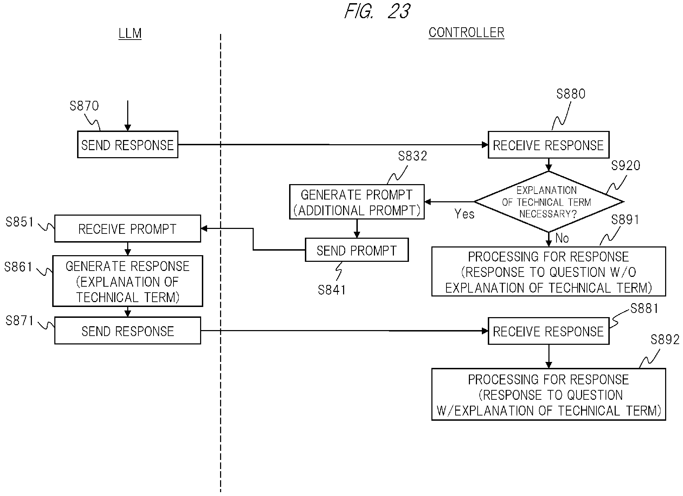

FIG. 23 shows a modification of the processing after the controller 1110 receives the response from the large language model in step S880. In FIG. 23, the processing flow before the large language model sends the response (step S870) is the same as the processing flow of FIG. 11 and the like, and thus, redundant descriptions thereof in FIG. 23 and the present specification are omitted as appropriate.

As shown in FIG. 23, when the controller 1110 receives a response phrase as the response of the large language model (step S880), the controller 1110 determines whether an explanation of a technical term is necessary for the response phrase (step S920). The determination method here is not particularly limited, but for example, a method similar to the above-described check processing of the question phrase may be adopted. Specifically, the response phrase is matched against the reference DB 19010, and whether an explanation of a technical term is necessary is determined based on a determination result as to whether the response phrase includes a technical term as a specific expression registered in the reference DB 19010. That is, when the response phrase includes a technical term as a specific expression, it is determined that an explanation of the technical term is necessary (step S920: Yes), and when the response phrase does not include a technical term as a specific expression, it is determined that an explanation of the technical term is unnecessary (step S920: No).

Here, if it is determined that an explanation of the technical term is unnecessary (step S920: No), the controller 1110 outputs, to the user, the response phrase to the user's question sent from the large language model as processing for the response from the large language model (step S891). Cases in which it is determined that an explanation of the technical term is unnecessary include, for example, a case in which an explanation of a technical term included in the response phrase has already been presented to the user in the past, or a case in which, depending on how an expression is used, the expression is used as a general term.

On the other hand, if it is determined that an explanation of the technical term is necessary (step S920: Yes), the process proceeds to step S832 where the controller 1110 creates a prompt (additional prompt) for instructing the large language model to add an explanation of the technical term to the response phrase, and sends the created additional prompt to the large language model (step S841).

When the large language model receives the additional prompt sent from the controller 1110 (step S851), the large language model creates, as a response to the additional prompt, an explanation of the technical term (step S861). The large language model then sends the created explanation of the term to the controller 1110 (step S871).

When the controller 1110 receives the response sent from the large language model, that is, the explanation of the term (step S881), the controller 1110 outputs, as processing for the response from the large language model, the explanation of the term to the user together with the created response phrase (step S892).

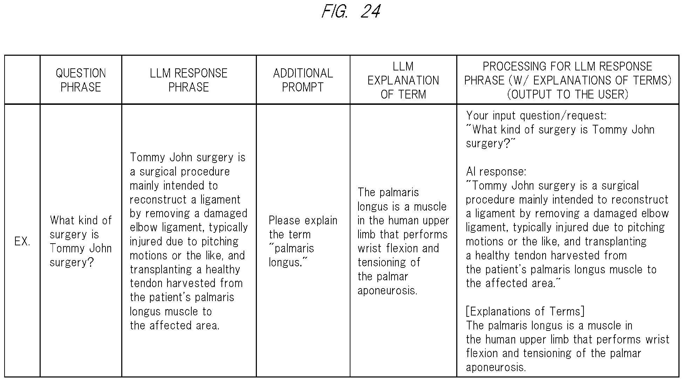

The processing flow of FIG. 23 will be further described with reference to the explanatory diagram of FIG. 24. As shown in FIG. 24, for example, assume that a question phrase "What kind of surgery is Tommy John surgery?" is input by the user, and the large language model creates, as a response to the question phrase, a response phrase stating "Tommy John surgery is a surgical procedure mainly intended to reconstruct a ligament by removing a damaged elbow ligament, typically injured due to pitching motions or the like, and transplanting a healthy tendon harvested from the patient's palmaris longus muscle to the affected area", and sends the created response phrase to the controller 1110 (step S870).

When the controller 1110 receives the response phrase (step S880), for example, the controller 1110 matches the response phrase against the reference DB 19010. At this time, when "palmaris longus" included in the response phrase is registered in the reference DB 19010 as a technical term, the controller 1110 determines that an explanation of the technical term "palmaris longus" is necessary (step S920), generates, for example, an additional prompt stating "Explain the term 'palmaris longus'" (step S832), and sends the generated additional prompt to the large language model (step S841).

When the large language model receives the additional prompt (step S851), the large language model creates, as a response to the additional prompt, an explanation of the term stating "The palmaris longus is a muscle in the human upper limb that performs wrist flexion and tensioning of the palmar aponeurosis" (step S861). Thereafter, the large language model sends the generated explanation of the term (step S871). At this time, the response phrase may also be sent as necessary.

When the controller 1110 receives the explanation of the term (step S881), the controller 1110 causes the display 10011 to display the user's question phrase "What kind of surgery is Tommy John surgery?", the response phrase from the large language model "Tommy John surgery is a surgical procedure mainly intended to reconstruct a ligament by removing a damaged elbow ligament, typically injured due to pitching motions or the like, and transplanting a healthy tendon harvested from the patient's palmaris longus muscle to the affected area", and the explanation of the term by the large language model "The palmaris longus is a muscle in the human upper limb that performs wrist flexion and tensioning of the palmar aponeurosis" as processing for the response from the large language model (answer to the question / with explanation of technical term) (step S892).

If, in step S920, no technical term registered in the reference DB 19010 is found in the response phrase (step S920: No), the controller 1110 causes the display 10011 to display the user's question phrase and the response phrase from the large language model as processing for the response from the large language model (answer to the question / without explanation of technical term) (step S891).

With such a response output processing flow, it is possible to reduce the burden on the user when asking a question to the large language model. For example, when a response phrase from the large language model includes a technical term unknown to the user, the user may need to further ask the large language model a question about the meaning of the technical term. However, by appropriately adding an explanation of the technical term to the response phrase, it is possible to save the user the trouble of asking such an additional question.

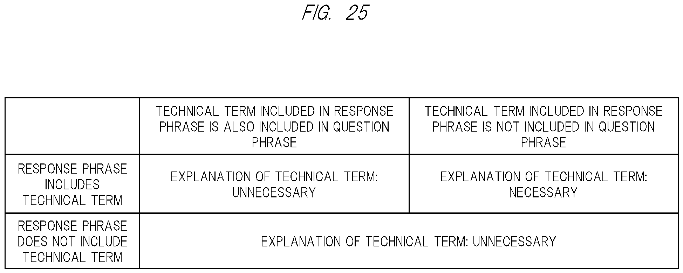

However, even when a technical term is included in the response phrase, an explanation of the technical term does not necessarily have to be added. For example, as shown in FIG. 25, whether an explanation of a technical term is necessary according to the situation may be set beforehand. In this example, even when a technical term is included in the response phrase, if the technical term in the response phrase is also included in the question phrase, the explanation of the technical term is set to "unnecessary". In other words, even when a technical term is included in the response phrase, if the technical term in the response phrase is also included in the user's question phrase, it is determined that the user knows this technical term, and an explanation of the term is not added. Therefore, in the setting example shown in FIG. 25, although a technical term is included in the response phrase, an explanation of the term is added to the response phrase only when the technical term in the response phrase is not included in the user's question phrase. Note that the user may be allowed to change the setting as to whether an explanation of the term is necessary.

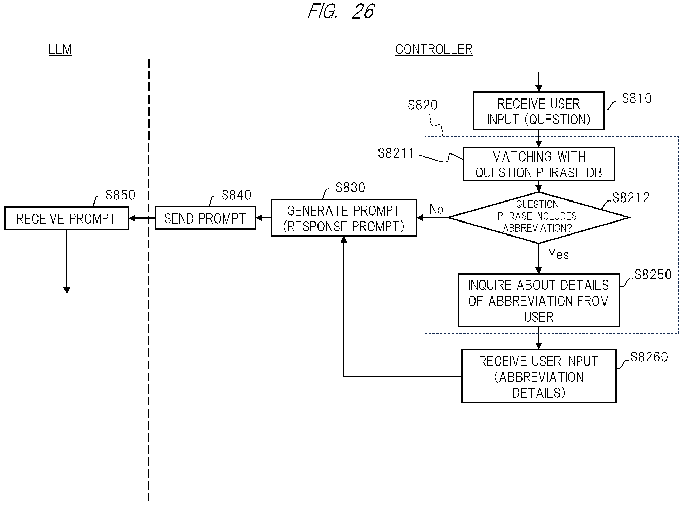

Next, the response output processing flow of the response output system according to the seventh embodiment will be further described with reference to the processing flow of FIG. 26. FIG. 26 shows a modification of the processing flow shown in FIG. 11 and the like, and is an example in which, as the check processing, it is determined whether an "abbreviation" as a specific expression is included in the question phrase.

In the example shown in FIG. 26 as well, when the controller 1110 receives the user input (step S810), the controller 1110 performs database lookup processing of the question phrase in step S8211. In this lookup processing, the question phrase input by the user is matched against the specific expressions registered in the reference DB 19010. In this example, as the lookup processing, the question phrase is matched against "abbreviations" registered in the reference DB 19010.

Next, in step S8212, it is determined whether the question phrase includes an abbreviation registered in the reference DB 19010. If the question phrase does not include an abbreviation as a specific expression (step S8212: No), a response prompt is generated in step S830, and the generated response prompt is transmitted to the large language model (step S840).

On the other hand, when the question phrase includes an abbreviation as a specific expression (step S8212: Yes), the process proceeds to step S8250 where the controller 1110 executes conversion processing of the question phrase. In the present example, processing is performed for requesting details of the abbreviation included in the question phrase from the user. In other words, the controller 1110 performs processing for requesting the user to input an explanation of the abbreviation included in the question phrase or a phrase representing the abbreviation in unabbreviated form, for example, representing the abbreviation ETC in unabbreviated form as Electronic Toll Collection. When the user input in response to this inquiry, that is, detailed information regarding the abbreviation, is received (step S8260), the controller 1110 generates a response prompt based on the user's question phrase and the detailed information regarding the abbreviation (step S830), and sends the generated response prompt to the large language model (step S840).

With such a processing flow, even when an abbreviation is included in the user's question phrase, it becomes easier to obtain, from the large language model, a more suitable response to the question. This is particularly effective when the abbreviation included in the question phrase has multiple meanings, or when the abbreviation is familiar to the user but is not widely recognized in general.

Note that, in the processing flow of FIG. 26, steps S8211, S8212, and S8250 correspond to the check processing and conversion processing of the question phrase. In addition, since the processing flow after the large language model receives the response prompt in step S850 is the same as the processing flow of FIG. 11 and the like, redundant descriptions thereof in FIG. 26 and the present specification are omitted as appropriate.

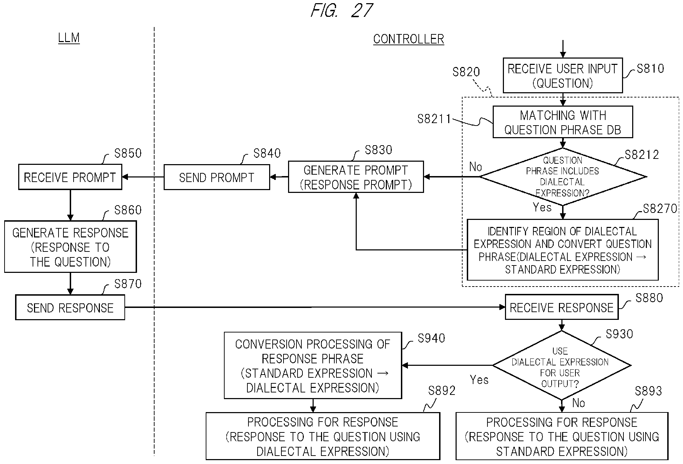

Next, the response output processing flow of the response output system according to the seventh embodiment will be further described with reference to the processing flow of FIG. 27. FIG. 27 shows a modification of the processing flow shown in FIG. 11 and the like, and is an example in which, as the check processing, it is determined whether "dialectal expressions" as specific expressions are included in the question phrase.

In the example shown in FIG. 27 as well, when the controller 1110 receives the user input (step S810), the controller 1110 performs database lookup processing of the question phrase in step S8211. In this lookup processing, the question phrase input by the user is matched against the specific expressions registered in the reference DB 19010. In this example, as the lookup processing, the question phrase is matched against "dialectal expressions" registered in the reference DB 19010.

Next, in step S8212, it is determined whether the question phrase includes dialectal expressions as specific expressions. If the question phrase does not include dialectal expressions as specific expressions (step S8212: No), the controller 1110 generates a response prompt in step S830, and sends the generated response prompt to the large language model (step S840).

On the other hand, if the question phrase includes dialectal expressions (step S8212: Yes), the process proceeds to step S8270 where the controller 1110 executes conversion processing of the question phrase. In the present example, based on user information registered beforehand, conversations conducted between the user and the large language model prior to the question, and the like, the controller 1110 identifies the region of the dialect likely used by the user, and performs processing for converting dialectal expressions in the question phrase into standard expressions based on the identified dialect region. Thereafter, the controller 1110 generates a response prompt based on the question phrase subjected to the conversion processing (converted question phrase) (step S830), and sends the generated response prompt to the large language model (step S840). In other words, regardless of whether dialectal expressions are used in the question phrase by the user, the controller 1110 generates a response prompt based on a question phrase written in standard expressions and sends the response prompt to the large language model.

As in the processing flow shown in FIG. 11 and the like, when the large language model receives the response prompt (step S850), the large language model generates a response (response phrase) according to the received response prompt (step S860), and sends the generated response (response phrase) to the controller 1110 (step S870).

When the controller 1110 receives the response transmitted from the large language model (step S880), the controller 1110 determines whether to use dialectal expressions in the output to the user (step S930).

In the present example, if the question phrase input by the user uses dialectal expressions, it is determined that dialectal expressions are to be used in the response phrase to be output to the user (step S930: Yes). In other words, if the response prompt is based on the converted question phrase, it is determined that dialectal expressions are to be used in the output to the user. In this case, the process proceeds to step S940 where the controller 1110 executes conversion processing of the response phrase. Specifically, processing is performed for converting standard expressions in the response phrase into dialectal expressions corresponding to the identified dialect region. Thereafter, the controller 1110 outputs, as processing for the response from the large language model, a response phrase using dialectal expressions (converted response phrase) to the user (step S892).

On the other hand, if it is determined that the question phrase input by the user uses standard expressions in step S930, it is determined that standard expressions are to be used in the response phrase to be output to the user (step S930: No). In other words, if the response prompt is based on the original question phrase input by the user, it is determined that standard expressions are to be used in the output to the user. In this case, the process proceeds to step S893 where the controller 1110 outputs, as processing for the response from the large language model, a response phrase using standard expressions to the user (step S893).

With such a processing flow, even when dialectal expressions are included in the user's question phrase, the question is asked after being converted so that the large language model can understand the meanings of words unique to dialectal expressions that differ from standard expressions. This makes it easier to obtain a more suitable response to the question from the large language model. In addition, by converting the response from the large language model into dialectal expressions corresponding to the dialect region input by the user as the question phrase and presenting the converted response to the user, the user can feel as if the user were interacting with someone close to the user when interacting with the large language model.

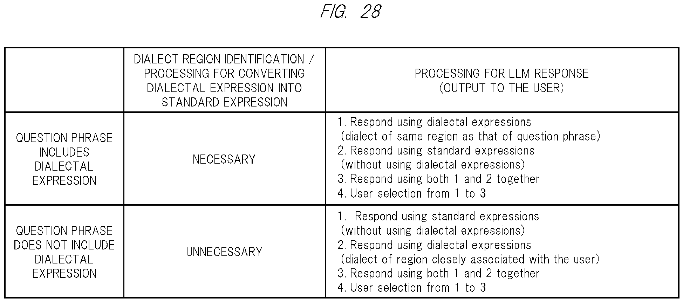

Note that, regarding whether conversion processing of the question phrase is necessary and the content of processing for the response from the large language model are set beforehand as an example shown in FIG. 28. In the example shown in FIG. 28, regarding whether conversion processing of the question phrase (dialect region identification and processing for converting dialectal expressions into standard expressions) is necessary, the setting is "necessary" if the question phrase includes dialectal expressions, and "unnecessary" if the question phrase does not include dialectal expressions. This necessity setting may be changed by the user as appropriate.

In addition, regarding the processing for the response from the large language model, processing content is also set for each of a case where the question phrase includes dialectal expressions and a case where the question phrase does not include dialectal expressions. In this example, as the processing content for the case where "the question phrase includes dialectal expressions", any one of "1. Respond using dialectal expressions (dialect of same region as that of question phrase)", "2. Respond using standard expressions (without using dialectal expressions)", "3. Respond using both 1 and 2 together", and "4. User selection from 1 to 3" is set beforehand. Likewise, as the processing content for the case where "the question phrase does not include dialectal expressions", any one of "1. Respond using standard expressions (without using dialectal expressions)", "2. Respond using dialectal expressions (dialect of region closely associated with the user)", "3. Respond using both 1 and 2 together", and "4. User selection from 1 to 3"is set beforehand.

Note that, when "4. User selection from 1 to 3" is set, the user selects any one of items 1 to 3 at any timing, for example, when inputting the question phrase. Further, this setting may be changed, for example, by displaying a user setting menu screen through selection of a predetermined menu item displayed on the display 10011 during system use, and allowing the setting to be changed on the user setting menu screen.

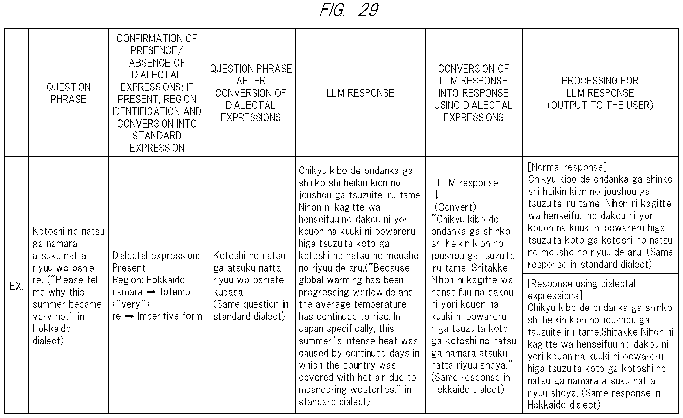

Next, the processing flow of FIG. 27 will be further described with reference to the explanatory diagram of FIG. 29. As shown in FIG. 29, for example, when a question "Kotoshi no natsu ga namara atsuku natta riyuu wo oshie re" ("Tell me why this summer became very hot" in Hokkaido dialect) is input by the user by audio input (step S810), the controller 1110 matches a question phrase obtained by converting the question into text against the reference DB 19010 (step S8211), and determines whether dialectal expressions are present in the question phrase (step S8212).

Here, when it is determined that dialectal expressions are present in the question phrase (step S8212: Yes), the controller 1110 identifies a dialect region, and converts the dialectal expressions in the question phrase into standard expressions based on the identified dialect region (step S8270). In the example of FIG. 29, the presence/absence of dialectal expressions in the question phrase is determined as "present", and the dialect region is identified as "Hokkaido". Then, the dialectal expression "namara" ("very" in Hokkaido dialect) in the question phrase is converted into the standard expression "totemo" ("very" in standard dialect), and the dialectal expression "re" (imperative form in Hokkaido dialect) is converted into an imperative form as a standard expression. As a result, the above question phrase is converted into "Kotoshi no natsu ga atsuku natta riyuu wo oshiete kudasai" (same question in standard dialect).

Thereafter, as described above, the controller 1110 generates a response prompt based on the question phrase subjected to the conversion processing (converted question phrase) (step S830), and sends the generated prompt to the large language model (step S840).

In addition, when the large language model receives the response prompt (step S850), the large language model generates, as a response according to the received response prompt, a response phrase in standard expressions stating, for example, "Chikyu kibo de ondanka ga shinko shi heikin kion no joushou ga tsuzuite iru tame. Nihon ni kagitte wa henseifuu no dakou ni yori kouon na kuuki ni oowareru higa tsuzuita koto ga kotoshi no natsu no mousho no riyuu de aru" ("Because global warming has been progressing worldwide and the average temperature has continued to rise. In Japan specifically, this summer's intense heat was caused by continued days in which the country was covered with hot air due to meandering westerlies" in standard dialect) (step S860). Then, the large language model sends the generated response phrase to the controller 1110 (step S870).

When the controller 1110 receives the response phrase sent from the large language model (step S880), the controller 1110 determines whether to use dialectal expressions in the output to the user (step S930). Here, if it is determined that dialectal expressions are to be used in the response phrase to be output to the user (step S930: Yes), the controller 1110 performs conversion processing on the response phrase and creates, for example, a converted response phrase (response phrase using dialectal expressions) stating "Chikyu kibo de ondanka ga shinko shi heikin kion no joushou ga tsuzuite iru tame. Shitakke Nihon ni kagitte wa henseifuu no dakou ni yori kouon na kuuki ni oowareru higa tsuzuita koto ga kotoshi no natsu ga namara atsuku natta riyuu shoya" (same response in Hokkaido dialect) (step S940), and outputs the generated converted response phrase to the user (step S892).

On the other hand, in step S930, if it is determined that dialectal expressions are not to be used in the response phrase to be output to the user (step S930: No), the controller 1110 outputs, to the user, as processing for the response from the large language model, a response phrase using standard expressions, namely the normal response "Chikyu kibo de ondanka ga shinko shi heikin kion no joushou ga tsuzuite iru tame. Nihon ni kagitte wa henseifuu no dakou ni yori kouon na kuuki ni oowareru higa tsuzuita koto ga kotoshi no natsu no mousho no riyuu de aru" (same response in standard dialect) (step S893).

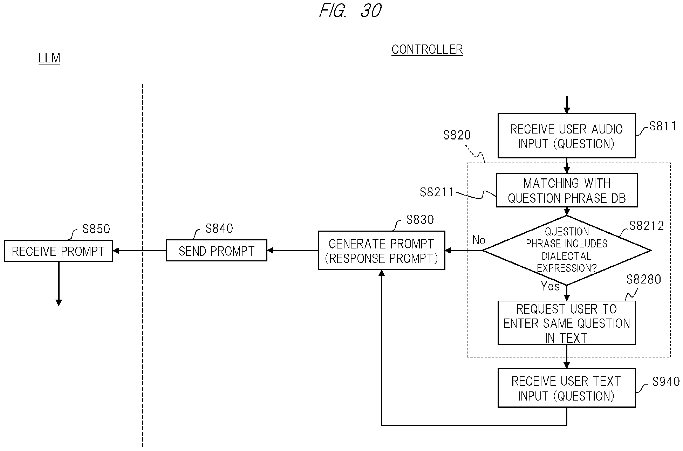

Next, the response output processing flow of the response output system according to the seventh embodiment will be further described with reference to the processing flow of FIG. 30. FIG. 30 shows a modification of the processing flow shown in FIG. 27, specifically, a modification of the conversion processing of the question phrase when dialectal expressions are included in the question phrase.

The example shown in FIG. 30 is an example in which the user inputs a question by audio using the microphone 1139 or the like. As shown in FIG. 30, when the controller 1110 receives the user's question input by audio (user input) (step S811), the controller 1110 then performs database lookup processing on a question phrase obtained by converting the question into text (step S8211). In this lookup processing, as in the example of FIG. 27, the question phrase is matched against "dialectal expressions" registered in the reference DB 19010. The controller 1110 then determines whether the question phrase includes dialectal expressions as specific expressions (step S8212).

Here, if the question phrase does not include dialectal expressions as specific expressions (step S8212: No), as in the example of FIG. 27, the controller 1110 generates a response prompt in step S830, and sends the generated response prompt to the large language model (step S840).

On the other hand, if the question phrase includes dialectal expressions (step S8212: Yes), the process proceeds to step S8280 where the controller 1110 performs, as conversion processing of the question phrase, processing for requesting the user to input, as text by operating the operation input unit 1107, the question that was input by audio. For example, the controller 1110 displays, on the display 10011, information requesting the user to re-input the question by operating the operation input unit 1107.

In response to this request, when the user inputs the question as text and the controller 1110 receives the input question phrase (step S950), the controller 1110 generates a response prompt based on the question phrase input as text (converted question phrase) (step S830), and sends the generated response prompt to the large language model (step S840).

In audio input, even when dialectal expressions are included in the question phrase, if the user inputs the same question as the text, it is expected that the question will be input in standard expressions. In other words, by changing the input method of the question by the user, it is expected that the question phrase using dialectal expressions will be converted into a question phrase using standard expressions. Therefore, with the processing flow of this example as well, it becomes easier to obtain a suitable response from the large language model to the user's question including dialectal expressions.

Note that, in the processing flow of FIG. 30, steps S8211, S8212, and S8280 correspond to the check processing and conversion processing of the question phrase. In addition, the processing flow after the large language model receives the response prompt in step S850 is the same as the processing flow of FIG. 27, and thus, redundant descriptions thereof in FIG. 30 and the present specification are omitted as appropriate.

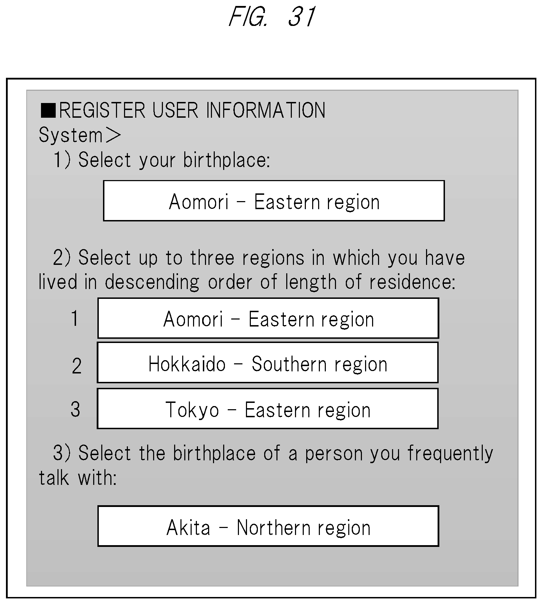

In addition, as described above, the region of the dialect used by the user is identified, for example, from user information registered beforehand. Therefore, it is preferable that the user information includes information suitable for identifying the region of the dialect. FIG. 31 is a drawing showing an example of a user information registration screen. In the screen example shown in FIG. 31, information regarding "the user's birthplace", "information on regions where the user has lived", and "the birthplace of a person with whom the user frequently has opportunities to converse" is registered as user information. Registration of such information is necessary because dialects may have subtle differences from municipality to municipality or from household to household even within the same region, may change over time, and may be influenced by the places where the user has spent time and by the speech of people with whom the user frequently interacts in daily life. By registering such information including the birthplace as user information, it becomes easier to identify the dialect region used by the user based on the user information.

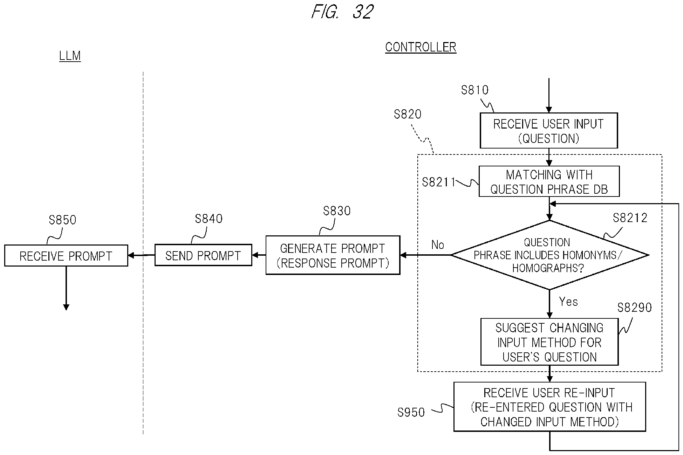

Next, the response output processing flow of the response output system according to the seventh embodiment will be further described with reference to the processing flow of FIG. 32. FIG. 32 shows a modification of the processing flow shown in FIG. 11 and the like, and is an example in which, as the check processing, it is determined whether "homonyms/homographs" as specific expressions are included in the question phrase. The term "homonyms/homographs" as used herein means "homonyms and/or homographs". Further, "homonyms/homographs are included" means that a specific term for which homonyms/homographs exist is included.

In the example shown in FIG. 32 as well, when the controller 1110 receives the user input (step S810), the controller 1110 performs database lookup processing of the question phrase in step S8211. In this lookup processing, the question phrase input by the user is matched against the specific expressions registered in the reference DB 19010. In this example, as the lookup processing, the question phrase is matched against "homonyms/homographs" registered in the reference DB 19010.

Next, in step S8212, it is determined whether the question phrase includes a homonym/homograph as a specific expression registered in the reference DB 19010. In other words, in step S8212, it is determined whether the question phrase includes a homonym/homograph whose meaning is unclear. If the question phrase does not include a homonym/homograph whose meaning is unclear (step S8212: No), a response prompt based on the original question phrase input by the user is generated in step S830, and the generated response prompt is sent to the large language model (step S840).

On the other hand, if the question phrase includes a homonym/homograph as a specific expression and the meaning thereof is unclear (step S8212: Yes), the process proceeds to step S8290 where the controller 1110 performs conversion processing of the question phrase. In other words, the controller 1110 performs processing for clarifying the homonym/homograph whose meaning is unclear. In this example, the controller 1110 performs processing for requesting or suggesting that the user change the input method for the question. That is, the controller 1110 performs processing for requesting or suggesting that the user ask the question again by a second method, which is an input method different from the first method used as the previous input method.

When the controller 1110 receives the user re-input in response to this request or the like, that is, a re-asked question with a changed input method (converted question phrase) (step S950), the process returns to step S8212 where it is determined whether the converted question phrase includes a homonym/homograph whose meaning is unclear. If it is determined that the converted question phrase does not include a homonym/homograph whose meaning is unclear (step S8212: No), the process proceeds to step S830 where a response prompt based on the converted question phrase is generated, and the generated response prompt is sent to the large language model (step S840).

Note that, in the processing flow of FIG. 32, steps S8211, S8212, and S8290 correspond to the check processing and conversion processing of the question phrase. In addition, the processing flow after the large language model receives the response prompt in step S850 is the same as the processing flow of FIG. 11 and the like, and thus, redundant descriptions thereof in FIG. 32 and the present specification are omitted as appropriate.

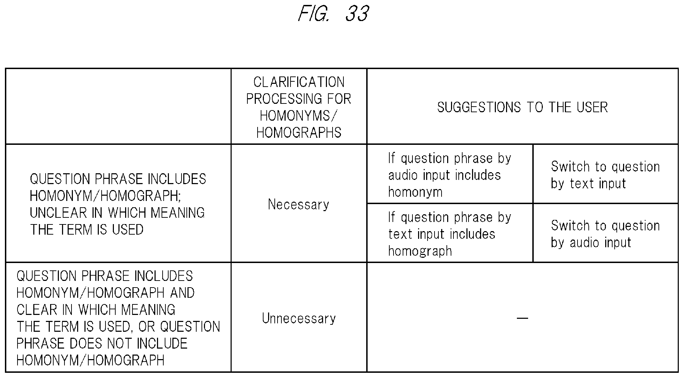

In addition, whether clarification processing for homonyms/homographs is necessary, that is, whether re-asking the question with a changed input method is necessary, and the content of a suggestion or request to the user for changing the input method are set beforehand, as in the example shown in FIG. 33. In the example shown in FIG. 33, for the clarification processing for homonyms/homographs, the setting is "necessary" if "the question phrase includes a homonym, and the meaning in which the term is used is unclear", and is "unnecessary" if "the question phrase includes a homonym/homograph, but the meaning in which the term is used is clear, or the question phrase does not include a homonym/homograph". This necessity setting may be changed by the user as appropriate.

In addition, the content of the suggestion to the user for changing the input method is set only if the clarification processing for homonyms/homographs is set to "necessary", namely if "the question phrase includes a homonym, and the meaning in which the term is used is unclear". In this example, as the suggestion content for "if a question phrase input by audio includes a homonym", "switching the input method of the question from audio input to text input" is set, and as the suggestion content for "if a question phrase input by text includes a homograph", "switching the input method of the question from text input to audio input" is set.

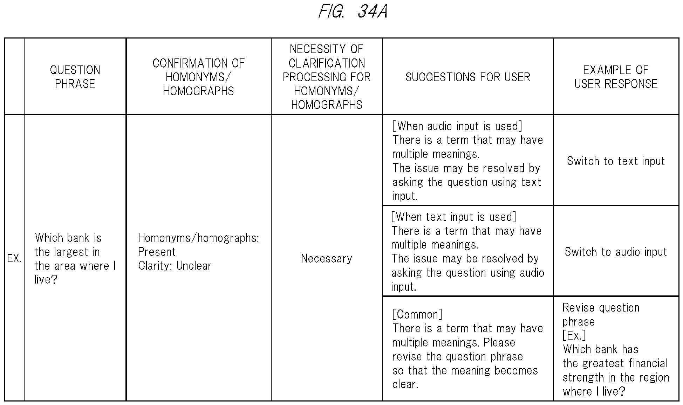

Next, the processing flow shown in FIG. 32 will be further described with reference to FIGS. 34A to 34C. Each of FIGS. 34A to 34C is a drawing for explaining a specific example of the processing flow shown in FIG. 32.

For example, as shown in FIG. 34A, assume that a question "Which bank is the largest in the area where I live?" is received from the user (step S810). Also assume that, in step S8212, "bank" in the question phrase is registered in the reference DB 19010 as a "homonym" and a "homograph", and it is determined that its meaning in the question phrase is unclear (step S8212: Yes). For example, the meaning of "bank" in this question phrase may be "bank" as a financial institution, or "bank" as an inclined surface such as a bank of earth. In this case, as shown in FIG. 33, the condition under which clarification processing for homonyms/homographs is "necessary" is satisfied. Therefore, the controller 1110 performs processing for suggesting to the user to change the input method of the question (step S8290). This makes it possible to clarify the meaning of the homonym/homograph included in the question phrase.

As an example of suggestion processing when audio input is used as the input method of the question, the controller 1110 displays "There is a term that may have multiple meanings. The issue may be resolved by asking the question using text input". An example of the user's response to this suggestion is switching the input method of the question from audio input to text input. This response is considered particularly effective when the question phrase includes a homonym.

In addition, as an example of suggestion processing when text input is used as the input method of the question, the controller 1110 displays "There is a term that may have multiple meanings. The issue may be resolved by asking the question using audio input". An example of the user's response to this suggestion is switching the input method of the question from text input to audio input. This response is considered particularly effective when the question phrase includes a homograph.

In addition, as an example of suggestion processing common to when audio input is used and when text input is used as the input method of the question, the controller 1110 displays "There is a term that may have multiple meanings. Please revise the question phrase so that the meaning becomes clear". An example of the user's response to this suggestion is revising the question phrase and changing it to, for example, "Which bank has the greatest financial strength in the region where I live?"

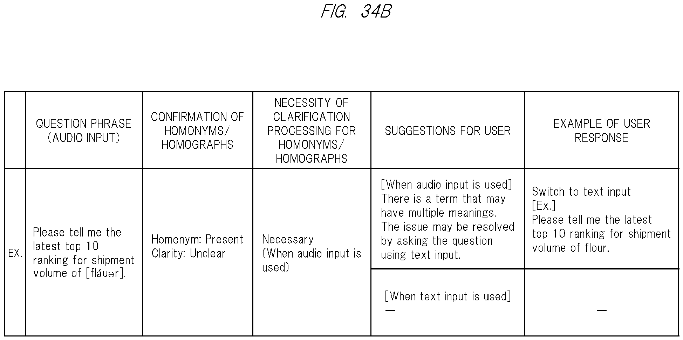

In addition, for example, the words "Flour" and "Flower" have the same pronunciation but different meanings, and depending on the spoken content, it may not be possible to identify which one is intended. As shown in FIG. 34B, assume that a question phrase "Tell me the latest top 10 ranking for shipment volume of [flower/flour]" input by the user by audio input is received (step S810). Further, assume that, in step S8212, "flower/flour" in the question phrase input by audio input is registered in the reference DB 19010 as a "homonym", and it is determined that its meaning in the question phrase is unclear (step S8212: Yes). As for "flower/flour" in this question phrase, for example, it may be narrowed down, based on the term "shipment volume" in the question phrase, to something that can be a shipment target, and based on the pronunciation in the audio input, to "flour" or "flower". However, since the two have the same pronunciation, it may not be possible to identify which one "flower" or "flour" in the user's question phrase indicates. In this case as well, as shown in FIG. 33, the condition under which clarification processing for homonyms/homographs is "necessary" is satisfied. Therefore, the controller 1110 performs processing for suggesting that the user change the input method of the question (step S8290).

In this example, since audio input is used as the input method of the question, the controller 1110 displays, as an example of suggestion processing, "There is a term that may have multiple meanings. The issue may be resolved by asking the question using text input". An example of the user's response to this suggestion is switching the input method of the question from audio input to text input. Further, a specific example of the user's response is inputting the above question by text as "Tell me the latest top 10 ranking for shipment volume of flour". In this manner, when the meaning of a term included in the question phrase is unclear in audio input and what the term means cannot be identified, prompting the user to re-ask the question by switching to text input makes it possible to clarify the meaning of the user's question and, as a result, makes it easier to obtain the response expected by the user from the large language model.

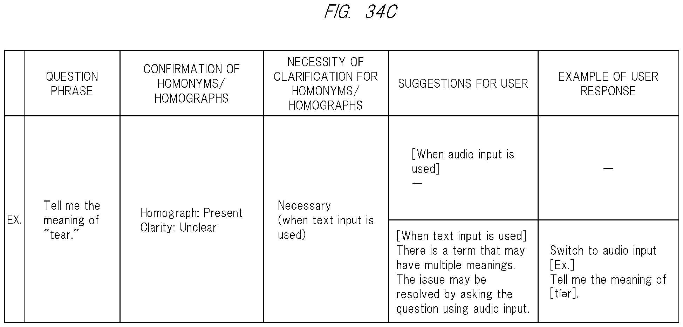

In addition, for example, as shown in FIG. 34C, assume that a question "Tell me the meaning of 'tear'" input by the user by text input is received (step S810). Further, assume that, in step S8212, "Tear" in the question phrase is registered in the reference DB 19010 as a "homograph", and it is determined that its meaning in the question phrase is unclear (step S8212: Yes). In this case as well, as shown in FIG. 33, the condition under which clarification processing for homonyms/homographs is "necessary" is satisfied. Therefore, the controller 1110 performs processing for suggesting that the user change the input method of the question (step S8290).

In this example, since text input is used as the input method of the question, the controller 1110 displays, as an example of suggestion processing, "There is a term that may have multiple meanings. The issue may be resolved by asking the question using audio input". An example of the user's response to this suggestion is switching the input method of the question from text input to audio input. Further, a specific example of the user's response is inputting "Tear" by audio input with an accurate pronunciation in response to the question "Tell me the meaning of [Tear]".

In this manner, since "Tear" has multiple meanings when input by text, it is difficult to determine which meaning of "Tear" should be answered. However, by pronouncing "Tear" accurately through audio input, it becomes easier to determine, even for the same "Tear", which meaning of "Tear" the user wishes to know, and, as a result, it becomes easier to obtain the response expected by the user from the large language model.

Note that, in the examples shown in FIGS. 34A to 34C, examples have been described in which, when a homonym/homograph whose meaning is unclear is included in the question phrase, a change in the input method is suggested to the user. However, an inquiry may be made to the user regarding the homonym/homograph whose meaning is unclear.

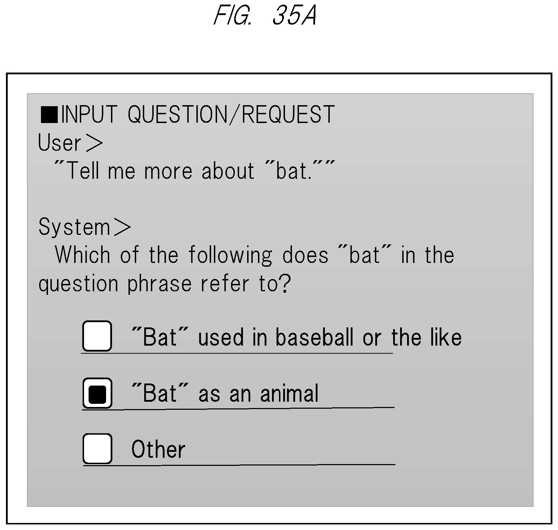

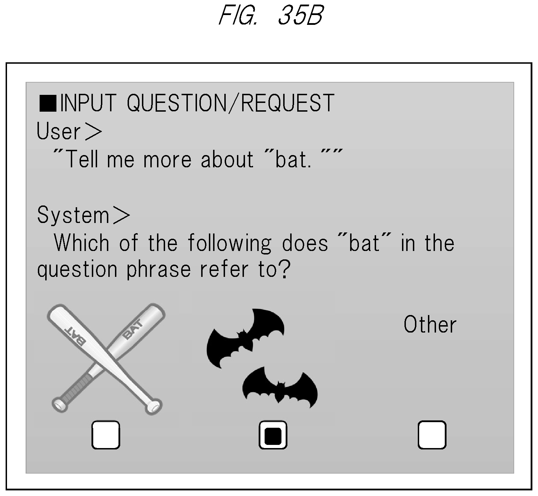

FIGS. 35A and 35B are drawings showing examples of screens for asking the user about the meaning of a homonym/homograph. The screen examples shown in FIGS. 35A and 35B are examples in which, when "Bat", which is a homonym/homograph, is included in the question phrase, a plurality of options regarding the meaning of "Bat" are displayed for selection by the user. Further, the example shown in FIG. 35A is an example in which the meaning of "Bat" is asked about using text, and FIG. 35B is an example in which the meaning of "Bat" is asked about using images.

By displaying a plurality of options in this manner and asking about the meaning of the homonym/homograph, it becomes easier for the user to respond to the inquiry. In addition, before showing such a plurality of options or images to the user, the meaning of the homonym/homograph may be estimated based on personal information registered by the user, intended use, or the like, and then the user may be asked about the estimated meaning or a narrowed expression. However, the method of inquiry is not limited thereto.

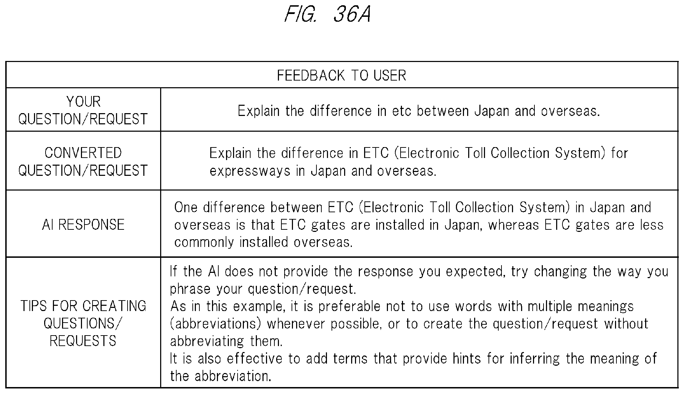

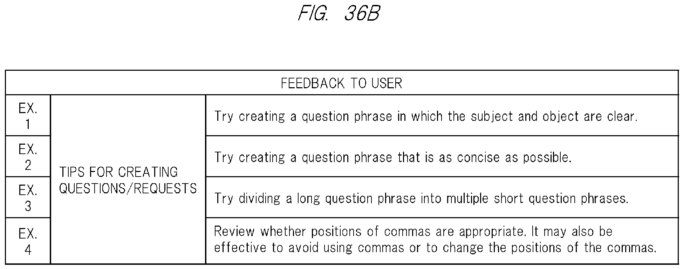

Next, a modification of the response output system according to the seventh embodiment will be described with reference to the explanatory diagrams of FIGS. 36A and 36B. In the response output system according to the seventh embodiment, when the user asks a question to the large language model as described above, check processing and conversion processing of the question phrase are executed as necessary. When check processing and conversion processing of the question phrase are performed, for example, feedback regarding the check processing and conversion processing may be provided to the user when the response from the large language model is output to the user.

For example, as shown in FIG. 36A, assume that when the user asks the question "Explain the difference in etc between Japan and overseas", the controller 1110 performs conversion processing of the question phrase and generates a converted question phrase "Explain the difference in ETC (Electronic Toll Collection System) for expressways in Japan and overseas". Further, assume that, in response to this converted question phrase, a response phrase "One difference between ETC (Electronic Toll Collection System) in Japan and overseas is that ETC gates are installed in Japan, whereas ETC gates are less commonly installed overseas" is obtained from the large language model.

In this case, as the user output, the response phrase of the large language model may be displayed on the display 10011, and, as feedback from the controller 1110 to the user, advice having content such as "If the AI does not provide the response you expected, try changing the way you phrase your question/request. As in this example, it is preferable not to use words with multiple meanings (abbreviations) whenever possible, or to create the question/request without abbreviating them. It is also effective to add terms that provide hints for inferring the meaning of the abbreviation" may also be displayed. The content of the feedback to the user is not particularly limited, and, for example, as shown in FIG. 36B, tips for creating questions/requests such as Examples 1 to 4 may be displayed.

### <Eighth Embodiment>

The response output system of the eighth embodiment includes a translation server in addition to the configuration of the seventh embodiment described above. In the response output system of the eighth embodiment, as in the seventh embodiment, the artificial intelligence response output apparatus 10010 is communicably connected via the Internet 19000 to the large language model server 19001 or the large language model server 20001 equipped with a large language model, and to a second server 19002 different from these servers. In this example, the second server 19002 functions as the translation server.

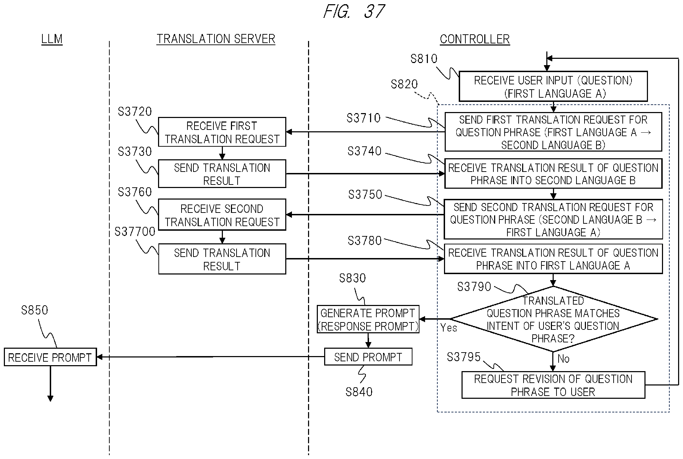

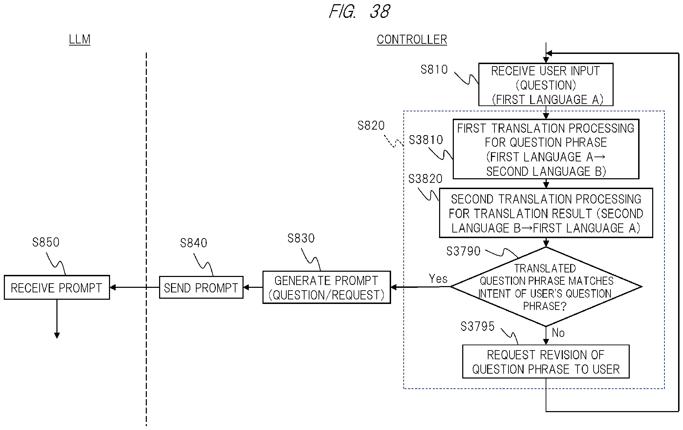

FIGS. 37 and 38 are drawings showing examples of a response output flow in the response output system of the eighth embodiment. An example of response output processing of the eighth embodiment will be described with reference to FIGS. 37 and 38.

For example, assume that the user asks the large language model a question in first language A which is Japanese. In this case, as shown in FIG. 37, when the controller 1110 receives the question in first language A input by the user (step S810), the controller 1110 sends, in step S3710, a first translation request to the translation server for translating the question phrase from first language A into second language B (language different from first language A such as English). When the translation server receives the first translation request sent from the controller 1110 (step S3720), the translation server performs translation processing for translating the question phrase from first language A into second language B in response to the first translation request, and sends the translation result to the controller 1110 (step S3730).

When the controller 1110 receives the translation result of the question phrase sent from the translation server, that is, the question phrase in second language B (step S3740), the controller 1110 sends, to the translation server, a second translation request requesting further translation of the question phrase in second language B (step S3750). In other words, the second translation request is a request for the translation server to translate the question phrase translated into language B back into the original language A.

When the translation server receives the second translation request sent from the controller 1110 (step S3760), the translation server re-translates the question phrase in second language B which is the translation result for the first translation request into first language A in response to the second translation request, and sends the re-translation result to the controller 1110 (step S3770).

When the controller 1110 receives the question phrase in first language A which is the translation result for the second translation request sent from the translation server (step S3780), the controller 1110 performs processing for confirming with the user whether the received question phrase in first language A and the user question phrase input by the user in first language A (original question phrase) match the user's intent (step S3790). If, in response to this confirmation processing, a response is received from the user indicating that the question phrase as the translation result and the user question phrase match the user's intent (step S3790: Yes), the process proceeds to step S830 where the controller 1110 generates a response prompt based on the question phrase in first language A as the translation result or the user question phrase, and sends the generated response prompt to the large language model (step S840).

On the other hand, if a response is received from the user indicating that the question phrase in first language A as the translation result and the user question phrase (original question phrase) do not match the user's intent (step S3790: No), processing for requesting the user to revise the question phrase is performed (step S3795). This is because, with the current question phrase, there is a possibility that the response desired by the user cannot be obtained from the large language model. In this case, the process returns to step S810. When the controller 1110 receives the question phrase revised by the user, the processing from step S3710 to step S3790 is performed again. If, in step S3790, a response is received from the user indicating that the question phrase as the translation result and the user question phrase match the user's intent (step S3790: Yes), the process proceeds to step S830 as described above where the controller 1110 generates a response prompt based on the question phrase as the translation result or the user question phrase (revised question phrase), and sends the generated response prompt to the large language model (step S840).

In the processing flow shown in FIG. 37, steps S3710, S3740, S3750, S3780, S3790, and S3795 correspond to step S820 for performing conversion processing of the question phrase. In addition, the processing after the large language model receives the response prompt in step S850 is the same as that in the processing flow of FIG. 11 and the like, and thus, redundant descriptions thereof in FIG. 37 and the present specification are omitted as appropriate.

In addition, in the above-described example, a case has been described in which the second server 19002 functions as the translation server. However, the large language model server 19001 or the large language model server 20001 may function as the translation server. It goes without saying that the translation server may be provided independently of these large language model servers 19001 and 20001 and may be communicable with the response output apparatus 10010. Further, the response output apparatus 10010 may function as the translation server. That is, the controller 1110 may perform translation of the question phrase.

The processing flow shown in FIG. 38 is an example of a processing flow in a case where the controller 1110 translates the question phrase. In this example, as shown in FIG. 38, when the controller 1110 receives a question in first language A (for example, Japanese) input by the user (step S810), the controller 1110 executes, in step S3810, first translation processing for translating the question phrase from first language A into second language B (language different from first language A such as English). Further, the controller 1110 executes second translation processing for translating the translation result of the first translation processing, that is, the question phrase in second language B, into first language A (step S3830). In other words, the second translation processing is processing for translating the question phrase translated into second language B back into the original first language A (Japanese in the present example).

The subsequent processing flow is the same as that in the example shown in FIG. 37, and the controller 1110 performs processing for confirming with the user whether the question phrase in the first language which is the translation result of the second translation processing and the original question phrase input by the user in the first language matches the user's intent (step S3790). When a response is received from the user indicating that the question phrase subjected to the translation processing and the original question phrase matches the user's intent (step S3790: Yes), the process proceeds to step S830 where the controller 1110 generates a response prompt based on the question phrase in first language A as the translation result or the original question phrase, and sends the generated response prompt to the large language model (step S840).

On the other hand, when a response is received from the user indicating that the question phrase subjected to the translation processing and the original question phrase do not match the user's intent (step S3790: No), processing for requesting the user to revise the question phrase is performed (step S3795). In this case, the process returns to step S810. When the controller 1110 receives the question phrase revised by the user, the processing of steps S3810, S3820, and S3790 is performed again. When, in step S3790, a response is received from the user indicating that the question phrase subjected to the translation processing and the question phrase revised by the user match the user's intent (step S3790: Yes), the process proceeds to step S830 as described above where the controller 1110 generates a response prompt based on the question phrase as the translation result or the question phrase revised by the user, and sends the generated response prompt to the large language model (step S840).

In the processing flow shown in FIG. 38, steps S3810, S3820, S3790, and S3795 correspond to the conversion processing of the question phrase. In addition, the processing after the large language model receives the response prompt in step S850 is the same as that in the processing flow of FIG. 11 and the like, and thus, redundant descriptions thereof in FIG. 38 and the present specification are omitted as appropriate.

As described above, in the response output system of the eighth embodiment, when the user asks a question to the large language model, translation processing is performed in which the question phrase in first language A input by the user is temporarily translated into second language B which is different from first language A, and the question phrase translated into second language B is re-translated into first language A. Then, when the user determines that the question phrase subjected to the translation processing and the original question phrase match the user's intent, a response from the large language model to the user's question is obtained.

This makes it easier to obtain, from the large language model, a more suitable response to the user's question. By performing the above-described translation processing on the question phrase, it is expected that the question phrase will be clarified, for example, in terms of the correspondence between a subject and a predicate. For example, Japanese sentences may be more ambiguous than sentences in other languages such as English. Therefore, by temporarily translating Japanese into English and then translating the translated English back into Japanese, it is expected that the sentence will be clarified. Therefore, by requesting a response from the large language model based on the question phrase subjected to the translation processing, it becomes easier to obtain, from the large language model, a response intended by the user.

Note that, in the eighth embodiment, translation processing is performed using two languages, Japanese and English. However, the types of languages used and the number of translations are not particularly limited. As the above translation processing, for example, the question phrase in first language A which is Japanese may be translated into third language C other than English, and the question phrase in third language C may be translated into first language A which is Japanese. Further, for example, after the question phrase in first language A is translated into second language B, second language B may further be translated into third language C, and the question phrase in third language C may then be translated back into first language A.

Further, for example, as in the example shown in FIG. 38, when the question phrase as the translation result obtained by translating the question phrase in first language A into second language B does not match the original user question phrase in intent, conversion processing of the question phrase may further be performed by changing second language B to third language C.

In addition, the technology described in the present embodiment makes it possible to provide more suitable artificial intelligence response output technology. Such artificial intelligence response output technology is expected to be introduced into infrastructure that is of higher quality and more reliable. As this technology is introduced into infrastructure, it will contribute to economic development and human welfare by prioritizing affordable and equitable access for all people. This will contribute to the United Nations' Sustainable Development Goals (SDGs) "9: Build resilient infrastructure, promote inclusive and sustainable industrialization, and foster innovation".

In addition, the technology of the present embodiment makes it possible to provide a more suitable artificial intelligence response output technology. Such artificial intelligence response output technology is expected to be introduced into public transportation facilities to improve accessibility to transportation systems for people in vulnerable positions. The introduction of this technology into public transportation systems is expected to contribute to improving traffic safety through the expansion of public transportation systems, as well as realizing access to sustainable transportation systems that are safe, affordable, and easily accessible to all people. This will contribute to the United Nations' Sustainable Development Goals (SDGs) "11: Sustainable Cities and Communities".

The above describes various embodiments in detail; however, the present invention is not limited to the embodiments described above and includes various modifications. For example, the above-described embodiments are detailed descriptions of the entire system for the purpose of clearly explaining the present invention and are not necessarily limited to having all the configurations described. Furthermore, it is possible to replace part of the configuration of one embodiment with the configuration of another embodiment, and it is also possible to add the configuration of another embodiment to the configuration of one embodiment. Additionally, it is possible to add, delete, or replace part of the configuration of each embodiment with other configurations.

### EXPLANATION OF REFERENCE SIGNS

10010...artificial intelligence response output apparatus, 10011...display, 10028...local LLM processor, 1107...operation input unit, 1110...controller, 1132...communication unit, 1140...audio output unit, 1139...microphone, 1160...image controller, 1170...storage, 1180...imager

## Claims

1. A response output system comprising:
an input unit configured to receive a question phrase input by a user;
a controller configured to generate a response prompt for a large language model based on the question phrase and acquire a response phrase generated by the large language model for the response prompt; and
an output unit configured to perform an output based on the response phrase acquired from the controller,
wherein the controller is configured to execute conversion processing of the question phrase and generate the response prompt based on the question phrase after the conversion processing.

2. The response output system according to claim 1,
wherein the controller is configured to:
perform check processing for confirming whether the question phrase corresponds to a predetermined check item; and
execute the conversion processing of the question phrase when the question phrase corresponds to the check item.

3. The response output system according to claim 2,
wherein the check item includes that the question phrase includes a predetermined specific expression, and
wherein, in the check processing, the controller is configured to perform the conversion processing of the question phrase when the question phrase includes the specific expression.

4. The response output system according to claim 3,
wherein the specific expressions are classified into a plurality of groups, and
wherein the controller is configured to:
confirm, as the check processing, whether the question phrase includes a specific expression classified into a predetermined set group among the plurality of groups; and
perform the conversion processing of the question phrase when the question phrase includes the specific expression classified into the set group.

5. The response output system according to claim 4,
wherein a precedence level is set beforehand for each of the set groups, and
wherein the controller is configured to confirm, in an order according to the precedence levels, whether the question phrase includes the specific expressions classified into the respective set groups.

6. The response output system according to claim 1,
wherein the controller is configured to perform, as the conversion processing of the question phrase, processing for generating a conversion prompt requesting conversion of the question phrase, and acquiring, as the question phrase after the conversion processing, a question phrase converted by the large language model in response to the conversion prompt.

7. The response output system according to claim 1,
wherein the controller is configured to perform, as the conversion processing of the question phrase, processing for generating a summarization prompt requesting summarization of the question phrase, and acquiring, as the question phrase after the conversion processing, a summary of the question phrase created by the large language model in response to the summarization prompt.

8. The response output system according to claim 1,
wherein the controller is configured to perform, as the conversion processing of the question phrase, processing for requesting the user to revise the question phrase.

9. The response output system according to claim 3, further comprising:
an audio input unit configured to receive the question phrase as audio input; and
an operation input unit configured to receive the question phrase as text input,
wherein, when the question phrase input by the user from the audio input unit includes dialectal expressions as the specific expressions, the controller is configured to perform, as the conversion processing of the question phrase, processing for requesting the user to input the question phrase from the operation input unit.

10. The response output system according to claim 1,
wherein, after execution of the conversion processing of the question phrase, the controller is configured send an inquiry to the user as to whether the question phrase after the conversion processing matches the user's intent, and
wherein, when a response indicating that the question phrase after the conversion processing matches the user's intent is received from the user, the controller is configured to generate the response prompt based on the question phrase after the conversion processing.

11. The response output system according to claim 19,
wherein, when a response indicating that the question phrase after the conversion processing does not match the user's intent is received from the user in response to the inquiry, the controller is further configured to perform processing for requesting the user to revise the question phrase.

12. The response output system according to claim 1,
wherein the controller is configured to perform, as the conversion processing of the question phrase: first translation processing for translating the question phrase input by the user in a first language into a second language different from the first language; and second translation processing for translating the question phrase after the first translation processing from the second language into the first language.

13. The response output system according to claim 12,
wherein the controller is configured to send an inquiry to the user as to whether the question phrase after the second translation processing matches the user's intent, and
wherein, when a response indicating that the question phrase after the conversion processing matches the user's intent is received from the user, the controller is configured to generate the response prompt based on the question phrase after the second translation processing.

14. The response output system according to claim 13,
wherein, when a response indicating that the question phrase after the second translation processing does not match the user's intent is received in response to the inquiry, the controller is further configured to perform processing for requesting the user to revise the question phrase.
